# EUROPEAN PATENT SPECIFICATION

(11) **EP 3 130 086 B1**
(45) Date of publication and mention of the grant of the patent: **09.06.2021**
(21) Application number: 15777235.1
(22) Date of filing: 07.04.2015
(51) Int. Cl.: H04B 7/06, H04B 17/24, H04B 7/0456, H04L 1/00

(54) **METHOD AND APPARATUS FOR REPORTING CHANNEL STATE INFORMATION IN WIRELESS COMMUNICATION SYSTEMS**
VERFAHREN UND VORRICHTUNG ZUR BERICHTERSTATTUNG VON KANALSTATUSINFORMATIONEN IN DRAHTLOSKOMMUNIKATIONSSYSTEMEN
PROCÉDÉ ET APPAREIL POUR RAPPORTER DES INFORMATIONS D'ÉTAT DE CANAL DANS DES SYSTÈMES DE COMMUNICATION SANS FIL

(30) Priority: 07.04.2014 US 201461976183 P; 21.04.2014 US 201461982276 P; 13.01.2015 US 201514596003
(43) Date of publication of application: 15.02.2017
(73) Proprietor: Samsung Electronics Co., Ltd., Gyeonggi-do 443-742 (KR)
(72) Inventor: NAM, Young-Han, Plano, Texas 75025 (US); RAHMAN, Md Saifur, Richardson, Texas 75081 (US)
(74) Representative: Nederlandsch Octrooibureau
(86) International application number: PCT/KR2015/003471
(87) International publication number: WO 2015/156578

(56) References cited:
- US-A1- 2013 258 964
- US-A1- 2013 272 151
- US-A1- 2013 308 714
- US-A1- 2014 016 549
- US-A1- 2014 079 100
- US-A1- 2014 079 100

## Description

### TECHNICAL FIELD

The present disclosure relates generally to wireless communication systems with multiple antenna elements, and more specifically to channel status information (CSI) feedback for use in a system with multiple active antenna elements arranged in a two-dimensional panel.

### BACKGROUND ART

In full-dimension multiple input multiple output (MIMO) wireless communications systems, the user equipment needs to feedback not only a precoding matrix indicator for the azimuth domain (also called the horizontal domain) but also a precoding matrix indicator for the elevation domain (also called the vertical domain).

US2014/0079100A1 discloses a method and apparatus for transmitting and receiving CSI for use in a wireless communication system using a plurality of antennas. The CSI transmission method of a terminal includes receiving a first CS1-RS and a second CSI-RS, transmitting a CSI indicator indicating one of the first and second CSI-RS corresponding to CSI to be transmitted, and transmitting the CSI generated based on the CSI indicator, until transmission of a new CSI indicator.

### DISCLOSURE OF INVENTION

### SOLUTION TO PROBLEM

The solution is according to the independent claims. This document may include embodiments and examples that are not claimed, which serve the purpose of understanding the invention, which is defined specifically in the embodiments related to page 64 line 18 to page 68.

A first aspect of this disclosure provides user equipment for wireless communication with at least one base station. The user equipment includes a transceiver operable to communicate with the at least one base station. The processing circuitry is configured to control the transceiver to receive a first set of channel state reference signals (CSI-RS) according to a first channel state information (CSI) process configuration. The processing circuitry is also configured to control the transceiver to receive a second set of CSI-RS according to a second CSI process configuration The processing circuitry is also configured to control the transceiver to transmit a first physical uplink control channel (PUCCH) comprising a first rank indicator (RI) on a RI reporting subframe derived according to the first CSI process configuration, wherein the first RI is derived using recent channel estimates The processing circuitry is also configured to control the transceiver to transmit a second PUCCH comprising a channel quality indicator (CQI) and a first precoding matrix indicator (PMI) on a CQI/PMI reporting subframe derived according to the first CSI process configuration, wherein the CQI and the first PMI are derived using (i) the recent channel estimates, (ii) recent interference estimates, (iii) a second RI, and (iv) at least one of a third RI and a second PMI. The second RI is a RI reported most recently according to the first CSI process configuration prior to transmitting the second PUCCH. The third RI is a RI reported most recently according to the second CSI process configuration prior to transmitting the second PUCCH. The second PMI is a PMI reported most recently according to the second CSI process configuration prior to transmitting the second PUCCH. The recent channel estimates are estimated with the first and the second set of CSI-RS. The recent interference estimates are derived with a CSI interference-measurement (CSI-IM) configured according to the first CSI process configuration.

A second aspect of this disclosure provides a base station for wireless communication with at least one user equipment. The base station includes a transceiver operable to communicate with the at least one base station. The processing circuitry is configured to control the transceiver to transmit a first set of channel state reference signals (CSI-RS) according to a first channel state information (CSI) process configuration. The processing circuitry is also configured to control the transceiver to transmit a second set of CSI-RS according to a second CSI process configuration The processing circuitry is also configured to control the transceiver to receive a first physical uplink control channel (PUCCH) comprising a first rank indicator (RI) on a RI reporting subframe derived according to the first CSI process configuration, wherein the first RI is derived using recent channel estimates The processing circuitry is also configured to control the transceiver to receive a second PUCCH comprising a channel quality indicator (CQI) and a first precoding matrix indicator (PMI) on a CQI/PMI reporting subframe derived according to the first CSI process configuration, wherein the CQI and the first PMI are derived using (i) the recent channel estimates, (ii) recent interference estimates, (iii) a second RI, and (iv) at least one of a third RI and a second PMI. The second RI is a RI reported most recently according to the first CSI process configuration prior to transmitting the second PUCCH. The third RI is a RI reported most recently according to the second CSI process configuration prior to transmitting the second PUCCH. The second PMI is a PMI reported most recently according to the second CSI process configuration prior to transmitting the second PUCCH. The recent channel estimates are estimated with the first and the second set of CSI-RS. The recent interference estimates are derived with a CSI interference-measurement (CSI-IM) configured according to the first CSI process configuration.

A third aspect of this disclosure provides a method for operating a user equipent. The method includes receiving a first set of channel state reference signals (CSI-RS) according to a first channel state information (CSI) process configuration; receiving a second set of CSI-RS according to a second CSI process configuration; transmitting a first physical uplink control channel (PUCCH) comprising a first rank indicator (RI) on a RI reporting subframe derived according to the first CSI process configuration, wherein the first RI is derived using recent channel estimates; and transmitting a second PUCCH comprising a channel quality indicator (CQI) and a first precoding matrix indicator (PMI) on a CQI/PMI reporting subframe derived according to the first CSI process configuration, wherein the CQI and the first PMI are derived using (i) the recent channel estimates, (ii) recent interference estimates, (iii) a second RI, and (iv) at least one of a third RI and a second PMI. The second RI is a RI reported most recently according to the first CSI process configuration prior to transmitting the second PUCCH. The third RI is a RI reported most recently according to the second CSI process configuration prior to transmitting the second PUCCH. The second PMI is a PMI reported most recently according to the second CSI process configuration prior to transmitting the second PUCCH. The recent channel estimates are estimated with the first and the second set of CSI-RS. The recent interference estimates are derived with a CSI interference-measurement (CSI-IM) configured according to the first CSI process configuration.A fourth aspect of this disclosure provides a method for operating a base station. the method includes transmitting a first set of channel state reference signals (CSI-RS) according to a first channel state information (CSI) process configuration; transmitting a second set of CSI-RS according to a second CSI process configuration; receiving a first physical uplink control channel (PUCCH) comprising a first rank indicator (RI) on a RI reporting subframe derived according to the first CSI process configuration, wherein the first RI is derived using recent channel estimates; and receiving a second PUCCH comprising a channel quality indicator (CQI) and a first precoding matrix indicator (PMI) on a CQI/PMI reporting subframe derived according to the first CSI process configuration, wherein the CQI and the first PMI are derived using (i) the recent channel estimates, (ii) recent interference estimates, (iii) a second RI, and (iv) at least one of a third RI and a second PMI. The second RI is a RI reported most recently according to the first CSI process configuration prior to transmitting the second PUCCH. The third RI is a RI reported most recently according to the second CSI process configuration prior to transmitting the second PUCCH. The second PMI is a PMI reported most recently according to the second CSI process configuration prior to transmitting the second PUCCH. The recent channel estimates are estimated with the first and the second set of CSI-RS. The recent interference estimates are derived with a CSI interference-measurement (CSI-IM) configured according to the first CSI process configuration. Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF DRAWINGS

For a more complete understanding of the present disclosure and its advantages, reference is now made to the following description taken in conjunction with the accompanying drawings, in which like reference numerals represent like parts:
FIGURE 1 illustrates an example wireless network according to this disclosure;
FIGURE 2 illustrates an example eNB according to this disclosure;
FIGURE 3 illustrates an example UE according to this disclosure;
FIGURE 4 illustrates a 2D logical antenna port array, comprising *N*_{col}=4 columns of cross-polarized (x-pol) antenna array, wherein each column of x-pol array comprises *N*_{row}=2 pairs of x-pol antennas placed on a substantially vertical line;
FIGURE 5A illustrates logical port to antenna port mapping that may be employed within the wireless communication system of FIGURE 1 according to some embodiments of the current disclosure;
FIGURE 5B illustrates a CSI configuration group n according to some embodiments of the current disclosure.
FIGURE 6 illustrates joint CQI reporting across H and V periodic CSI processes in accordance with an embodiment of this disclosure;
FIGURE 7 illustrates joint CQI reporting across H and V periodic CSI processes in accordance with an embodiment of this disclosure;
FIGURE 8 illustrates joint CQI reporting across H and V periodic CSI processes in accordance with an embodiment of this disclosure;
FIGURE 9 illustrates joint CQI reporting on J periodic CSI process in accordance with an embodiment of this disclosure;
FIGURE 10 illustrates joint CQI reporting on J periodic CSI process in accordance with an embodiment of this disclosure;
FIGURE 11 illustrates joint CQI reporting on J periodic CSI process in accordance with an embodiment of this disclosure;
FIGURES 12A-12D illustrate PMI/CQI bit sequence constructions for PUSCH reporting in accordance with an embodiment of this disclosure;
FIGURE 13 illustrates a determination of H-RI and V-RI in accordance with an embodiment of this disclosure;
FIGURE 14 illustrates a determination of H-RI and V-RI in accordance with an embodiment of this disclosure;
FIGURE 15 illustrates a determination of H-RI and V-RI in accordance with an embodiment of this disclosure;
FIGURE 16 illustrates a determination of H-RI and V-RI in accordance with an embodiment of this disclosure;
FIGURE 17 illustrates PUCCH feedback mode 1-1 submode 1 in accordance with an embodiment of this disclosure;
FIGURE 18 illustrates PUCCH feedback mode 1-1 submode 1 in accordance with an embodiment of this disclosure;
FIGURE 19 illustrates PUCCH feedback mode 1-1 submode 1 in accordance with an embodiment of this disclosure;
FIGURE 20 illustrates PUCCH feedback mode 1-1 submode 1 in accordance with an embodiment of this disclosure;
FIGURE 21 illustrates PUCCH feedback mode 1-1 submode 1 in accordance with an embodiment of this disclosure;
FIGURE 22 illustrates PUCCH feedback mode 1-1 submode 1 in accordance with an embodiment of this disclosure;
FIGURE 23 illustrates PUCCH feedback mode 1-1 submode 2 in accordance with an embodiment of this disclosure;
FIGURE 24 illustrates PUCCH feedback mode 1-1 submode 2 in accordance with an embodiment of this disclosure;
FIGURE 25 illustrates PUCCH feedback mode 1-1 submode 2 in accordance with an embodiment of this disclosure;
FIGURE 26 illustrates PUCCH feedback mode 1-1 submode 3 in accordance with an embodiment of this disclosure;
FIGURE 27 illustrates PUCCH feedback mode 1-1 submode 2 in accordance with an embodiment of this disclosure;
FIGURE 28 illustrates PUCCH feedback mode 1-1 submode 2 in accordance with an embodiment of this disclosure;
FIGURE 29 illustrates H-RI and J-RI reporting on PUCCH for H-CSI and J-CSI processes in accordance with an embodiment of this disclosure;
FIGURE 30 illustrates H-RI and V-RI reporting on PUCCH for H-CSI and V-CSI processes in accordance with an embodiment of this disclosure;
FIGURE 31 illustrates H-RI and J-RI reporting on PUCCH for H-CSI and J-CSI processes in accordance with an embodiment of this disclosure;
FIGURE 32 illustrates H-RI and V-RI reporting on PUCCH for H-CSI and V-CSI processes in accordance with an embodiment of this disclosure;
FIGURE 33 illustrates PUCCH feedback mode 1-1 submode 1 in accordance with an embodiment of this disclosure;
FIGURE 34 illustrates joint CQI reporting for PUCCH feedback mode 1-1 in accordance with an embodiment of this disclosure;
FIGURE 35 illustrates CSI reporting with PUCCH feedback mode 1-1 submode x in accordance with an embodiment of this disclosure;
FIGURE 36 illustrates CSI reporting with PUCCH feedback mode 1-1 submode y in accordance with an embodiment of this disclosure;
FIGURE 37 illustrates CSI reporting with PUCCH feedback mode 1-1 submode x in accordance with an embodiment of this disclosure; and
FIGURE 38 illustrates CSI reporting with PUCCH feedback mode 1-1 submode y in accordance with an embodiment of this disclosure.

### BEST MODE FOR CARRYING OUT THE INVENTION

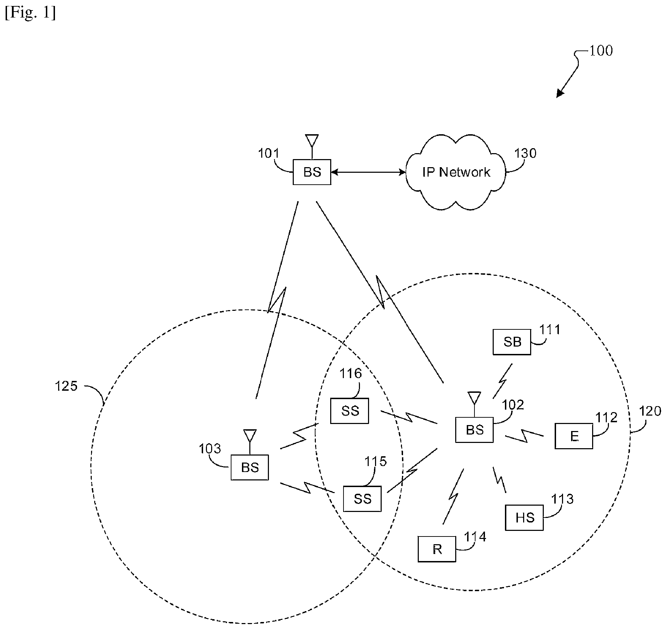

FIGURES 1 through 38, discussed below, and the various embodiments used to describe the principles of the present disclosure in this patent document are by way of illustration only and should not be construed in any way to limit the scope of the disclosure. Those skilled in the art will understand that the principles of this disclosure may be implemented in any suitably arranged device or system.

The following documents disclose background art:
[REF1]: 3GPP TS36.211;
[REF2]: 3GPP TS36.212; and [REF3]: 3GPP TS36.213.

### List of acronyms:

- MIMO: multiple-input-multiple-output
- SU-MIMO: single-user MIMO
- MU-MIMO: multi-user MIMO
- 3GPP: 3rd Generation Partnership Project
- LTE: long-term evolution
- UE: user equipment
- eNB: eNodeB
- (P)RB: (physical) resource block
- OCC: orthogonal cover code
- DMRS: demodulation reference signal(s)
- UE-RS: UE-specific reference signal(s)
- CSI-RS: channel state information reference signals
- SCID: scrambling identity
- MCS: modulation and coding scheme
- RE: resource element
- CQI: channel quality information
- PMI: precoding matrix indicator
- RI: rank indicator
- MU-CQI: multi-user CQI
- CSI: channel state information
- CSI-IM: CSI interference measurement
- CoMP: coordinated multi-point
- NZP: non-zero power
- DCI: downlink control information
- DL: downlink
- UL: uplink
- PDSCH: physical downlink shared channel
- PDCCH: physical downlink control channel
- PUSCH: physical uplink shared channel
- PUCCH: physical uplink control channel
- CDM: code-division multiplexing
- RRC: radio resource control
- DM-IMR: demodulation interference measurement resource
- MU-MIMO and MU-CQI
- FD-MIMO: Full-dimension MIMO

Multi-user MIMO corresponds to a transmission scheme in which a transmitter can transmit data to two or more UEs using the same time/frequency resource by relying on spatial separation of the corresponding UE's channels.

FIGURE 1 illustrates an example wireless network 100 according to this disclosure. The embodiment of the wireless network 100 shown in FIGURE 1 is for illustration only. Other embodiments of the wireless network 100 could be used without departing from the scope of this disclosure.

As shown in FIGURE 1, the wireless network 100 includes an eNodeB (eNB) or a base station (BS) 101, an eNB 102, and an eNB 103. The eNB 101 communicates with the eNB 102 and the eNB 103. The eNB 101 also communicates with at least one Internet Protocol (IP) network 130, such as the Internet, a proprietary IP network, or other data network.

The eNB 102 provides wireless broadband access to the network 130 for a first plurality of user equipments (UEs) within a coverage area 120 of the eNB 102. The first plurality of UEs includes a UE 111, which may be located in a small business (SB); a UE 112, which may be located in an enterprise (E); a UE 113, which may be located in a WiFi hotspot (HS); a UE 114, which may be located in a first residence (R); a UE or a subscriber station (SS) 115, which may be located in a second residence (R); and a UE 116, which may be a mobile device (M) like a cell phone, a wireless laptop, a wireless PDA, or the like. The eNB 103 provides wireless broadband access to the network 130 for a second plurality of UEs within a coverage area 125 of the eNB 103. The second plurality of UEs includes the UE 115 and the UE 116. In some embodiments, one or more of the eNBs 101-103 may communicate with each other and with the UEs 111-116 using 5G, LTE, LTE-A, WiMAX, WiFi, or other wireless communication techniques.

Depending on the network type, other well-known terms may be used instead of "eNodeB" or "eNB," such as "base station" or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with eNBs, such as the coverage areas 120 and 125, may have other shapes, including irregular shapes, depending upon the configuration of the eNBs and variations in the radio environment associated with natural and man-made obstructions.

Although FIGURE 1 illustrates one example of a wireless network 100, various changes may be made to FIGURE 1. For example, the wireless network 100 could include any number of eNBs and any number of UEs in any suitable arrangement. Also, the eNB 101 could communicate directly with any number of UEs and provide those UEs with wireless broadband access to the network 130. Similarly, each eNB 102-103 could communicate directly with the network 130 and provide UEs with direct wireless broadband access to the network 130. Further, the eNB 101, 102, and/or 103 could provide access to other or additional external networks, such as external telephone networks or other types of data networks.

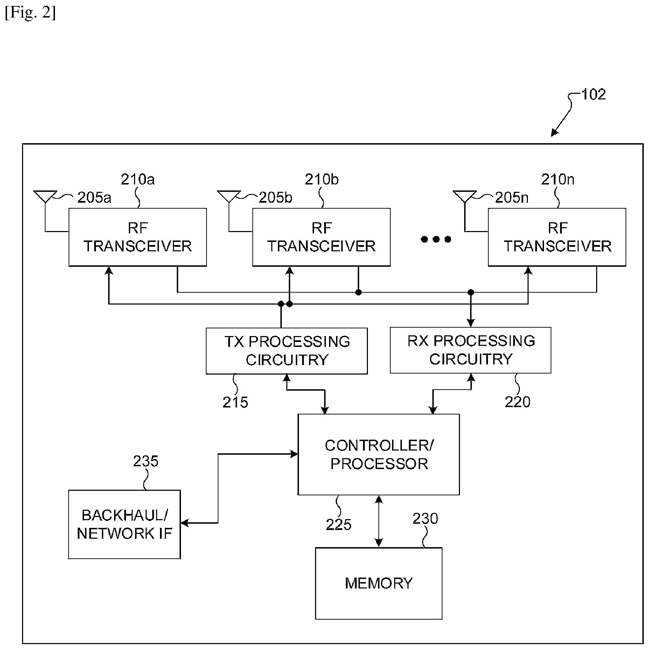

FIGURE 2 illustrates an example eNB 102 according to this disclosure. The embodiment of the eNB 102 illustrated in FIGURE 2 is for illustration only, and the eNBs 101 and 103 of FIGURE 1 could have the same or similar configuration. However, eNBs come in a wide variety of configurations, and FIGURE 2 does not limit the scope of this disclosure to any particular implementation of an eNB.

As shown in FIGURE 2, the eNB 102 includes multiple antennas 205a-205n, multiple RF transceivers 210a-210n, transmit (TX) processing circuitry 215, and receive (RX) processing circuitry 220. The eNB 102 also includes a controller/processor 225, a memory 230, and a backhaul or network interface 235.

The RF transceivers 210a-210n receive, from the antennas 205a-205n, incoming RF signals, such as signals transmitted by UEs in the network 100. The RF transceivers 210a-210n down-convert the incoming RF signals to generate IF or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n.

The controller/processor 225 can include one or more processors or other processing devices that control the overall operation of the eNB 102. For example, the controller/ processor 225 could control the reception of forward channel signals and the transmission of reverse channel signals by the RF transceivers 210a-210n, the RX processing circuitry 220, and the TX processing circuitry 215 in accordance with well-known principles. The controller/ processor 225 could support additional functions as well, such as more advanced wireless communication functions. For instance, the controller/processor 225 could support beam forming or directional routing operations in which outgoing signals from multiple antennas 205a-205n are weighted differently to effectively steer the outgoing signals in a desired direction. Any of a wide variety of other functions could be supported in the eNB 102 by the controller/processor 225. In some embodiments, the controller/processor 225 includes at least one microprocessor or microcontroller.

The controller/processor 225 is also capable of executing programs and other processes resident in the memory 230, such as a basic OS. The controller/processor 225 can move data into or out of the memory 230 as required by an executing process.

The controller/processor 225 is also coupled to the backhaul or network interface 235. The backhaul or network interface 235 allows the eNB 102 to communicate with other devices or systems over a backhaul connection or over a network. The interface 235 could support communications over any suitable wired or wireless connection(s). For example, when the eNB 102 is implemented as part of a cellular communication system (such as one supporting 5G, LTE, or LTE-A), the interface 235 could allow the eNB 102 to communicate with other eNBs over a wired or wireless backhaul connection. When the eNB 102 is implemented as an access point, the interface 235 could allow the eNB 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a Flash memory or other ROM.

Although FIGURE 2 illustrates one example of eNB 102, various changes may be made to FIGURE 2. For example, the eNB 102 could include any number of each component shown in FIGURE 2. As a particular example, an access point could include a number of interfaces 235, and the controller/processor 225 could support routing functions to route data between different network addresses. As another particular example, while shown as including a single instance of TX processing circuitry 215 and a single instance of RX processing circuitry 220, the eNB 102 could include multiple instances of each (such as one per RF transceiver). Also, various components in FIGURE 2 could be combined, further subdivided, or omitted and additional components could be added according to particular needs.

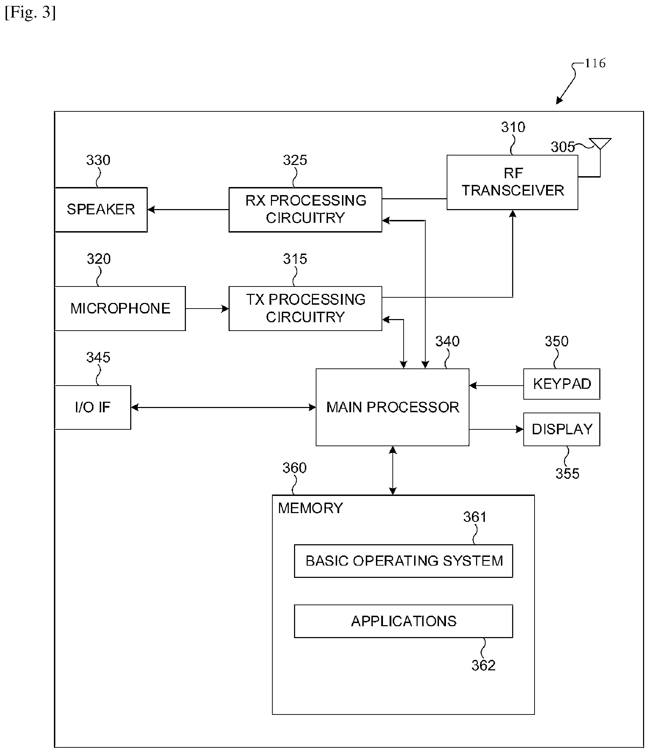

FIGURE 3 illustrates an example UE 116 according to this disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes an antenna 305, a radio frequency (RF) transceiver 310, transmit (TX) processing circuitry 315, a microphone 320, and receive (RX) processing circuitry 325. The UE 116 also includes a speaker 330, a main processor 340, an input/output (I/O) interface (IF) 345, a keypad 350, a display 355, and a memory 360. The memory 360 includes a basic operating system (OS) program 361 and one or more applications 362.

The RF transceiver 310 receives, from the antenna 305, an incoming RF signal transmitted by an eNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the main processor 340 for further processing (such as for web browsing data).

The TX processing circuitry 315 receives analog or digital voice data from the microphone 320 or other outgoing baseband data (such as web data, e-mail, or interactive video game data) from the main processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The main processor 340 can include one or more processors or other processing devices and execute the basic OS program 361 stored in the memory 360 in order to control the overall operation of the UE 116. For example, the main processor 340 could control the reception of forward channel signals and the transmission of reverse channel signals by the RF transceiver 310, the RX processing circuitry 325, and the TX processing circuitry 315 in accordance with well-known principles. In some embodiments, the main processor 340 includes at least one microprocessor or microcontroller.

The main processor 340 is also capable of executing other processes and programs resident in the memory 360. The main processor 340 can move data into or out of the memory 360 as required by an executing process. In some embodiments, the main processor 340 is configured to execute the applications 362 based on the OS program 361 or in response to signals received from eNBs or an operator. The main processor 340 is also coupled to the I/O interface 345, which provides the UE 116 with the ability to connect to other devices such as laptop computers and handheld computers. The I/O interface 345 is the communication path between these accessories and the main processor 340.

The main processor 340 is also coupled to the keypad 350 and the display unit 355. The operator of the UE 116 can use the keypad 350 to enter data into the UE 116. The display 355 may be a liquid crystal display or other display capable of rendering text and/or at least limited graphics, such as from web sites.

The memory 360 is coupled to the main processor 340. Part of the memory 360 could include a random access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the main processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

### Periodic and Aperiodic channel state information reporting for advanced wireless communication systems:

### CSI processes and CSI-IM:

For a UE in transmission mode 10 (also known as the CoMP (coordinated multi-point) transmission mode in 3GPP LTE), the UE can derive the interference measurements for computing the CQI value reported in uplink subframe *n* and corresponding to a CSI process, based on only the zero power CSI-RS within the configured channel state information interference measurement (CSI-IM) resource associated with the CSI process. If the UE in transmission mode 10 is configured by higher layers for CSI subframe sets *C*_{CSI,0} and *C*_{CSI,1} for the CSI process, the configured CSI-IM resource within the subframe subset belonging to the CSI reference resource is used to derive the interference measurement.

By configuring a UE with multiple CSI processes, eNB can utilize multiple CSI derived with various interference conditions for the scheduling of the UE, with implementing CoMP dynamic point selection (DPS) and dynamic point blanking (DPB).

CSI-IM has been introduced for 3GPP LTE Rel-11 CoMP. For a serving cell and UE configured in transmission mode 10, the UE can be configured with one or more CSI-IM resource configuration(s). The following parameters are configured via higher layer signaling for each CSI-IM resource configuration:
- Zero-power CSI RS Configuration; and
- Zero-power CSI RS subframe configuration *I*_{CSI-RS}.

A UE in transmission mode 10 can be configured with one or more CSI processes per serving cell by higher layers. Each CSI process is associated with a non-zero power (NZP) CSI-RS resource and a CSI-interference measurement (CSI-IM) resource. A CSI reported by the UE corresponds to a CSI process configured by higher layers. Each CSI process can be configured with or without PMI/RI reporting by higher layer signaling.

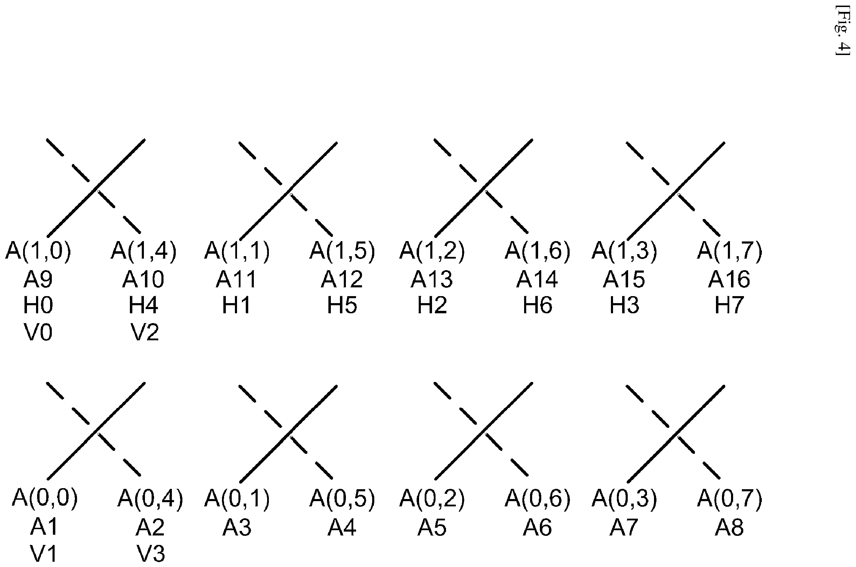

FIGURE 4 illustrates a 2D logical antenna port array, comprising *N*_{col}=4 columns of cross-polarized (x-pol) antenna array, wherein each column of x-pol array comprises *N*_{row}=2 pairs of x-pol antennas placed on a substantially vertical line. The embodiment of the array illustrated in FIGURE 4 is for illustration only. However, arrays come in a wide variety of configurations, and FIGURE 4 does not limit the scope of this disclosure to any particular implementation of an array. Although FIGURE 4 has specific number of rows and columns, the embodiments associated with FIGURE 4 can be used for any arbitrary number of rows and columns.

In some embodiments, the sixteen antenna ports in FIGURE 4 are indexed as A(0,0), A(0,1), ... A(0,7), A(1,0), A(1,1), ..., A(1,7), wherein A(0,0), A(0,1), ... A(0,7) are for eight antenna ports in a first row, and A(1,0), A(1,1), ..., A(1,7) are for eight antenna ports in a second row. Correspondingly, a UE can be configured with two sets of CSI-RS: a first set comprising A(0,0), A(0,1), ... A(0,7); and a second set comprising A(1,0), A(1,1), ..., A(1,7).

In some embodiments, the sixteen antenna ports in FIGURE 4 are indexed with A1, A2, ...., A16, wherein positive integers are sequentially assigned starting from 1 along the elements in a first row, and then continuously increase along the elements in a second row. Correspondingly, a UE can be configured with one set of CSI-RS A1, A2, ...., A16.

In some embodiments, out of the sixteen antenna ports in FIGURE 4, eight antenna ports in a first row are indexed with H0, H1, ...., H7, the assigned numbers wherein non-negative integers are sequentially assigned starting from 0 along the elements with a first polarization and then along the elements with a second polarization in a first row.

In some embodiments, out of the sixteen antenna ports in FIGURE 4, two antenna ports with a same polarization in a first column are indexed with V0, V1.

In some embodiments, out of the 16 antenna ports in FIGURE 4, four antenna ports in a first column are indexed with V0, V1, V2, V3, wherein V0 and V1 are with a first polarization and V2 and V3 are with a second polarization.

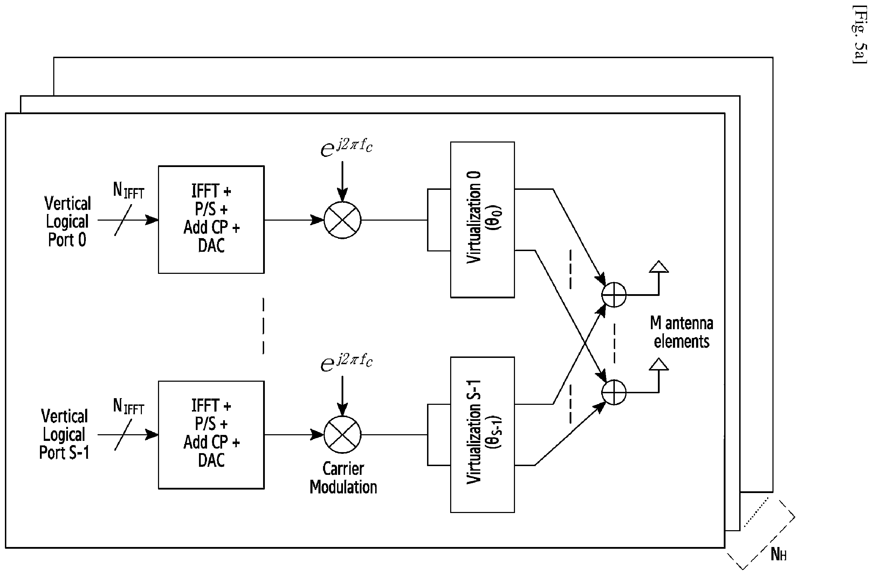

FIGURE 5A illustrates logical port to antenna port mapping that may be employed within the wireless communication system of FIGURE 1 according to some embodiments of the current disclosure. The embodiment of the port mapping illustrated in FIGURE 5A is for illustration only. However, port mappings come in a wide variety of configurations, and FIGURE 5A does not limit the scope of this disclosure to any particular implementation of a port mapping.

In FIGURE 5A, Tx signals on each logical port are fed into an antenna virtualization matrix (e.g., of a size *M*x1), and output signals of which are fed into a set of *M* physical antenna ports. In some embodiments, *M* corresponds to a total number of antenna elements on a substantially vertical axis. In some embodiments, *M* corresponds to a ratio of a total number of antenna elements to *S* on a substantially vertical axis, wherein *M* and S are chosen to be a positive integer.

### H and V CSI feedback for FD-MIMO:

One or more embodiments provide configuring a UE with horizontal ("H") and vertical ("V") CSI feedback for the UE's CSI feedback in FD-MIMO systems. When the UE is configured with this CSI feedback, the UE can estimate and report H-CSI comprising H-PMI, H-RI and H-CQI for the azimuth domain channels, and V-CSI comprising V-PMI, V-RI and V-CQI for the elevation domain channels. The UE can be further configured to derive and report joint CQI, wherein the joint CQI is calculated with a composite PMI precoding matrix, which is derived with Kroneker product of two precoding matrices corresponding to H-PMI and V-PMI.

For H and V CSI reporting, the UE can be configured with two CSI configuration groups (or alternatively CSI processes) for H and V channels, denoted as H and V CSI processes, wherein a CSI configuration group comprises CSI group ID, a number of CSI-RS configurations, periodic CSI reporting configuration, and aperiodic CSI reporting configuration, wherein a CSI-RS configuration further comprises antennaPortCount, resourceConfig and subframeConfig.

In some embodiments, the number of CSI-RS configurations comprising a CSI configuration group is one, associated with the legacy CSI-RS.

In some embodiments, the number of CSI-RS configurations comprising a CSI configuration group is two: one associated with vertical CSI-RS and the other associated with horizontal CSI-RS.

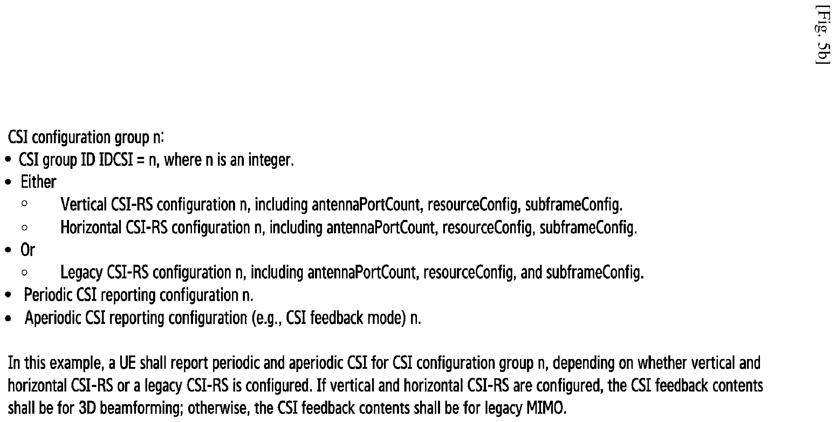

FIGURE 5B illustrates a CSI configuration group n according to some embodiments of the current disclosure. The embodiment of the CSI configuration illustrated in FIGURE 5B is for illustration only. However, CSI configurations come in a wide variety of configurations, and FIGURE 5B does not limit the scope of this disclosure to any particular implementation of a CSI configuration. In FIGURE 5B, a UE shall report periodic and aperiodic CSI for CSI configuration group n, depending on whether vertical and horizontal CSI-RS or a legacy CSI-RS is configured. If vertical and horizontal CSI-RS are configured, the CSI feedback contents shall be for 3D beamforming; otherwise, the CSI feedback contents shall be for legacy MIMO.

In this situation, a UE shall differently report periodic and aperiodic CSI for CSI configuration group, depending on whether vertical and horizontal CSI-RS or a legacy CSI-RS is configured. If vertical and horizontal CSI-RS are configured, the CSI feedback contents shall be for 3D beamforming; otherwise, the CSI feedback contents shall be for legacy MIMO.

When UEs have only two Rx antennas, they can receive up to two streams (or rank-2 transmission) from their serving base station. One issue with current approaches of CSI feedback is associated with the situation where a UE report V-RI = H-RI = 2. A straightforward interpretation of this event at the eNB would be to assume that the UE is able to achieve rank-4, by applying Kronecker product for the columns of the two rank-2 precoding matrices (or *Khatri-Rao* product) represented by the two PMI, H-PMI and V-PMI. However, as the UE cannot achieve rank-4, therefore, this is a wrong interpretation.

For these two Rx antennas, it is necessary to introduce new CSI feedback protocol to handle the situation of V-RI = H-RI = 2. This will benefit aligning the understanding between the UEs and their serving eNBs, and can also improve system and link performance.

In some embodiments, a UE supports up to rank-2 DL reception. The UE is further configured to estimate H-RI, H-PMI, H-CQI; and V-RI, V-PMI, V-CQI. The UE is further configured to derive at least one joint CQI as a function of H-RI, H-PMI, H-CQI, V-RI, V-PMI, V-CQI and the channel estimates estimated with CSI-RS.

In some embodiments, an eNB comprises *N*_{T} *= N*_{V} x *N*_{H} antenna ports, wherein *N*_{H} (*N*_{V}) antenna ports are associated with antenna elements placed on substantially horizontal (vertical) line.

In some embodiments, the Kronecker product of H and V precoding vectors (or channel vectors) p is denoted as, for illustration purposes, either p=v⊗h=[*v*₁h *v*₂h ... *v*_{NH}h]^{t} or p=h⊗v=[*h*₁v *h*₂v ... *h*_{NH}v]^{t}, wherein v=[*v*₁ *v*₂ ... *v*_{NV}]^{t} and h=[*h*₁ *h₂* ... *h*_{NH}]^{t}. Although some embodiments are illustrated with either v⊗h or h⊗v, the designs can be applicable to any of v⊗h and h⊗v.

In some embodiments, the UE is configured with these two CSI processes (H and V CSI processes), and the UE estimates H and V channels separately. The UE receives H and V CSI-RS respectively comprising *N*_{H} and *N*_{V} antenna ports. For example, when *N*_{H} = 8 and *N*_{V} = 2, *N*_{H} and *N*_{V} antenna ports can be respectively {H0, H1, ..., H7} and {V0, V1} as illustrated in FIGURE 4. In this embodiment, the UE can estimate channels for (*N*_{H} + *N*_{V}) antenna ports, and the remaining (*N*_{T} - (*N*_{H} + *N*_{V})) channels can be derived out of the (*N*_{H} + *N*_{V}) port CSI-RS channels. To provide a full channel matrix between (*N*_{H} + *N*_{V}) Tx antenna ports and *N*_{R} Rx antenna ports, in one method, the UE applies a Kronecker product of two channel vectors separately per resource element on each Rx antenna, wherein the two channel vectors are respectively estimated with *N*_{H} port H-CSI-RS and (*N*_{V}) port V-CSI-RS. Then the UE can use the full channel matrix derived with this approach to provide a joint CQI, with selected V-PMI, H-PMI, V-RI, and H-RI.

In some embodiments, the UE is configured with *N*_{V} sets of *N*_{H} port CSI-RS and two separate periodic and aperiodic CSI reporting configurations respectively for H and V CSI reporting, per CSI process (per CSI configuration group). The UE derives H-PMI, V-PMI, H-RI, V-RI, and a joint CQI, wherein a composite precoding matrix is assumed to be used for a DL transmission in *N*_{T} *= N*_{V} x *N*_{H} antenna port channels, wherein the composite precoding matrix is constructed by a Kronecker product of H and V precoding matrices respectively corresponding to H-PMI and V-PMI based upon selected H-RI and V-RI.

In one example, the UE is configured with with *N*_{V}=2 sets of *N*_{H}=8 port CSI-RS, wherein the two sets are denoted as CSI-RS sets 1 and 2, and CSI-RS set 1 comprises APs A(0,0), A(0,1), ..., A(0,7) and CSI-RS set 2 comprises APs A(1,0), A(1,1), ..., A(1,7), as illustrated in FIGURE 4. The composite precoding vector for rank-1 transmission in this embodiment is a (*N*_{T}=16)x1 vector, wherein the *i*-th element is a channel coefficient between AP*i* and an Rx antenna at the UE, and wherein *i* ∈ {1, 2, ..., 16} and AP(0,0), AP(0, 1), ..., AP(0,7), AP(1,0), AP(1,1), ..., AP(1,7) are mapped to {AP*i*}, according to the illustration in FIGURE 4. Furthermore, H and V precoding vectors v and h are respectively a (*N*_{H} = 8) x 1 vector and an (*N*_{V}=2)x1 vector, and the composite precoding vector is obtained by: p=v⊗h. In this embodiment, the UE searches for the best pair of H and V precoding vectors whose composite precoding vector achieves the largest J-CQI according to the estimated channels out of the *N*_{V} sets of CSI-RS, and report corresponding RI (e.g., H-RI, V-RI, J-RI), H-PMI, V-PMI and CQI (e.g., J-CQI, H-CQI, V-CQI).

In some embodiments, the UE is configured to report H and V CSI according to two separate periodic and aperiodic CSI reporting configurations (e.g., based upon H and V CSI processes). The UE is configured to report one joint CQI (J-CQI) as both H and V CQI. In this embodiment, the UE reports H-RI, H-CQI, J-CQI according to a first configuration, and V-RI, V-CQI, J-CQI according to a second configuration.

In some embodiments, the UE is configured to report {H-RI, H-PMI, H-CQI} and {J-RI, V-PMI, J-CQI} according to two separate periodic and aperiodic CSI reporting configurations (e.g., based upon two CSI processes), wherein J-RI stands for joint RI.

In some embodiments, the most recently reported RI for CQI/PMI is an RI reported in the same subframe as the CQI/PMI.

In some embodiments, the UE is configured with feedback of H and V CSI according to two separate CSI reporting configurations (e.g., based upon H and V CSI processes). The UE reports a joint CQI for a composite channel matrix together with x-PMI, wherein x is either "H" or "V". The composite channel is constructed with a Kronecker product of two channel matrices corresponding to x-PMI and y-PMI, wherein y is either "H" or "V" and y ≠ x. The y-PMI used for the Kronecker product is the most recently reported y-PMI. In this embodiment, eNB can obtain a correct J-CQI if the eNB correctly decodes the most recent V-PMI/J-CQI and H-PMI/J-CQI.

When most recently reported x-RI = 2 and y-RI = 1, for x CSI process, it is proposed to report rank-2 J-CQI, which is calculated with a composite precoding matrix constructed by a Kronecker product of a rank-2 and a rank-1 precoding matrices, respectively corresponding to the most recently reported rank-2 x-PMI and rank-1 y-PMI. Regarding CQI/PMI reporting instance on y CSI process, two example methods are considered. In one example method, a rank-2 J-CQI is reported, wherein the rank-2 J CQI is calculated with a composite precoding matrix constructed by Kronecker product of a rank-2 and a rank-1 precoding matrices, respectively corresponding to the most recently reported rank-2 x-PMI and rank-1 y-PMI. In another example method, a rank-1 J-CQI is reported, wherein the rank-1 J CQI is calculated with a composite rank-1 precoding matrix constructed by $\sqrt{2}$ times a Kronecker product of a first rank-1 precoding vector and a second rank-1 precoding vector, respectively corresponding to the most-recently reported rank-1 y-PMI and a first vector of a rank-2 precoding matrix corresponding to the most recently reported rank-2 x-PMI. For example, the left most column vector of the rank-2 precoding matrix corresponding to the most recently reported rank-2 x-PMI. In this embodiment, the eNB scheduler is able to dynamically adjust the transmission rank for the UE depending upon the scheduling demand.

When the most recently reported x-RI = 2 and y-RI = 2, on CQI/PMI reporting instance on x CSI process, it is proposed to report rank-2 J-CQI, which is calculated with a composite precoding matrix constructed by Kronecker product of a first and a second rank-1 precoding vectors, each of which corresponds to a first vector of the rank-2 precoding matrix corresponding to either the most recently reported rank-2 x-PMI or rank-2 y-PMI.

In some embodiments, when the most recently reported x-RI = 2 and y-RI = 2, a joint CQI and x-PMI are reported in a subframe *n* according to CSI configuration of a x CSI process, wherein x is either "H" or "V". In some embodiments, [h1 h2] and [v1 v2] are the rank-2 precoding matrices respectively indicated by a H-PMI and a V-PMI each of which is the most recently reported corresponding rank-2 PMI, and ⊗ denotes Kronecker product. In one example, the joint CQI reported for the H-CSI process is for a rank-2 precoding matrix $\sqrt{2} \left[v1⊗h1, v1⊗h2\right]$ and the joint CQI reported for the V-CSI process is for a rank-2 precoding matrix $\sqrt{2} \left[v1⊗h1, v2⊗h1\right] .$It is noted that $\sqrt{2}$ scaling factor is needed here to make the total transmission power 1, because the transmission power of each column, e.g., v1 ⊗ h1 is ¼, not ½, which results in total power of ½ when both precoder columns are used.

There are limitations in the prior arts and some methods in this invention with regards to reporting rank-2 precoding matrices. Columnwise Kronecker product of the two rank-2 precoding matrices [**h**₁ **h**₂] and [**v**₁ **v**₂] result in: $\sqrt{2} \left[{h}_{1}⊗{v}_{1}, {h}_{1}⊗{v}_{2}, {h}_{2}⊗{v}_{1}, {h}_{2}⊗{v}_{2}\right] ,$which comprises 4 column vectors. Out of these 4 column vectors, 6 combinations of rank-2 matrices can be constructed. Among these 6 rank-2 matrices, a UE can report $\sqrt{2} \left[{h}_{1}⊗{v}_{1}, {h}_{1}⊗{v}_{2}\right] ,$ $\sqrt{2} \left[{h}_{2}⊗{v}_{1}, {h}_{2}⊗{v}_{2}\right]$when the UE also reports (H-RI, V-RI) = (1, 2); and $\sqrt{2} \left[{h}_{1}⊗{v}_{1}, {h}_{2}⊗{v}_{1}\right] ,$ $\sqrt{2} \left[{h}_{1}⊗{v}_{2}, {h}_{2}⊗{v}_{2}\right]$ when the UE also reports (H-RI, V-RI) = (2, 1); however, the UE cannot report $\sqrt{2} \left[{h}_{1}⊗{v}_{1}, {h}_{2}⊗{v}_{2}\right] ,$ $\sqrt{2} \left[{h}_{1}⊗{v}_{2}, {h}_{2}⊗{v}_{1}\right]$ relying on any existing combination of H-RI, H-PMI, H-CQI, V-RI, V-PMI and V-CQI.

One or more embodiments provide throughput performance increases with reporting of $\sqrt{2}$ $\left[h1⊗v1, h2⊗v2\right]$ and $\sqrt{2} \left[h1⊗v2, h2⊗v1\right]$ as well as the other four rank-2 matrices. In another example, a joint CQI reported for H-CSI process is for $\sqrt{2} \left[h1⊗v1, h2⊗v2\right]$ and a joint CQI reported for V-CSI process is for $\sqrt{2} \left[h1⊗v2, h2⊗v1\right] .$ In yet another example, a single joint CQI is reported for both H- and V- CSI processes, which is fixed to be either $\sqrt{2} \left[h1⊗v1, h2⊗v2\right]$ or $\sqrt{2}$ $\left[h1⊗v2, h2⊗v1\right] .$

In some embodiments, a rank-2 CQI comprises seven bits and a rank-1 CQI comprises four bits. When the UE reports the rank-2 CQI, the first four bits are for the CQI of the first CW and the remaining three bits are for the CQI for the second CW. The CQI for the second CW is differentially coded with the first CQI.

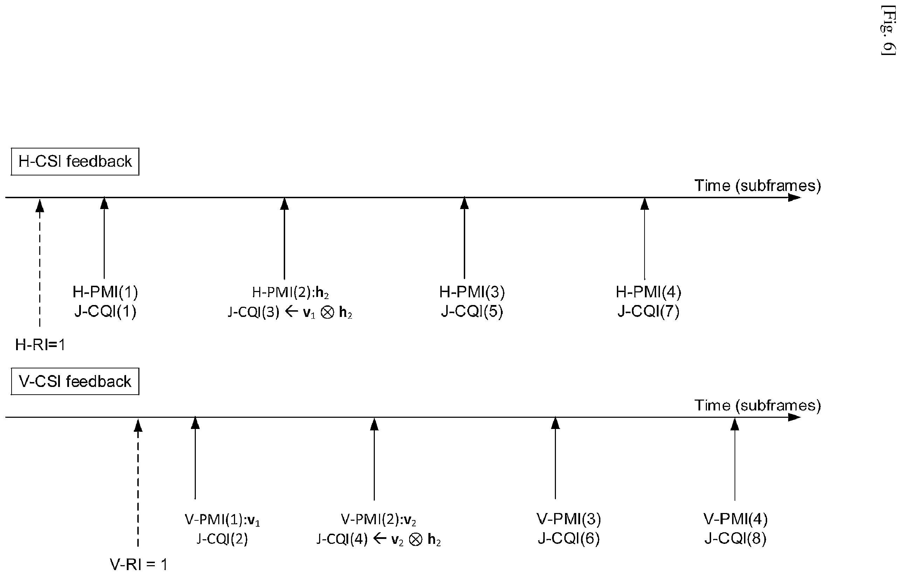

FIGURE 6 illustrates joint CQI reporting across H and V periodic CSI processes in accordance with an embodiment of this disclosure. The embodiment of the reporting illustrated in FIGURE 6 is for illustration only. However, reporting comes in a wide variety of configurations, and FIGURE 6 does not limit the scope of this disclosure to any particular implementation of a reporting.

FIGURE 6 illustrates joint CQI reporting on PUCCH according to some embodiments of the current disclosure, when the UE has reported V-RI = H-RI = 1 before PMI/CQI reporting. In the illustration, J-CQI(3) is reported together with H-PMI(2) and is calculated with a composite precoding matrix of v₁⊗h₂. The precoding vectors h₂ and v₁ respectively correspond to H-PMI(2) and V-PMI(1). The J-CQI(4) is reported together with V-PMI(2) and is calculated with a composite precoding matrix of v₂⊗h₂. The precoding vectors v₂ corresponds to V-PMI(2).

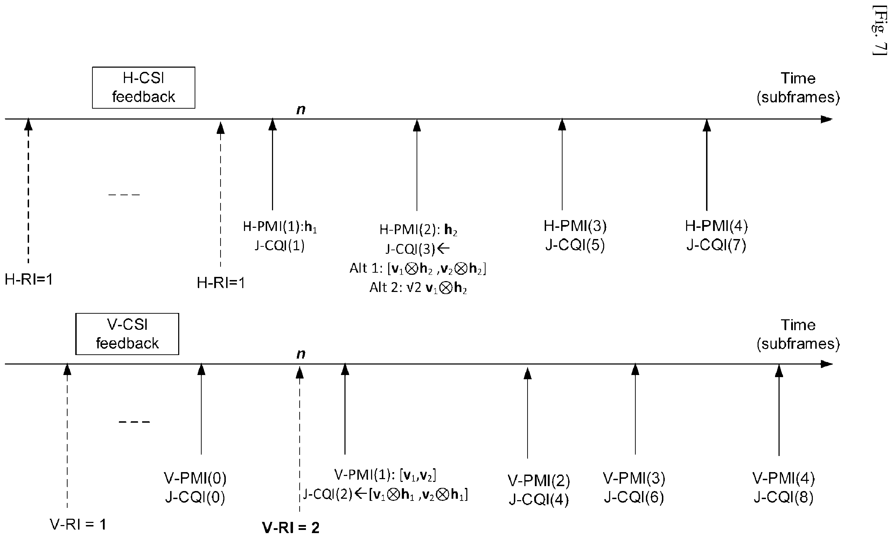

FIGURE 7 illustrates joint CQI reporting across H and V periodic CSI processes in accordance with an embodiment of this disclosure. The embodiment of the reporting illustrated in FIGURE 7 is for illustration only. However, reporting comes in a wide variety of configurations, and FIGURE 7 does not limit the scope of this disclosure to any particular implementation of a reporting.

FIGURE 7 illustrates joint CQI reporting on PUCCH according to some embodiments of the current disclosure. Earlier than subframe *n,* both H-RI = V-RI = 1; and then at subframe *n,* the UE reports V-RI = 2. Then, V-PMI(1) is interpreted as a rank-2 PMI, and J-CQI(2) is a rank-2 CQI, which is calculated with a composite rank-2 channel matrix [v₁⊗h₁, v₂⊗h₁]. In one example, J-CQI(3) is reported as a *rank-2* CQI, calculated with a composite rank-2 channel matrix [v₁⊗h₂, v₂⊗h₂]. In another alternative, J-CQI(3) is reported as a *rank-1* CQI, calculated with a composite rank-1 channel matrix $\sqrt{2} {v}_{1} ⊗ {h}_{2} .$ Here, [v₁, v₂], h₁ and h₂ respectively correspond to V-PMI(1), H-PMI(1) and H-PMI(2).

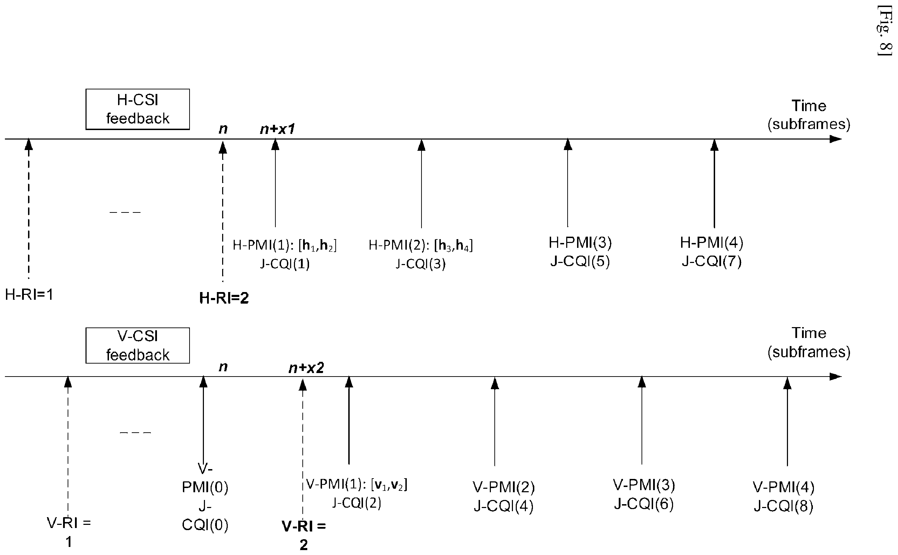

FIGURE 8 illustrates joint CQI reporting across H and V periodic CSI processes in accordance with an embodiment of this disclosure. The embodiment of the reporting illustrated in FIGURE 8 is for illustration only. However, reporting comes in a wide variety of configurations, and FIGURE 8 does not limit the scope of this disclosure to any particular implementation of a reporting.

FIGURE 8 illustrates a joint CQI reporting on a PUCCH according to some embodiments of the current disclosure. Earlier than subframe *n,* both H-RI = V-RI = 1. At subframe *n* and subframe *n*+*x2,* the UE reports H-RI = 2 and V-RI = 2. Both H-PMI(1) and V-PMI(1) are interpreted as a rank-2 PMI. J-CQI(2) and J-CQI(3) are rank-2 CQI, each of which is calculated with a composite rank-2 channel matrix.

In one embodiment, the composite rank-2 matrices for deriving a J-CQI for H and V CSI processes are those matrices that cannot be represented by combinations of (H-RI,V-RI)=(1,2) or (2,1), as illustrated in some embodiments of the current disclosure. For example, one composite matrix for deriving either J-CQI(2) or J-CQI(3) is [h₁⊗v₂, h₂⊗v₁]. The other composite matrix for deriving either J-CQI(2) or J-CQI(3) is [h₁⊗v₁, h₂⊗v₂].

In another embodiment, the composite rank-2 matrix for deriving J-CQI for x CSI processes is determined by a Kronecker product of a rank-2 and a rank-1 precoding matrices, respectively corresponding to rank-2 x-PMI and a first column of a rank-2 precoding matrix corresponding to rank-2 y-PMI.

In some embodiments, the UE is configured with H-CSI including {H-PMI,H-CQI,H-RI} and J-CSI including {J-RI, V-PMI, J-RI} according to two separate CSI reporting configurations (e.g., based upon H and J CSI processes). The UE can report a joint CQI for a composite channel matrix together with V-PMI according to configurations of the J CSI process. The composite channel is constructed with a Kronecker product of two channel matrices corresponding to most recently reported H-PMI and V-PMI. According to this embodiment, J-CQI may be reported only according to the J CSI process.

When the most recently reported J-RI = 2 and H-RI = 1, for a J CSI process, one or more embodiments may report a rank-2 J-CQI. The rank-2 J-CQI is calculated with a composite precoding matrix constructed by a Kronecker product of a rank-2 and a rank-1 precoding matrices, respectively corresponding to the most recently reported rank-1 V-PMI and rank-2 H-PMI.

When the most recently reported J-RI = 2 and J-RI = 2, for J CSI process, one or more embodiments may report a rank-2 J-CQI. The rank-2 J-CQI is calculated with a composite precoding matrix constructed by a Kronecker product of a rank-2 and a rank-1 precoding matrices, respectively corresponding to the most recently reported rank-2 H-PMI and rank-1 V-PMI.

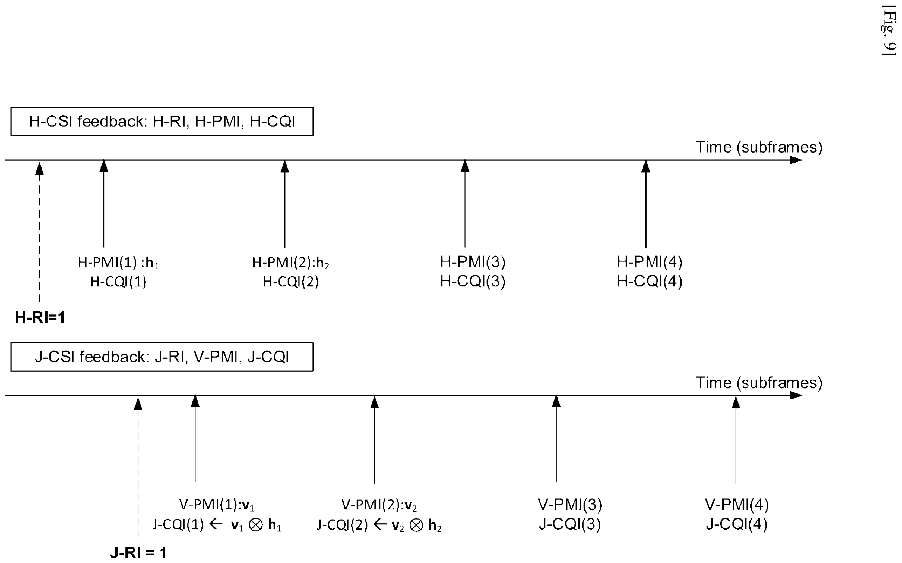

FIGURE 9 illustrates joint CQI reporting joint periodic CSI process in accordance with an embodiment of this disclosure. The embodiment of the reporting illustrated in FIGURE 9 is for illustration only. However, reporting comes in a wide variety of configurations, and FIGURE 9 does not limit the scope of this disclosure to any particular implementation of a reporting.

FIGURE 9 illustrates joint CQI reporting on PUCCH according to some embodiments of the current disclosure. When the most recently reported (H-RI, J-RI) = (1,1), on J- CQI/PMI reporting instance, the UE reports V-PMI and J-CQI. The J-CQI is derived with a composite precoding matrix constructed by a Kronecker product of two rank-1 precoding matrices, respectively corresponding to the most recently reported H-PMI and V-PMI. For example, when the most recently reported H-PMI is hi, the UE reports V-PMI, corresponding to v₁, together with a J-CQI derived with a composite precoding matrix v₁⊗h₁. When the most recently reported H-PMI is h₂, the UE reports V-PMI, corresponding to v₂, together with a J-CQI derived with a composite precoding matrix v₂⊗h₂.

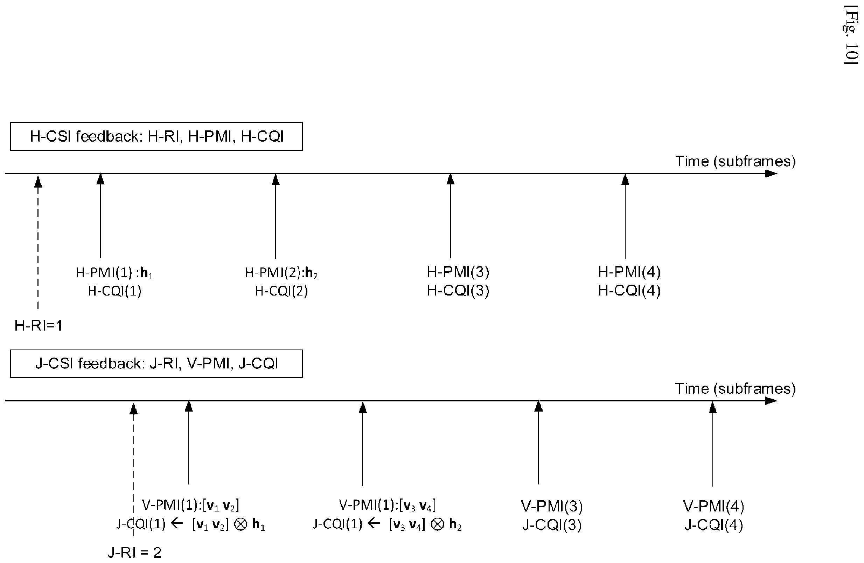

FIGURE 10 illustrates joint CQI reporting on J periodic CSI process in accordance with an embodiment of this disclosure. The embodiment of the reporting illustrated in FIGURE 10 is for illustration only. However, reporting comes in a wide variety of configurations, and FIGURE 10 does not limit the scope of this disclosure to any particular implementation of a reporting.

FIGURE 10 illustrates joint CQI reporting on PUCCH according to some embodiments of the current disclosure. When a most recently reported (H-RI, J-RI) = (1,2), on a J-CQI/PMI reporting instance, the UE reports V-PMI and J-CQI. The J-CQI is derived with a composite precoding matrix constructed by a Kronecker product of a rank-1 and a rank 2 precoding matrices, respectively corresponding to the most recently reported H-PMI and V-PMI. For example, when the most recently reported H-PMI is hi, the UE reports V-PMI, corresponding to [v₁,v₂] together with J-CQI derived with a composite precoding matrix [v₁,v₂]⊗h₁. When the most recently reported H-PMI is h₂, the UE reports V-PMI, corresponding to [v₃,v₄] together with J-CQI derived with a composite precoding matrix [v₃,v₄]⊗h₂.

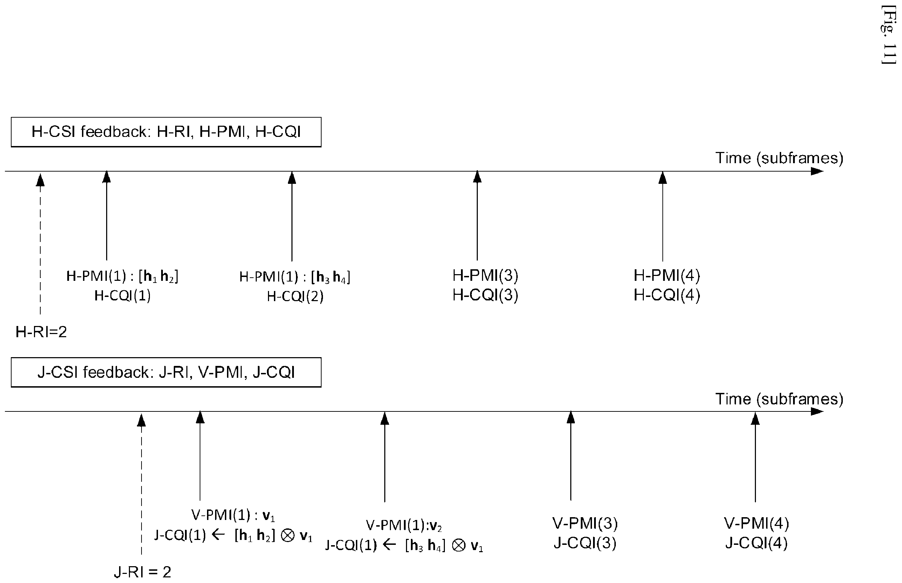

FIGURE 11 illustrates joint CQI reporting on joint periodic CSI process in accordance with an embodiment of this disclosure. The embodiment of the reporting illustrated in FIGURE 11 is for illustration only. However, reporting comes in a wide variety of configurations, and FIGURE 11 does not limit the scope of this disclosure to any particular implementation of a reporting.

FIGURE 11 illustrates joint CQI reporting on PUCCH according to some embodiments of the current disclosure. When a most recently reported (H-RI, J-RI) = (2,2), on a J-CQI/PMI reporting instance, the UE reports V-PMI and J-CQI. The J-CQI is derived with a composite precoding matrix constructed by a Kronecker product of a rank-1 and a rank 2 precoding matrices, respectively corresponding to the most recently reported V-PMI and H-PMI. For example, when the most recently reported H-PMI is [h₁,h₂], the UE reports V-PMI, corresponding to v₁, which is a rank-1 precoding matrix, together with J-CQI derived with a composite precoding matrix v₁⊗[h₁,h₂]. When the most recently reported H-PMI is [h₃,h₄], the UE reports V-PMI, corresponding to v₂, which is a rank-2 precoding matrix, together with J-CQI derived with a composite precoding matrix v₂⊗[h₃,h₄].

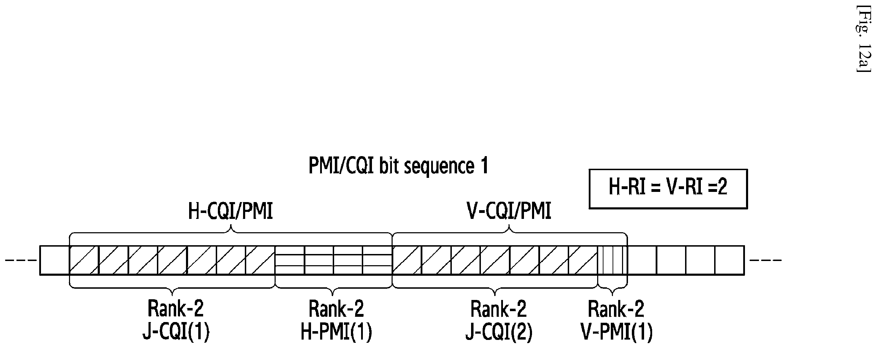

FIGURES 12A-12D illustrate PMI/CQI bit sequence constructions for PUSCH reporting in accordance with an embodiment of this disclosure. The embodiment of the sequence constructions illustrated in FIGURES 12A-12D are for illustration only. However, sequence constructions come in a wide variety of configurations, and FIGURES 12A-12D do not limit the scope of this disclosure to any particular implementation of sequence constructions.

FIGURES 12A-12D illustrate constructions of CQI/PMI bit sequences for a joint CQI reporting on a PUSCH in response to an aperiodic CSI trigger in a UL grant DCI format on PDCCH. The UE is configured with H and V aperiodic CSI reporting (or processes). The antenna port configuration is *N*_{V}=2 and *N*_{H}=4 and it is assumed that the UE is configured with wideband CQI reporting. A PMI/CQI bit sequence is constructed with concatenating bits for H-CQI/PMI and V-CQI/PMI per CSI-process or per serving cell. The bit lengths of H-CQI/PMI and V-CQI/PMI are determined based upon H-RI and V-RI reported in the same subframe. In these embodiments, [v₁, v₂] and [hi, h₂] respectively correspond to rank-2 V-PMI(1) and rank-2 H-PMI(1), and v and h respectively correspond to rank-1 V-PMI(2) and rank-1 H-PMI(2).

In FIGURE 12A, PMI/CQI bit sequence 1 is constructed when the UE reports H-RI = V-RI = 2 in the same PUSCH report. The H-CQI/PMI comprises eleven bits while V-CQI/PMI comprises eight bits. Among the eleven bits comprising H-CQI/PMI, seven bits are for rank-2 J-CQI(1), four bits are for rank-2 H-PMI(1). Among the eight bits comprising V-CQI/PMI, seven bits are for rank-2 J-CQI(2), and one bit is for rank-2 V-PMI(1). Each of J-CQI(1) and J-CQI(2) is determined by a composite rank-2 matrix, constructed according to some embodiments of this disclosure. In one example, J-CQI(1) ≠ J-CQI(2); in another example, J-CQI(1) = J-CQI(2).

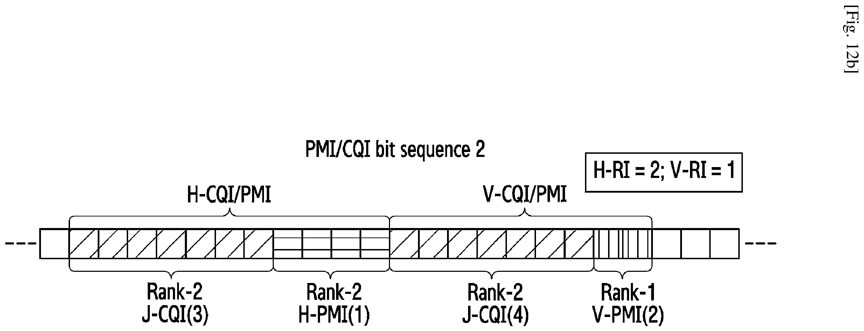

In FIGURE 12B, PMI/CQI bit sequence 2 is constructed when the UE reports H-RI = 2 and V-RI = 1 in the same PUSCH report. The H-CQI/PMI comprises eleven bits while V-CQI/PMI comprises ten bits. Among the eleven bits comprising H-CQI/PMI, seven bits are for rank-2 J-CQI(3), and 4 bits are for rank-2 H-PMI(1). Among the eleven bits comprising V-CQI/PMI, seven bits are for rank-2 J-CQI(4), and 2 bits are for rank-1 V-PMI(2). Each of J-CQI(3) and J-CQI(4) is determined by a composite rank-2 matrix, constructed according to some embodiments of this disclosure. In one example, J-CQI(3) ≠ J-CQI(4); in another example, J-CQI(3) = J-CQI(4).

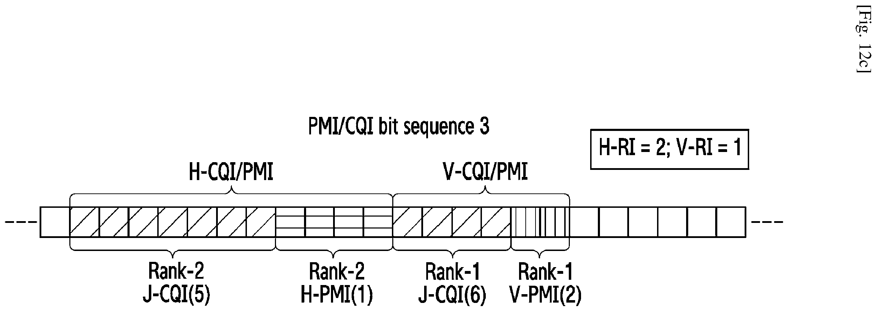

In FIGURE 12C, PMI/CQI bit sequence 3 is constructed when the UE reports H-RI = 2 and V-RI = 1 in the same PUSCH report. The H-CQI/PMI comprises eleven bits while V-CQI/PMI comprises six bits. Among the eleven bits comprising H-CQI/PMI, seven bits are for rank-2 J-CQI(3), and four bits are for rank-2 H-PMI(1). Among the six bits comprising V-CQI/PMI, four bits are for rank-1 J-CQI(5), and two bits are for rank-1 V-PMI(2). The rank-2 J-CQI(5) and the rank-1 J-CQI(6) are respectively determined by a composite rank-2 and a composite rank-1 matrices, constructed according to some embodiments of this disclosure.

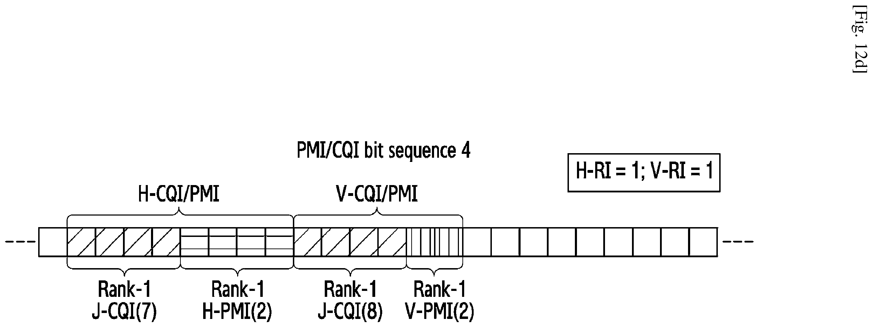

In FIGURE 12D, PMI/CQI bit sequence 4 is constructed when the UE reports H-RI = 1 and V-RI = 1 in the same PUSCH report. The H-CQI/PMI comprises eight bits while V-CQI/PMI comprises six bits. Among the eight bits comprising H-CQI/PMI, four bits are for rank-1 J-CQI(7), and four bits are for rank-1 H-PMI(2). Among the six bits comprising V-CQI/PMI, four bits are for rank-1 J-CQI(8), and two bits are for rank-1 V-PMI(2). Each of the rank-1 J-CQI(7) and the rank-1 J-CQI(8) is determined by a composite rank-1 matrix, constructed according to some embodiments of this disclosure. In one example, J-CQI(7) ≠ J-CQI(8); in another example, J-CQI(7) = J-CQI(8).

A PMI/CQI bit sequence when the UE is configured with H-CSI and J-CSI can be constructed in the same way with replacing J-CQI(1), J-CQI(3), J-CQI(5), J-CQI(7) respectively with H-CQI(1), H-CQI(2), H-CQI(3), H-CQI(4) in FIGURE 12.

In some embodiments, the UE is configured to report x-RI = 1 even if channel rank estimated by corresponding x-CSI-RS = 2, wherein x can be either "H" or "V". This way, the understanding of the CSI reports of the UE can be easily aligned between the UE and the eNB.

In these embodiments, the UE can compare a first and a second rank-2 CQI, where a first CQI, CQI₁, = {CQI_{1,1}, CQI_{1,2}} and a second CQI, CQI₂ = {CQI_{2,1}, CQI_{2,2}}, and where CQI*_{i,j}* is for *j*-th TB associated with *i*-th CQI, CQI*ᵢ*. In one example, CQI1 ≥ CQI2 if min{CQI1,1, CQI1,2} ≥ min{CQI2,1, CQI2,2}. In another example, CQI1 ≥ CQI2 if max{CQI1,1, CQI1,2} ≥ max{CQI2,1, CQI2,2}. In yet another example, CQI1 ≥ CQI2 if mean{CQI1,1, CQI1,2} ≥ mean{CQI2,1, CQI2,2}, or (CQI1,1+CQI1,2)/2 ≥ (CQI2,1+CQI2,2)/2.

In these embodiments, [v₁, v₂] and [h₁, h₂] can respectively correspond to rank-2 V-PMI and rank-2 H-PMI.

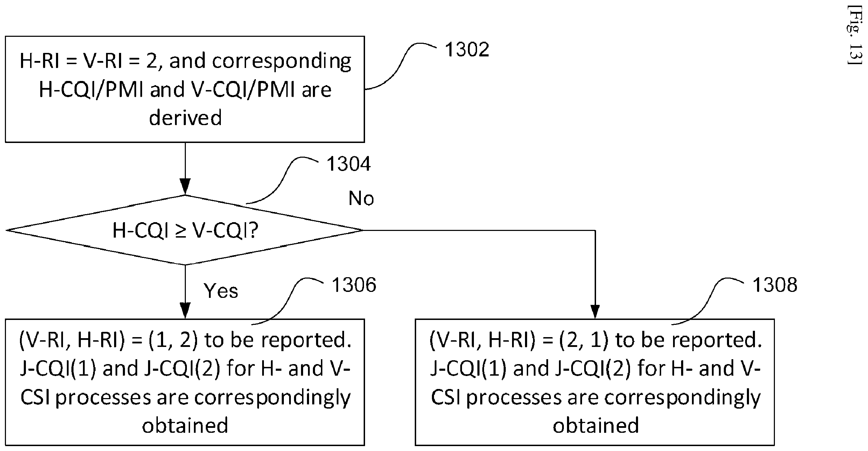

FIGURE 13 illustrates a determination of H-RI and V-RI in accordance with an embodiment of this disclosure. The embodiment of the determination of H-RI and V-RI illustrated in FIGURE 13 is for illustration only. FIGURE 13 does not limit the scope of this disclosure to any particular determination of H-RI and V-RI.

FIGURE 13 illustrates a method to determine H-RI and V-RI according to some embodiments of the current disclosure. When the UE has estimated V-RI = H-RI = 2 corresponding rank-2 H-PMI/CQI and V-PMI/CQI for a PUSCH reporting at operation 1302, the UE further compares H-CQI and V-CQI at operation 1304. If the UE further finds that H-CQI ≥ V-CQI, then the UE is configured to report V-RI = 1 and H-RI = 2 at operation 1306, and a joint CQI calculated with a rank-2 composite precoding matrix constructed by a Kronecker product of a rank-1 "V" precoding matrix and a rank-2 "H" precoding matrix respectively indicated by a rank-1 V-PMI and a rank-2 H-PMI, according to some embodiments of the current disclosure. On the other hand, if the UE further finds that H-CQI < V-CQI, then the UE is configured to report H-RI = 1 and V-RI = 2 at operation 1308, and a joint CQI correspondingly calculated, according to some embodiments of the current disclosure.

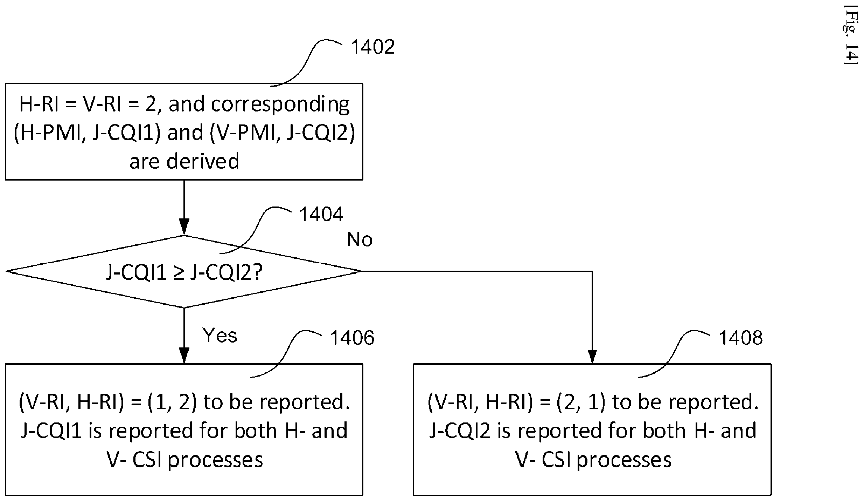

FIGURE 14 illustrates a determination of H-RI and V-RI in accordance with an embodiment of this disclosure. The embodiment of the determination of H-RI and V-RI illustrated in FIGURE 14 is for illustration only. FIGURE 14 does not limit the scope of this disclosure to any particular determination of H-RI and V-RI.

FIGURE 14 illustrates a method to determine H-RI and V-RI according to some embodiments of the current disclosure. When the UE has estimated V-RI = H-RI = 2 corresponding rank-2 H-PMI/CQI and V-PMI/CQI for a PUSCH reporting, the UE further calculates a first and a second joint CQI J-CQI(1) and J-CQI(2) at operation 1402, according to some embodiments of the current disclosure. The UE further compares a first joint CQI J-CQI(1) and a second joint CQI J-CQI(2) at operation 1404. If the UE finds the first joint CQI ≥ the second joint CQI, then the UE reports H-RI = 2 and V-RI = 1, and the first joint CQI at operation 1406; otherwise, the UE reports H-RI = 1 and V-RI = 2, and the second joint CQI at operation 1408.

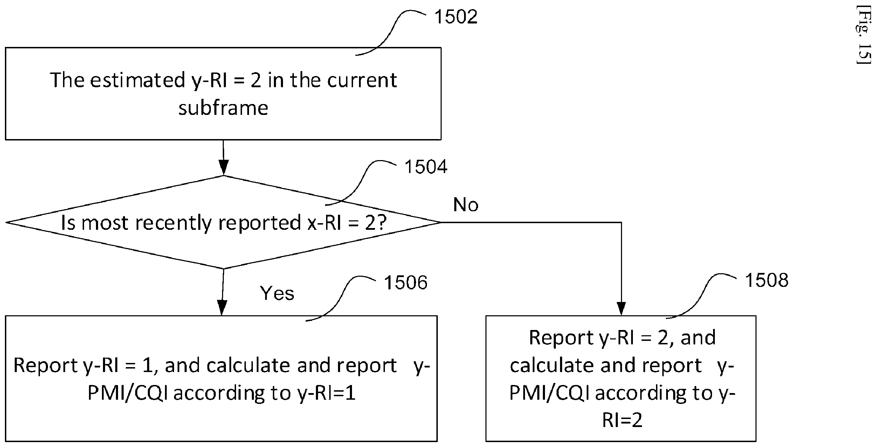

FIGURE 15 illustrates a determination of H-RI and V-RI in accordance with an embodiment of this disclosure. The embodiment of the determination of H-RI and V-RI illustrated in FIGURE 15 is for illustration only. FIGURE 15 does not limit the scope of this disclosure to any particular determination of H-RI and V-RI.

FIGURE 15 illustrates a method to determine H-RI and V-RI according to some embodiments of the current disclosure. If the UE has reported x-RI = 2 at operation 1504 in earlier reporting instance than y-RI, and the UE finds that y-RI = 2 at operation 1502, wherein x ∈ {"H","V"}, y ∈ {"H","V"}, and x ≠ y, then the UE is configured to report y-RI = 1, and derive y-PMI, y-CQI and joint CQI corresponding to y-RI = 1 at operation 1506, according to some embodiments of the current disclosure. Otherwise, the UE is configured to report y-RI=2 at operation 1508.

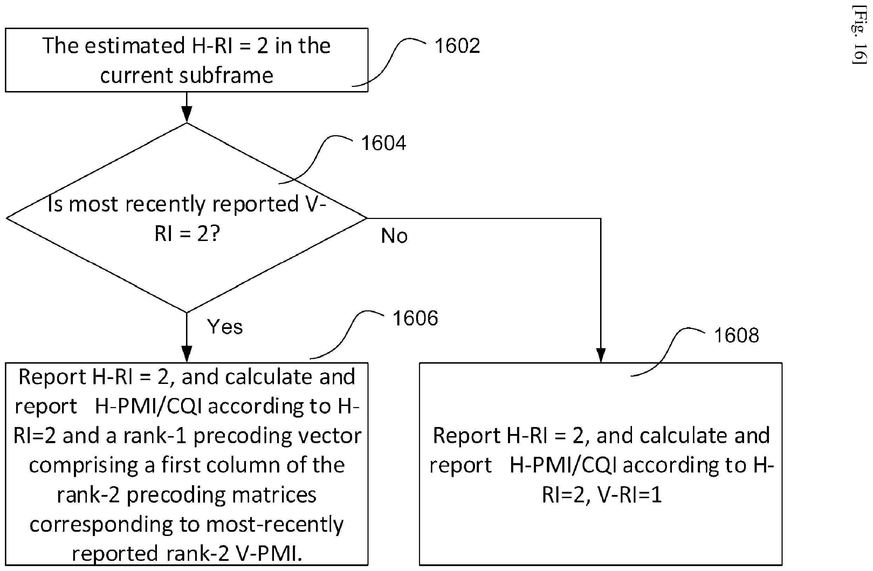

FIGURE 16 illustrates a determination of H-RI and V-RI in accordance with an embodiment of this disclosure. The embodiment of the determination of H-RI and V-RI illustrated in FIGURE 16 is for illustration only. FIGURE 16 does not limit the scope of this disclosure to any particular determination of H-RI and V-RI.

In some embodiments, H-RI is prioritized over V-RI, to comply with situations where number of antenna ports for H domain is larger than V domain. If the UE has reported H-RI = 2 at operation 1602 in earlier reporting instance than V-RI, and the UE finds that V-RI = 2 at operation 1604, then the UE is configured to report H-RI = 1 at operation 1606, according to some embodiments of the current disclosure. On the other hand, if the UE has reported V-RI = 2 in earlier reporting instance, and the UE finds that H-RI = 2, then the UE reports H-RI = 2 at operation 1608, but the joint CQI is calculated and reported based upon [v₁⊗h₁, v₁⊗h₂] together with rank-2 H-PMI in later H-CQI/PMI reporting instances, wherein v₁ is a first column of a rank-2 precoding matrix indicated by the most recently reported rank-2 V-PMI, and [h₁ h₂] is the rank-2 precoding matrix indicated by the H-PMI.

### Channel state information reporting with double codebooks for advanced wireless communication systems:

### 4-Tx enhanced CB and 8-Tx CB:

In Release-10 8-Tx CB and Release-12 4-Tx enhanced CB, the double codebook structure is adopted. In the double codebook structure, the codebook *W* can be written as the product of the inner codebook *W*₁ and the outer codebook *W*₂, i.e., *W* = *W*₁*W*₂. The inner codebook *W*₁ is used to capture the long-term wideband channel characteristics and the outer codebook *W*₂ is used to capture the short-term frequency-selective channel characteristics. A inner codeword (CW) *W*₁ (*i*) has a block diagonal structure depicted as the follows: ${W}_{1} \left(i\right) = \left[\begin{matrix}X \left(i\right) & 0 \\ 0 & X \left(i\right)\end{matrix}\right] ,$ where *X*(*i*) is a 4 × 4 matrix defined as follows: $X \left(i\right) = ⌊ \begin{matrix}{b}_{2 i mod 32} & {b}_{\left(2i+1\right) mod 32} & {b}_{\left(2i+2\right) mod 32} & {b}_{\left(2i+3\right) mod 32}\end{matrix} ⌋ ,$ with ${b}_{n} = {\left[\begin{matrix}1 & {e}^{j 2 πn / 32} & {e}^{j 2 π 2 n / 32} & {e}^{j 2 π 3 n / 32}\end{matrix}\right]}^{T} .$

The outer codebook *W*₂ performs two functionalities: beam selection and co-phasing. For rank 1, the outer codebook *W*₂ is chosen to be: ${W}_{2} = \left\{\begin{matrix}\left[\begin{matrix}{Y}_{1} \\ {Y}_{1}\end{matrix}\right] & \left[\begin{matrix}{Y}_{1} \\ - {Y}_{1}\end{matrix}\right] & \left[\begin{matrix}{Y}_{1} \\ {jY}_{1}\end{matrix}\right] & \left[\begin{matrix}{Y}_{1} \\ - {jY}_{1}\end{matrix}\right]\end{matrix}\right\} ,$ where *Y*₁ ∈ {*e*₁ *e*₂ ... *e*₄} with *eᵢ* being the *i*-th column vector of 4 × 4 identity matrix. The index *i* of the vector *e_{¡}* is called the beam selection index. There are total 16 codewords (4 bit codebook). For rank 2, the outer codebook *W*₂ is chosen to be: ${W}_{2} = \left\{\begin{matrix}\left[\begin{matrix}{Y}_{1} & {Y}_{2} \\ {Y}_{1} & - {Y}_{2}\end{matrix}\right] & \left[\begin{matrix}{Y}_{1} & {Y}_{2} \\ {jY}_{1} & - {jY}_{2}\end{matrix}\right]\end{matrix}\right\} ,$ where (*Y*₁, *Y*₂) ∈ {(*e*₁,*e*), (*e*₂,*e*₂), (*e*₃,*e*₃), (*e*₄,*e*₄), (*e*₂,*e*₂), (*e*₁,*e*₃), (*e*₂,*e*₃), (*e*₁,*e*₄)}. There are total 16 codewords (4 bit codebook).

For 8 antenna ports, each PMI value corresponds to a pair of codebook indices given in Table 7.2.4-1, 7.2.4-2, 7.2.4-3, 7.2.4-4, 7.2.4-5, 7.2.4-6, 7.2.4-7, or 7.2.4-8 in 3GPP TS36.213, where the quantities *ϕₙ* and *vₘ* are given by ${φ}_{n} = {e}^{jπn / 2}$ ${v}_{m} = {\left[\begin{matrix}1 & {e}^{j 2 πm / 32} & {e}^{j 4 πm / 32} & {e}^{j 6 πm / 32}\end{matrix}\right]}^{T}$

F or 8 antenna ports {15,16,17,18,19,20,21,22} , a first PMI value of *i*₁ ∈ {0,1, ..., *f*(*υ*)-1} and a second PMI value of *i*₂ ∈ {0,1,..., *g*(*υ*)-1} respectively correspond to the codebook indices *i*₁ and *i*₂ given in Table 7.2.4-*j* in 3GPP TS36.213 with *υ* equal to the associated RI value and where *j* = *υ, f*(*υ*) = {16,16,4,4,4,4,4,1} and *g*(*υ*) = {16,16,16,8,1,1,1,1}. For *υ*=1 and 2 corresponding tables are copied in this disclosure: TABLE 1 and TABLE 2.

In some embodiments codebook subsampling is supported. The sub-sampled codebook for PUCCH mode 1-1 submode 2 is defined in Table 7.2.2-1D for first and second precoding matrix indicator *i*₁ and *i*₂. Joint encoding of rank and first precoding matrix indicator *i*₁ for PUCCH mode 1-1 submode 1 is defined in Table 7.2.2-1E in 3GPP TS36.213. The sub-sampled codebook for PUCCH mode 2-1 is defined in Table 7.2.2-1F in 3GPP TS36.213 for PUCCH Reporting Type 1a.

**TABLE 1 Codebook for 1-layer CSI reporting using antenna ports 15 to 22**

| *i*₁ | *i*₂ | | | | | | | |
|---|---|---|---|---|---|---|---|---|
| | 0 | 1 | 2 | 3 | 4 | 5 | 6 | 7 |
| 0 - 15 | ${W}_{2 {i}_{1} , 0}^{\left(1\right)}$ | ${W}_{2 {i}_{1} , 1}^{\left(1\right)}$ | ${W}_{2 {i}_{1} , 2}^{\left(1\right)}$ | ${W}_{2 {i}_{1} , 3}^{\left(1\right)}$ | ${W}_{2 {i}_{1} + 1,0}^{\left(1\right)}$ | ${W}_{2 {i}_{1} + 1,1}^{\left(1\right)}$ | ${W}_{2 {i}_{1} + 1,2}^{\left(1\right)}$ | ${W}_{2 {i}_{1} + 1,3}^{\left(1\right)}$ |

| *i*₁ | *i*₂ | | | | | | | |
|---|---|---|---|---|---|---|---|---|
| | 8 | 9 | 10 | 11 | 12 | 13 | 14 | 15 |
| 0 - 15 | ${W}_{2 {i}_{1} + 2,0}^{\left(1\right)}$ | ${W}_{2 {i}_{1} + 2,1}^{\left(1\right)}$ | ${W}_{2 {i}_{1} + 2,2}^{\left(1\right)}$ | ${W}_{2 {i}_{1} + 2,3}^{\left(1\right)}$ | ${W}_{2 {i}_{1} + 3,0}^{\left(1\right)}$ | ${W}_{2 {i}_{1} + 3,1}^{\left(1\right)}$ | ${W}_{2 {i}_{1} + 3,2}^{\left(1\right)}$ | ${W}_{2 {i}_{1} + 3,3}^{\left(1\right)}$ |
| where | ${W}_{m , n}^{\left(1\right)} = \frac{1}{\sqrt{8}} \left[\begin{matrix}{v}_{m} \\ {φ}_{n} {v}_{m}\end{matrix}\right]$ | | | | | | | |

**TABLE 2 Codebook for 2-layer CSI reporting using antenna ports 15 to 22**

| *i*₁ | *i*₂ | | | |
|---|---|---|---|---|
| | 0 | 1 | 2 | 3 |
| 0 - 15 | ${W}_{2 {i}_{1} , 2 {i}_{1} , 0}^{\left(2\right)}$ | ${W}_{2 {i}_{1} , 2 {i}_{1} , 1}^{\left(2\right)}$ | ${W}_{2 {i}_{1} + 1,2 {i}_{1} + 1,0}^{\left(2\right)}$ | ${W}_{2 {i}_{1} + 1,2 {i}_{1} + 1,1}^{\left(2\right)}$ |

| *i*₁ | *i*₂ | | | |
|---|---|---|---|---|
| | 4 | 5 | 6 | 7 |
| 0 - 15 | ${W}_{2 {i}_{1} + 2,2 {i}_{1} + 2,0}^{\left(2\right)}$ | ${W}_{2 {i}_{1} + 2,2 {i}_{1} + 2,1}^{\left(2\right)}$ | ${W}_{2 {i}_{1} + 3,2 {i}_{1} + 3,0}^{\left(2\right)}$ | ${W}_{2 {i}_{1} + 3,2 {i}_{1} + 3,1}^{\left(2\right)}$ |

| *i*₁ | *i*₂ | | | |
|---|---|---|---|---|
| | 8 | 9 | 10 | 11 |
| 0 - 15 | ${W}_{2 {i}_{1} , 2 {i}_{1} + 1,0}^{\left(2\right)}$ | ${W}_{2 {i}_{1} , 2 {i}_{1} + 1,1}^{\left(2\right)}$ | ${W}_{2 {i}_{1} + 1,2 {i}_{1} + 2,0}^{\left(2\right)}$ | ${W}_{2 {i}_{1} + 1,2 {i}_{1} + 2,1}^{\left(2\right)}$ |

| *i*₁ | *i*₂ | | | |
|---|---|---|---|---|
| | 12 | 13 | 14 | 15 |
| 0 - 15 | ${W}_{2 {i}_{1} , 2 {i}_{1} + 3,0}^{\left(2\right)}$ | ${W}_{2 {i}_{1} , 2 {i}_{1} + 3,1}^{\left(2\right)}$ | ${W}_{2 {i}_{1} + 1,2 {i}_{1} + 3,0}^{\left(2\right)}$ | ${W}_{2 {i}_{1} + 1,2 {i}_{1} + 3,1}^{\left(2\right)}$ |
| where ${W}_{m , m ′ , n}^{\left(2\right)} = \frac{1}{4} \left[\begin{matrix}{v}_{m} & {v}_{m ′} \\ {φ}_{n} {v}_{m} & - {φ}_{n} {v}_{m ′}\end{matrix}\right]$ | | | | |

### Feedback Timing

For a UE configured in transmission mode 1-9 and for each serving cell, or for a UE configured in transmission mode 10 and for each CSI process in each serving cell, the periodicity *N_{pd}* (in subframes) and offset *N_{OFFSET,CQI}* (in subframes) for CQI/PMI reporting are determined based on the parameter *cqi-pmi-ConfigIndex* (*I*_{*CQI*/*PMI*}) given in Table 7.2.2-1A in 3GPP TS36.213 for FDD. The periodicity *M_{RI}* and relative offset *N_{OFFSET,RI}* for RI reporting are determined based on the parameter *ri-ConfigIndex (I_{RI}*) given in Table 7.2.2-1C in 3GPP TS36.213. Both *cqi-pmi-ConfigIndex* and *ri-ConfigIndex* are configured by higher layer signalling. The relative reporting offset for RI *N_{OFFSET,RI}* takes values from the set {0,1,..., -(*N_{pd}*-1)} . If a UE is configured to report for more than one CSI subframe set then parameter *cqi-pmi-ConfigIndex* and *ri-ConfigIndex* respectively correspond to the CQI/PMI and RI periodicity and relative reporting offset for subframe set 1 and *cqi-pmi-ConfigIndex2* and *ri-ConfigIndex2* respectively correspond to the CQI/PMI and RI periodicity and relative reporting offset for subframe set 2.. For a UE configured with transmission mode 10, the parameters *cqi-pmi-ConfigIndex* , *ri-ConfigIndex, cqi-pmi-ConfigIndex2* and *ri-ConfigIndex2* can be configured for each CSI process.

In the situation where wideband CQI/PMI reporting is configured, the reporting instances for wideband CQI/PMI are subframes satisfying (10×*n_{f}*+└*nₛ*/2┘-*N_{OFFSET,CQI}*)mod(*N_{pd}*)=0. When RI reporting is configured, the reporting interval of the RI reporting is an integer multiple *M_{RI}* of period *N_{pd}* (in subframes). The reporting instances for RI are subframes satisfying (10×*n_{f}*+└*nₛ*/2]-*N_{OFFSET,CQI}*-*N_{OFFSET,RI}*)mod(*N_{pd}*·*M_{RI}*)=0.

In the situation where both wideband CQI/PMI and subband CQI reporting are configured, the reporting instances for wideband CQI/PMI and subband CQI are subframes satisfying (10×*n_{f}*+└*nₛ*/2┘-*N_{OFFSET,CQI}*)mod*N_{pd}*=0.

When PTI is not transmitted (due to not being configured) or the most recently transmitted PTI is equal to 1 for a UE configured in transmission modes 8 and 9, or for a UE configured in transmission mode 10 without a 'RI-reference CSI process' for a CSI process, or the transmitted PTI is equal to 1 reported in the most recent RI reporting instance for a CSI process when a UE is configured in transmission mode 10 with a 'RI-reference CSI process' for the CSI process, or the transmitted PTI is equal to 1 for a 'RI-reference CSI process' reported in the most recent RI reporting instance for a CSI process when a UE is configured in transmission mode 10 with the 'RI-reference CSI process' for the CSI process, and the most recent type 6 report for the CSI process is dropped. The wideband CQI/wideband PMI (or wideband CQI/wideband second PMI for transmission modes 8, 9 and 10) report has period *H*·*N_{pd},* and is reported on the subframes satisfying (10×*n_{f}*+└*nₛ*/2┘-*N_{OFFSET,CQI}*)mod(*H*·*N_{pd}*)=0. The integer *H* is defined as *H = J·K*+1, where *J* is the number of bandwidth parts. Between every two consecutive wideband CQI/ wideband PMI (or wideband CQI/wideband second PMI for transmission modes 8, 9 and 10) reports, the remaining *J·K* reporting instances are used in sequence for subband CQI reports on *K* full cycles of bandwidth parts except when the gap between two consecutive wideband CQI/PMI reports contains less than *J*·*K* reporting instances due to a system frame number transition to 0, where the UE shall not transmit the remainder of the subband CQI reports which have not been transmitted before the second of the two wideband CQI/ wideband PMI (or wideband CQI/wideband second PMI for transmission modes 8, 9 and 10) reports. Each full cycle of bandwidth parts shall be in increasing order starting from bandwidth part 0 to bandwidth part *J*-1. The parameter *K* is configured by higher-layer signaling.

When the most recently transmitted PTI is 0 for a UE configured in transmission modes 8 and 9 or for a UE configured in transmission mode 10 without a 'RI-reference CSI process' for a CSI process, or the transmitted PTI is 0 reported in the most recent RI reporting instance for a CSI process when a UE is configured in transmission mode 10 with a 'RI-reference CSI process' for the CSI process, or the transmitted PTI is 0 for a 'RI-reference CSI process' reported in the most recent RI reporting instance for a CSI process when a UE is configured in transmission mode 10 with the 'RI-reference CSI process' for the CSI process, and the most recent type 6 report for the CSI process is dropped. The wideband first precoding matrix indicator report has period *H'·N_{pd},* and is reported on the subframes satisfying (10×*n_{f}*+└*nₛ*/2┘-*N_{OFFSET,CQI}*)mod(*H*'·*N_{pd}*)=0, where *H'* is signalled by higher layers. Between every two consecutive wideband first precoding matrix indicator reports, the remaining reporting instances are used for a wideband second precoding matrix indicator with wideband CQI.

When RI reporting is configured, the reporting interval of RI is *M_{RI}* times the wideband CQI/PMI period *H·N_{pd}*, and RI is reported on the same PUCCH cyclic shift resource as both the wideband CQI/PMI and subband CQI reports. The reporting instances for RI are subframes satisfying (10×*n_{f}*+└*nₛ*/2┘-*N*_{*OFFSET*,*CQI*}-*N*_{*OFFSET*,*RI*})mod(*H*·*N_{pd}*·*M_{RI}*)=0.

As shown above, one or more embodiments provide CSI feeback Design with 2 CSI processes (H-CSI and V-CSI processes). The above embodiments can assume that the PMI codebooks (CB) for both the H-CSI and V-CSI processes are single CBs, for example Release 8 2-Tx and 4-Tx CBs. However, a double CB structure with inner and outer CBs has been adopted in Release 10 8-Tx CB and Release 12 4-Tx enhanced CB. The purpose of the inner CB is to capture the long-term wideband channel characteristics whereas that of the outer CB is to capture the short-term frequency selective channel characteristics. If one or both of the H-PMI and V-PMI CBs have double CB structure, then the 2 CSI process feedback mechanisms need to accommodate the double CB structure.

The CSI feedback constitutes the rank indicator (RI), the precoding matrix indicator (PMI), and the channel quality indicator (CQI) in order to support operations such as MCS and precoder selection performed at the eNodeB. There are two types of CSI feedback that are supported in the standard:

### Aperiodic CSI feedback on PUSCH:

In this CSI feedback type, CQI, PMI, and RI are all reported together in the same subframe using PUSCH aperiodically. Since the number of feedback bits on PUSCH can be large, the aperiodic CSI feedback for 2 CSI processes can be designed as a straightforward extension of the existing designs.

### Periodic CSI feedback on PUCCH:

In this CSI feedback type, a UE is semi-statically configured by higher layers to periodically feedback CQI, PMI, PTI (pre-coder type indicator), and/or RI on the PUCCH using the reporting modes given TABLE 3, details of each mode can be found in [3].

**TABLE 3 PUCCH CSI feedback reporting modes**

| | | PMI Feedback Type | |
|---|---|---|---|
| | | No PMI | Single PMI |
| PUCCH CQI Feedback Type | Wideband (wideband CQI) | Mode 1-0 | Mode 1-1 |
| | UE Selected (subband CQI) | Mode 2-0 | Mode 2-1 |

Compared with PUSCH, PUCCH has limited number of feedback bits. For each rank, the maximum feedback size is 11 bits. Hence, to meet feedback size constraints, the feedback contents, i.e., RI, PTI, PMI, and CQI, are transmitted in multiple subframes.

The focus of this disclosure is on designing the periodic CSI feedback on PUCCH for the two CSI processes (H-CSI and V-CSI). In particular, we consider the feedback Design for the situation in which the PMI CB configuration is such that at least one of the two CSI processes supports a double PMI CB structure.

We start with the antenna port configuration (in FIGURE 4), in which we consider Release 8 2-Tx (*N_{V}* = 2) or 4-Tx (*N_{V}* = 4) single CBs for V-PMI and Release 10 8-Tx (*N_{H}* = 8) double CB for H-PMI. Let us use the notation *W_{V}* to denote the V-PMI CB and the notation *W_{H} = W*₁*_{H}W*_{2*H*} to denote the H-PMI CB, where *W*_{1*H*} and *W*_{2*H*} respectively the inner and outer CBs for the H-PMI. The overall Kronecker CB is given by *W_{V}* ⊗ W*_{H}.*

In some embodiments, a rank-1 precoding vector w_{1H}w_{2H} can be equivalently constructed by TABLE 1 and the corresponding inner PMI *i*₁ and outer PMI *i*₂.

In some embodiments, a rank-2 precoding vector [w_{1H}w_{2H}, w_{1H}u_{2H}] can be equivalently constructed by TABLE 2 and the corresponding inner PMI *i*₁ and outer PMI *i*₂.

In some embodiments, inner PMI *i*₁ and outer PMI *i*₂ respectively indicate w_{1H} and [w_{2H}, u₂₁], and product w_{1H}·[w_{2H}, u_{2H}] of the two matrices comprises a rank-2 precoding matrix.

In some embodiments, inner PMI *i*_{1,*j*} and outer PMI *i*_{2,*k*} respectively indicate w_{1H,*j*} and w_{2H,*k*} reported at time instances *j* and *k,* respectively.

In some embodiments, the UE is configured to report H-CSI and V-CSI, wherein H-CSI comprising {H-PMI, J-CQI, H-RI} and V-CSI comprising {V-PMI, J-CQI, V-RI} are reported according to two separate CSI reporting configurations (e.g., based upon H-CSI and V-CSI processes).

In some embodiments, the UE is configured to report H-CSI and V-CSI, and the UE is configured with PUCCH feedback mode 1-1 submode 1 for H-CSI. Then, RI reporting instances according to H-CSI reporting configuration, H-RI is jointly reported with the inner H-PMI in a subframe. Based on the most-recenlty reported rank, the outer H-PMI is reported together with J-CQI in CQI/PMI reporting instances.

In some embodiments, the CQI reported in both V-CSI and H-CSI feedback is joint CQI which are obtained by using composite precoding matrices constructed by the Kronecker product of the pre-coding matrices corresponding to the most recently reported V-PMI and double (inner and outer) H-PMI.

If H-RI = V-RI = 1, then the Kronecker product of the two pre-coding vectors results in a single composite PMI vector which is used to determine the joint CQI for the two CSI processes. However, if x-RI = 1 and y-RI = 2, where x, y = either H or V, and x ≠ y, then the rank-1 joint CQI for the x-CSI feedback can be determined based on either of the two possible composite PMI vectors; which is obtained by the Kronecker product of the pre-coding vector corresponding to rank-1 x-PMI with the two pre-coding vectors corresponding to rank-2 y-PMI. In an alternate Design, the UE may send the rank-2 joint CQI even if x-RI = 1, by considering the Kronecker product of the two pre-coding matrices correspondin to x-PMI and y-PMI.

If H-RI = V-RI = 2, then the Kronecker product of the two pre-coding matrices results in six different composite rank-2 pre-coding matrices; any of them can be used to determine the rank-2 joint CQI for the two CSI processes.

In one method, the UE is configured with the rank of the composite PMI matrix to be used to determine the joint CQI. In another method, the UE indicates this informaion to eNB in the CSI feedback.

In some embodiments, the UE is configured with H-CSI comprising {H-PMI, H-CQI, H-RI} and J-CSI comprising {J-PMI, V-PMI, J-RI} according to two separate CSI reporting configurations (e.g., based upon H and J CSI processes, wherein J-RI stands for joint RI across the two CSI processes, and corresponds to a rank of the composite matrix constructed by two precoding matrices respectively corresponding to H-PMI and H-CQI). The UE reports a joint CQI for a composite channel matrix together with V-PMI according to configurations of the J-CSI process, wherein the composite channel is constructed with Kronecker product of two channel matrices corresponding to most recently reported double (inner and outer) H-PMI and V-PMI. In this method, J-CQI is reported only according to the J-CSI process. For the H-CSI process, H-CQI is reported together with the outer H-PMI.

In this design, J-RI can never be smaller than H-RI. Therefore, J-RI = 1 and H-RI = 2 is not possible, and a UE is not supposed to report impossible combinations.

When most recently reported J-RI = H-RI = 1, for J-CSI process, a rank-1 J-CQI is reported, which is calculated with the composite precoding matrices constructed by the Kronecker product of pre-coding vectors corresponding to the most recently reported rank-1 V-PMI and rank-1 H-PMI. For the H-CSI process, a rank-1 H-CQI is reported.

When most recently reported J-RI = 2 and H-RI = 1, for the J-CSI process, it is proposed to report a rank-2 J-CQI, which is calculated with a composite precoding matrix constructed by the Kronecker product of a rank-2 and a rank-1 precoding matrices respectively corresponding to the most recently reported rank-2 V-PMI and rank-1 H-PMI. For the H-CSI process, a rank-1 H-CQI is reported.

When most recently reported J-RI = 2 and H-RI = 2, for the J-CSI process, it is proposed to report a rank-2 J-CQI, which is calculated with a composite precoding matrix constructed by the Kronecker product of a rank-2 and a rank-1 precoding matrices respectively corresponding to the most recently reported rank-2 H-PMI and rank-1 V-PMI. For the H-CSI process, a rank-2 H-CQI is reported.

### PUCCH feedback mode 1-1 submode 1:

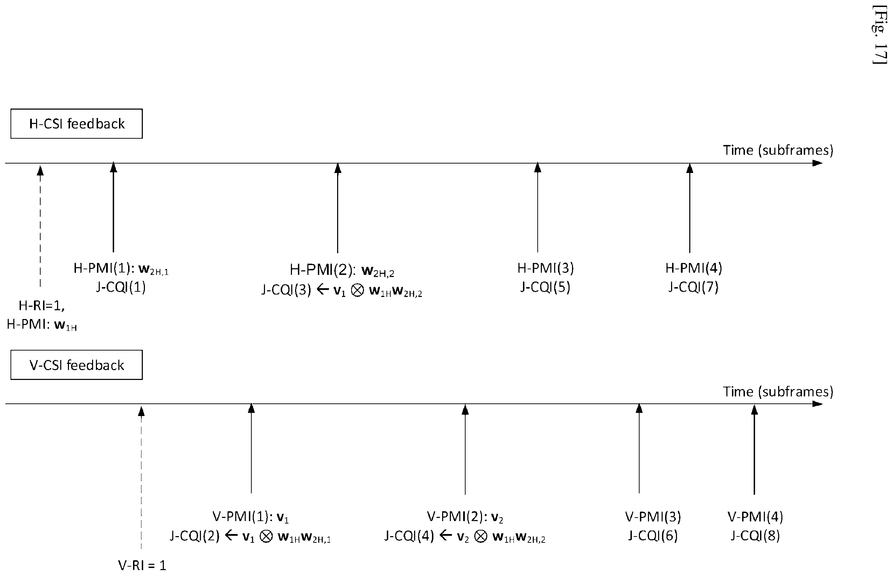

FIGURE 17 illustrates PUCCH feedback mode 1-1 submode 1 in accordance with an embodiment of this disclosure.

FIGURE 17 illustrates an example CSI feedback timing diagram when the UE is configured with PUCCH feedback mode 1-1 submode 1 according to some embodiments of the current disclosure. The UE has reported V-RI = 1 before PMI/CQI reporting for the V-CSI process and has reported H-RI = 1 and the inner H-PMI = *i*₁, which corresponds to w_{1H} for the H-CSI process. In this illustration, J-CQI(2) is reported together with V-PMI(1) and is calculated with a composite precoding matrix of v₁ ⊗ w_{1H}w_{2H,1}, where the precoding vector v₁ corresponds to V-PMI(1) and the precoding vector w_{2H,1} corresponds to outer H-PMI(1), or *i*_{2,1}. J-CQI(3) is reported together with the outer H-PMI(2), or *i*_{2,2} and is calculated with a composite precoding matrix of v₁ ⊗ w_{1H}w_{2H,2}, where the precoding vector w_{2H,2} corresponds to the outer H-PMI(2). J-CQI(4) is reported together with V-PMI(2) and is calculated with a composite precoding matrix of v₂ ⊗ w_{1H}w_{2H,2}, where the precoding vector v₂ corresponds to V-PMI(2) and the precoding vector w_{2H,2} corresponds to outer H-PMI(2), or *i*_{2,2}.

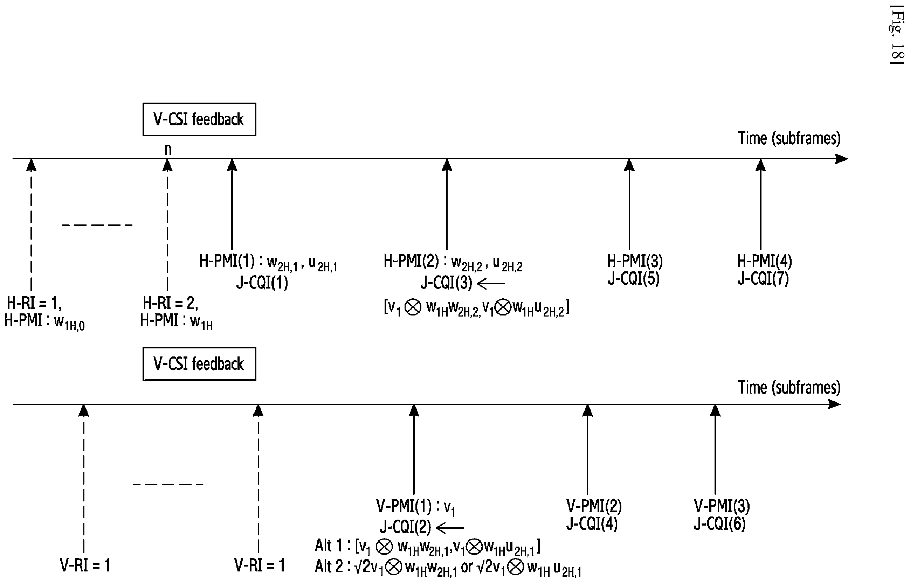

FIGURE 18 illustrates PUCCH feedback mode 1-1 submode 1 in accordance with an embodiment of this disclosure.

FIGURE 18 illustrates an example CSI feedback timing diagram of PUCCH feedback mode 1-1 submode 1 according to some embodiments of the current disclosure, in which prior to subframe *n,* both H-RI = V-RI = 1; and then at subframe *n,* the UE reports H-RI = 2 and the inner H-PMI *i*₁ coresponding to w_{1H} as H-CSI feedback. Then, H-PMI(1) = *i*_{2,1} corresponding to [w_{2H,1}, u_{2H,1}], is interpreted as a rank-2 outer PMI. As in the previous example, there are two examples for Designing J-CQI(2) in V-CSI feedback. In one exmaple, J-CQI(2) is reported as a *rank-2* CQI, calculated with a composite rank-2 pre-coder matrix [v₁ ⊗ w_{1H}w_{2H,1}, v₁ ⊗ w_{1H}u_{2H,1}]. In another alernative, J-CQI(2) is reported as a *rank-1* CQI, calculated with a composite rank-1 pre-coder matrix $\sqrt{2} {v}_{1} ⊗ {w}_{1 H} {w}_{2 H , 1}$ or $\sqrt{2} {v}_{1} ⊗ {w}_{1 H} {u}_{2 H , 1} .$ Here, v₁ corresponds to a *rank-1* pre-coder for V-PMI(1) jointly reported with J-CQI(2) in the V-CSI feedback. As before, the J-CQI(3) in the H-CSI feedback is reported to be [v₁ ⊗ w_{1H}w_{2H,2}, v₁ ⊗ w_{1H}u_{2H,2}], where H-PMI(2) = *i*_{2,2}, corresponding to [w_{2H,2}, u_{2H,2}], is the rank-2 outer PMI jointly reported with J-CQI(3) in the H-CSI feedback.

In one method, the UE is configured to report one of the two example for J-CQI(2). In another method, the UE feeds back a 1-bit indicator to indicate the type of J-CQI(2).

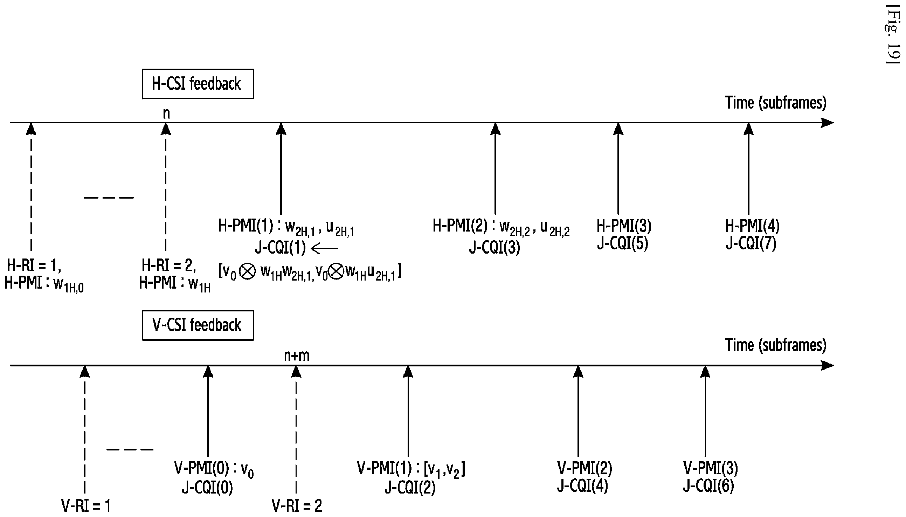

FIGURE 19 illustrates PUCCH feedback mode 1-1 submode 1 in accordance with an embodiment of this disclosure.

FIGURE 19 illustrates an example CSI feedback timing diagram of PUCCH feedback mode 1-1 submode 1 according to some embodiments of the current disclosure, in which earlier than subframe *n,* both H-RI = V-RI = 1; and then at subframe *n,* the UE reports H-RI = 2 together with the inner H-PMI = *i*₁ corresponding to w_{1H}, and at subframe *n*+*m,* it reports V-RI = 2. Then, both H-PMI(1) = *i*_{2,1} corresponding to [w_{2H,1}, u_{2H,1}] and V-PMI(1) corresponding to [v₁,v₂] are interpreted as rank-2 PMIs. J-CQI(1) is a rank-2 CQI, determined with the composite rank-2 pre-coder matrix [v₀ ⊗ w_{1H}w_{2H,1},v₀ ⊗ w_{1H}u_{2H,1}]. On the other hand, J-CQI(2) is a rank-2 CQI, which is calculated with one of the six possible composite rank-2 pre-coder matrices:
[v₁ ⊗ w_{1H}w_{2H,1}, v₁ ⊗ w_{1H}u_{2H,1}], [v₂ ⊗w_{1H}w_{2H,1}, v₂ ⊗ w_{1H}u_{2H,1}], [v₁ ⊗ w_{1H}w_{2H,1}, v₂ ⊗ w_{1H}w_{2H,1}], [v₁ ⊗ w_{1H}u_{2H,1}, v₂ ⊗ w_{1H}u_{2H,1}], [v₁ ⊗ w_{1H}w_{2H,1}, v₂ ⊗ w_{1H}u_{2H,1}] and [v₁ ⊗ w_{1H}u_{2H,1}, v₂ ⊗ w_{1H}w_{2H,1}].

Two examples to calculate J-CQI(2) are as follows.

In one example, the composite rank-2 pre-coder matrices for deriving J-CQI(2) are those matrices that cannot be represented by combinations of (H-RI, V-RI) = (1, 2) or (2, 1), as illustrated in some embodiments of the current disclosure. For example, one composite matrix for deriving J-CQI(2) is [v₁ ⊗ w_{1H}w_{2H,1} v₂ ⊗ w_{1H}u_{2H,1}]; and the other is [v₁ ⊗ w_{1H}u_{2H,1},v₂ ⊗ w_{1H}w_{2H,1}].

In another example, the composite rank-2 matrix for deriving J-CQI(2) is determined by a Kronecker product of a rank-2 and a rank-1 precoding matrices, respectively corresponding to the rank-2 V-PMI(1) and one of the two columns of the rank-2 H-PMI(1), i.e., [v₁ ⊗w_{1H}w_{2H,1}, v₂ ⊗ w_{1H}w_{2H,1}] or [v₁ ⊗ w_{1H}u_{2H,1}v₂ ⊗ w_{1H}u_{2H,1}].

In one embodiment, calculating J-CQI(2) is configured by the eNB. In another method, the UE indicates the calculation method to the eNB in the feedback.

The rank-2 J-CQI(3), J-CQI(4), and the like are determined similarly.

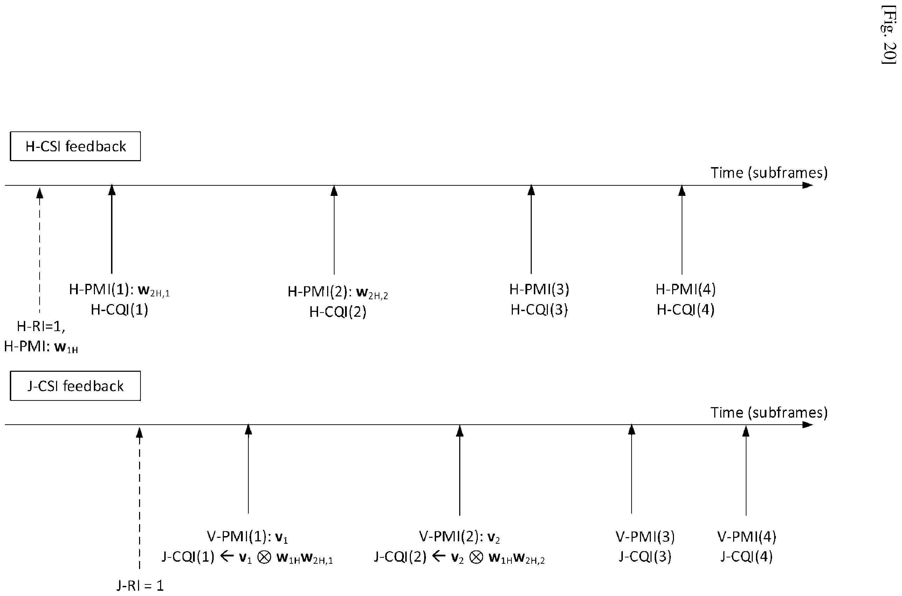

FIGURE 20 illustrates PUCCH feedback mode 1-1 submode 1 in accordance with an embodiment of this disclosure.

FIGURE 20 illustrates an example CSI feedback timing diagram of PUCCH feedback mode 1-1 submode 1 according to some embodiments of the current disclosure. When most recently reported (H-RI, J-RI) = (1, 1), on J-CQI/PMI reporting instance, the UE reports V-PMI and J-CQI, wherein the J-CQI is derived with a composite precoding matrix constructed by the Kronecker product of two rank-1 precoding matrices respectively corresponding to most recently reported double H-PMI and V-PMI. For example, when the most recently reported H-PMI = (*i*₁, *i*_{2,1}) corresponds to w_{1H}w_{2H,1}, the UE reports V-PMI(1) correspnding to v₁ together with J-CQI(1) derived with the composite precoding matrix v₁ ⊗ w_{1H}w_{2H,1}. When the most recently reported H-PMI = (*i*₁, *i*_{2,2}) corresponds to w_{1H}w_{2H,2}, the UE reports V-PMI(2) correspnding to v₂ together with J-CQI(2) derived with the composite precoding matrix v₂ ⊗ w_{1H}w_{2H,2}.

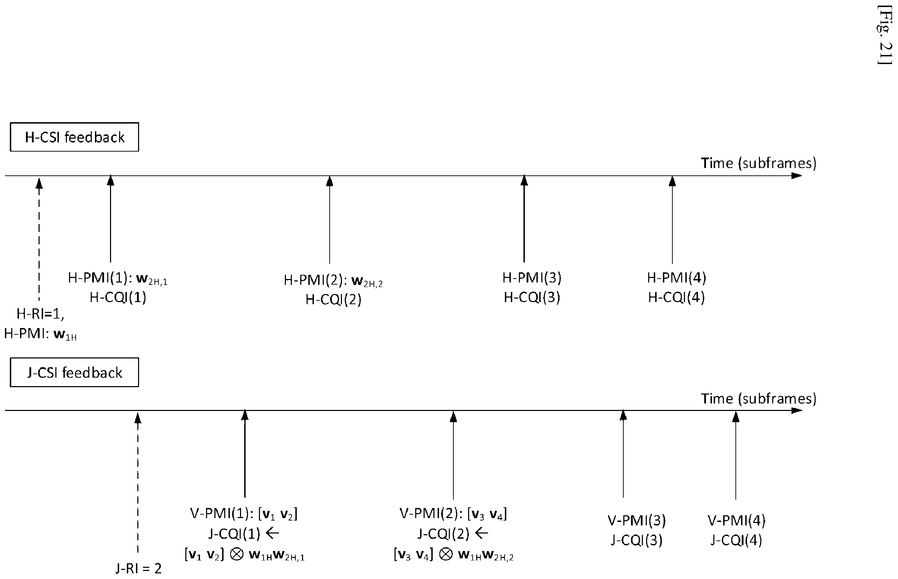

FIGURE 21 illustrates PUCCH feedback mode 1-1 submode 1 in accordance with an embodiment of this disclosure.

FIGURE 21 illustrates an example CSI feedback timing diagram of PUCCH feedback mode 1-1 submode 1 according to some embodiments of the current disclosure. When most recently reported (H-RI, J-RI) = (1, 2), on J-CQI/PMI reporting instance, the UE reports V-PMI and J-CQI, wherein the J-CQI is derived with a composite precoding matrix constructed by the Kronecker product of a rank-1 and a rank-2 precoding matrices respectively corresponding to most recently reported double H-PMI and V-PMI. For example, when the most recently reported H-PMI(1) = (*i*₁, *i*_{2,1}) corresponds to w_{1H}w_{2H,1}, the UE reports V-PMI(1) corresponding to [v₁v₂] together with J-CQI(1) derived with a composite precoding matrix [v₁v₂] ⊗ w_{1H}w_{2H,1}. When the most recently reported H-PMI(2) = (*i*₁, *i*_{2,2}) corresponds to w_{1H}w_{2H,2}, the UE reports V-PMI(2) corresponding to [v₃v₄] together with J-CQI(2) derived with a composite precoding matrix [v₃v₄] ⊗ w_{1H}w_{2H,2}.

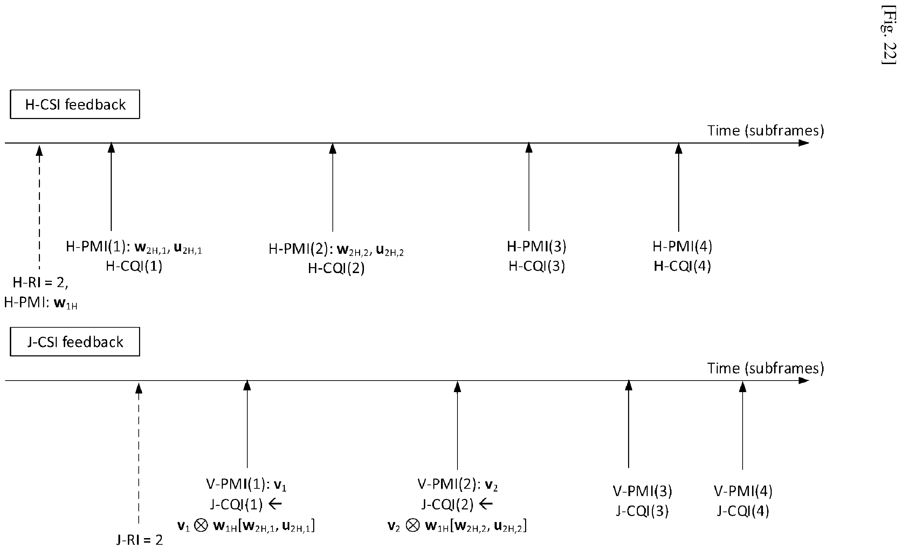

FIGURE 22 illustrates PUCCH feedback mode 1-1 submode 1 in accordance with an embodiment of this disclosure.

FIGURE 22 illustrates an example CSI feedback timing diagram of PUCCH feedback mode 1-1 submode 1 according to some embodiments of the current disclosure. When most recently reported (H-RI, J-RI) = (2, 2), on J-CQI/PMI reporting instance, the UE reports V-PMI and J-CQI, wherein the J-CQI is derived with a composite precoding matrix constructed by the Kronecker product of a rank-1 and a rank-2 precoding matrices respectively corresponding to most recently reported V-PMI and double H-PMI. For example, when the most recently reported H-PMI(1) = (*i*₁, *i*_{2,1}) corresponds to w_{1H}[w_{2H,1} u_{2H,1}], the UE reports V-PMI(1), corresponding to v₁, which is a rank-1 precoding matrix, together with J-CQI(1) derived with a composite precoding matrix v₁ ⊗ w_{1H}[w_{2H,1} u_{2H,1}]. When the most recently reported H-PMI(2) = (*i*₁, *i*_{2,2}) corresponds to w_{1H}[w_{2H,2} u_{2H,2}], the UE reports V-PMI(2), corresponding to v₂, which is a rank-2 precoding matrix, together with J-CQI(2) derived with a composite precoding matrix v₂ ⊗ w_{1H}[w_{2H,2} u_{2H,2}].

### PUCCH feedback mode 1-1 submode 2:

In some embodiments, when the UE is configured with PUCCH feedback mode 1-1 submode 2, H-RI is reported in RI reporting instances according to H-CSI feedback configuration.

In some embodiments, when a UE is configured with PUCCH feedback mode 1-1 submode 2, on CQI/PMI reporting instances, a joint report comprising (inner and outer H-PMI, J-CQI) is reported according to H-CSI feedback configuration.

In some embodiments, when a UE is configured with PUCCH feedback mode 1-1 submode 2, on some CQI/PMI reporting instances, a joint report comprising (inner and outer H-PMI, J-CQI) is reported; on the other CQI/PMI reporting instances, only (outer H-PMI, J-CQI) are reported according to H-CSI feedback configuration. This way, the decoding reliability of CQI/PMI reports corresponding to (outer H-PMI, J-CQI) is improved.

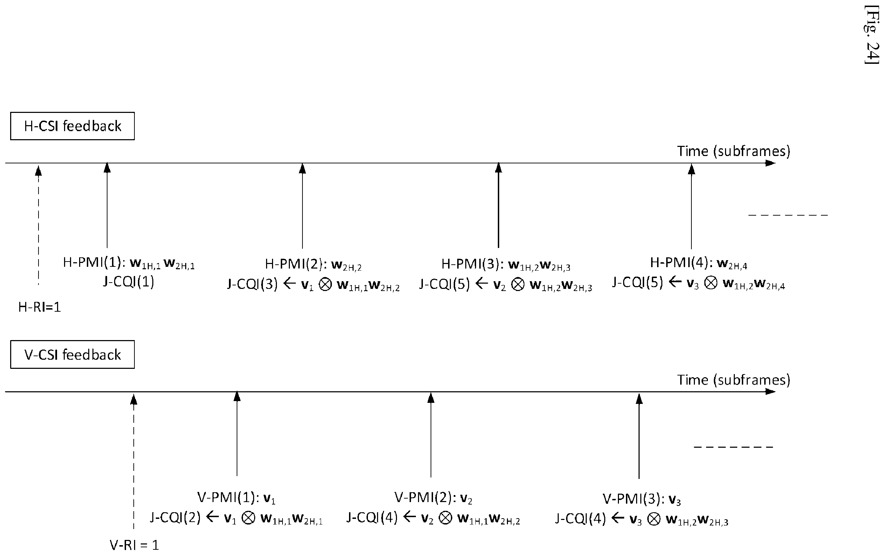

In one example, between the two consecutive reporting instances of (inner H-PMI, outer H-PMI, J-CQI), the remaining instances are used in sequence for (outer H-PMI and J-CQI) reporting in the CQI/PMI reporting instances. In FIGURE 24, for example, between the two consecutive reporting instances of (inner H-PMI, outer H-PMI, J-CQI) in the CQI/PMI reporting instances, (outer H-PMI and J-CQI) is reported.

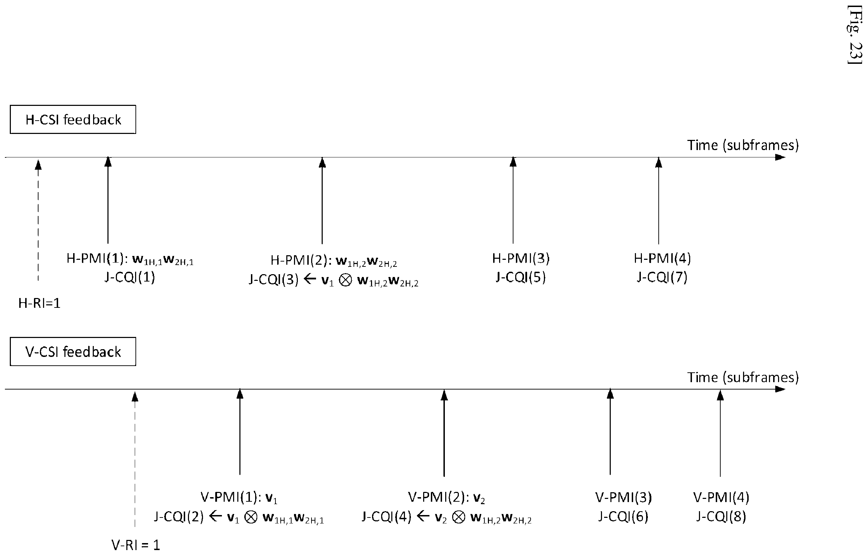

FIGURE 23 and FIGURE 24 illustrate example CSI feedback timing diagrams of PUCCH feedback mode 1-1 submode 2 according to some embodiments of the current disclosure, when the UE has reported V-RI = 1 and H-RI = 1 before PMI/CQI reporting for the V-CSI and H-CSI processes. In this illustration, J-CQI(2) is reported together with V-PMI(1) corresponding to the precoding vector v₁ and is calculated with a composite precoding matrix v₁ ⊗ w_{1H,1}w_{2H,1}, where the precoding matrices w_{1H,1} and w_{2H,1} respectively correspond to the inner and outer H-PMI(1) = (*i*_{1,1}, *i*_{2,1}).

FIGURE 23 illustrates PUCCH feedback mode 1-1 submode 2 in accordance with an embodiment of this disclosure. In FIGURE 23, J-CQI(3) is reported together with H-PMI(2) = (*i*_{1,2}, *i*_{2,2}) corrpesonding to w_{1H,2}w_{2H,2} and is calculated with a composite precoding matrix v₁ ⊗ w_{1H,2}w_{2H,2}. J-CQI(4), J-CQI(6), and the like are calculated similar to J-CQI(2) and J-CQI(5), J-CQI(7), and the like are calculated similar to J-CQI(3). For example, J-CQI(4) is reported together with V-PMI(2) corresponding to the precoding vector v₂ and is calculated with a composite precoding matrix v₂ ⊗ w_{1H,2}w_{2H,2}.

FIGURE 24 illustrates PUCCH feedback mode 1-1 submode 2 in accordance with an embodiment of this disclosure. In FIGURE 24, J-CQI(3) is reported together with the outer H-PMI(2) = *i*_{2,2} only that corrpesonds to w_{2H,2} and is calculated with a composite precoding matrix v₁ ⊗ w_{1H,1}w_{2H,2} and J-CQI(5) is reported together with the inner and outer H-PMI(2) = (*i*_{1,2}, *i*_{2,3}) that corrpesonds to w_{1H,2}w_{2H,3} and is calculated with a composite precoding matrix v₂ ⊗ w_{1H,2}w_{2H,3}, where v₂ is the pre-coding vector corresponding to V-PMI(2). J-CQI(4), J-CQI(6), and the like are calculated similar to J-CQI(2) and J-CQI(7) and J-CQI(9),.... are calculated similar to J-CQI(3) and J-CQI(5), respectively. For example, J-CQI(4) is reported together with V-PMI(2) corresponding to the precoding vector v₂ and is calculated with a composite precoding matrix v₂ ⊗ w_{1H,1}w_{2H,2}.

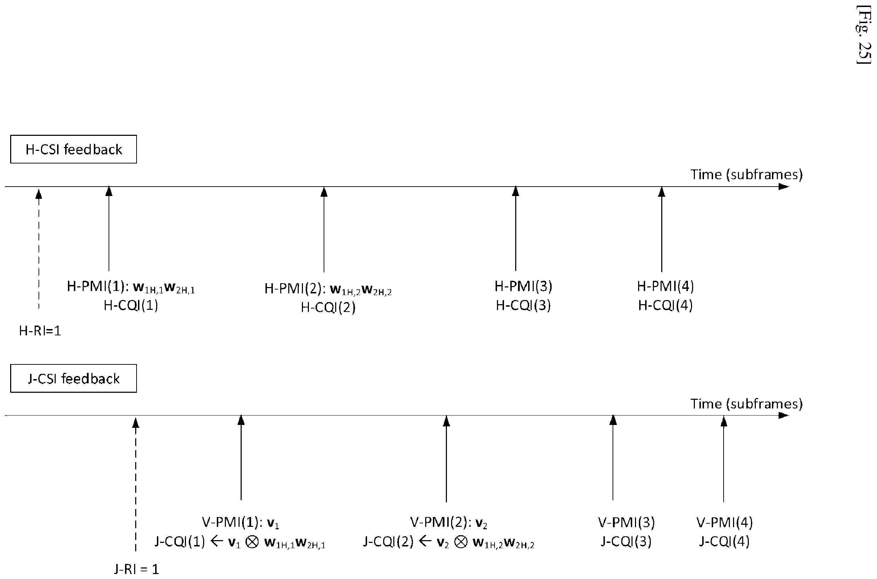

FIGURE 25 illustrates PUCCH feedback mode 1-1 submode 2 in accordance with an embodiment of this disclosure.

FIGURE 25 illustrates an example CSI feedback timing diagrams of PUCCH feedback mode 1-1 submode 2 according to some embodiments of the current disclosure. When most recently reported (H-RI, J-RI) = (1, 1), on J-CQI/PMI reporting instance, the UE reports V-PMI and J-CQI, wherein the J-CQI is derived with a composite precoding matrix constructed by the Kronecker product of two rank-1 precoding matrices respectively corresponding to most recently reported double H-PMI and V-PMI. For example, when the most recently reported H-PMI = (*i*_{1,1}, *i*_{2,1}) corresponds to w_{1H,1}w_{2H,1}, the UE reports V-PMI(1) correspnding to v₁ together with J-CQI(1) derived with the composite precoding matrix v₁ ⊗ w_{1H,1}w_{2H,1}. When the most recently reported H-PMI = (*i*_{1,2}, *i*_{1,2}, *i*_{2,2}) corresponds to w_{1H,2}w_{2H,2}, the UE reports V-PMI(2) correspnding to v₂ together with J-CQI(2) derived with the composite precoding matrix v₂ ⊗ w_{1H,2}w_{2H,2}.

### PUCCH feedback mode 1-1 submode 3:

In some embodiments, when the UE is configured with PUCCH feedback mode 1-1 submode 3, H-RI is reported in RI reporting instances according to H-CSI configurations, and inner and outer H-PMI are reported without CQI in at least some PMI/CQI reporting instances. Note that submode 3 differs from submode 2 in that no CQI (i.e., only H-PMI) is reported in the subframe following the H-RI report. This way the UE can report H-PMI more reliably. Note that J-CQI report is still available from the other CSI (i.e. V-CSI or J-CSI) process.

In some embodiments, when the UE is configured with PUCCH feedback mode 1-1 submode 3, on all CQI/PMI reporting instances, inner and outer H-PMI are reported without CQI is reported according to H-CSI feedback configuration.

In some embodiments, when a UE is configured with PUCCH feedback mode 1-1 submode 3, on some CQI/PMI reporting instances, inner and outer H-PMI are reported without CQI is reported; on the other CQI/PMI reporting instances, only (outer H-PMI) is reported according to H-CSI feedback configuration.

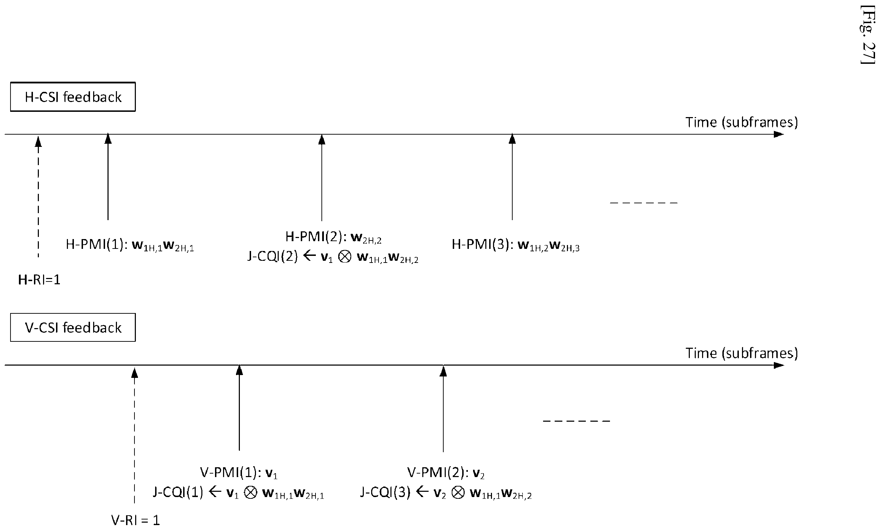

In one example, between the two consecutive reporting instances of (inner H-PMI, outer H-PMI), the remaining instances are used in sequence for (outer H-PMI and J-CQI) reporting in the CQI/PMI reporting instances. In FIGURE 27, for example, between the two consecutive reporting instances of (inner H-PMI, outer H-PMI) in the CQI/PMI reporting instances, (outer H-PMI and J-CQI) is reported.

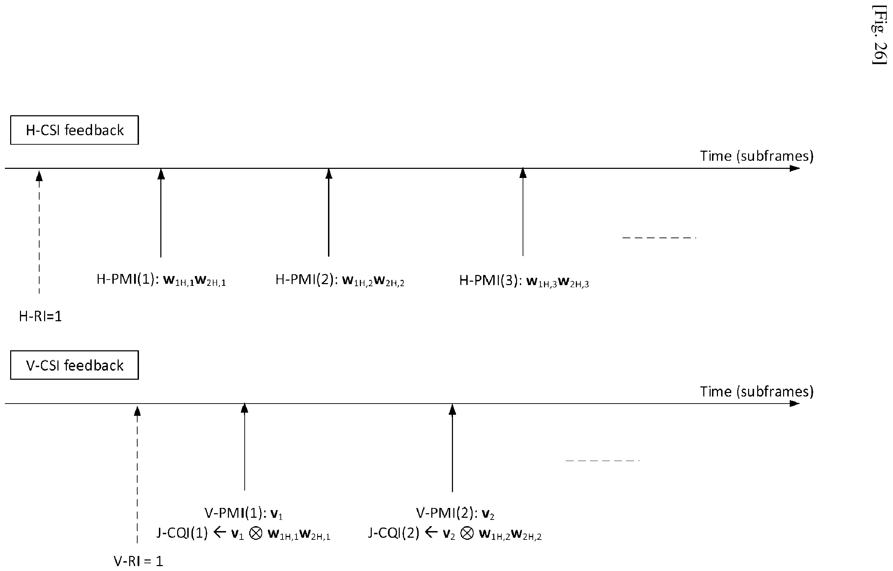

FIGURE 26 and FIGURE 27 illustrate an example CSI feedback timing diagrams of PUCCH feedback mode 1-1 submode 3 according to some embodiments of the current disclosure, when the UE has reported V-RI = 1 and H-RI = 1 before PMI/CQI reporting for the V-CSI and H-CSI processes. In this illustration, J-CQI(1) is reported together with V-PMI(1) corresponding to the precoding vector v₁ and is calculated with a composite precoding matrix v₁ ⊗ w_{1H,1}w_{2H,1}, where the precoding matrices w_{1H,1} and w_{2H,1} respectively correspond to the inner and outer H-PMI(1) = (*i*_{1,1}, *i*_{2,1}).

FIGURE 26 illustrates PUCCH feedback mode 1-1 submode 3 in accordance with an embodiment of this disclosure. In FIGURE 26, J-CQI(2), J-CQI(3), and the like are calculated similar to J-CQI(1). For example, J-CQI(2) is reported together with V-PMI(2) corresponding to the precoding vector v₂ and is calculated with a composite precoding matrix v₂ ⊗ w_{1H,2}w_{2H,2}, where the precoding matrices w_{1H,2} and w_{2H,2} respectively correspond to the inner and outer H-PMI(2) = (*i*_{1,2}, *i*_{2,2}).

FIGURE 27 illustrates PUCCH feedback mode 1-1 submode 2 in accordance with an embodiment of this disclosure. In FIGURE 27, J-CQI(2) is reported together with the outer H-PMI(2) = *i*_{2,2} that corrpesonds to w_{2H,2} and is calculated with a composite precoding matrix v₁ ⊗ w_{1H,2}w_{2H,2}, and in the subframe after that, again the inner and outer H-PMI(2) = (*i*_{1,2}, *i*_{2,3}) that corrpesonds to w_{1H,2}w_{2H,3} is reported. J-CQI(4), J-CQI(6), and the like are calculated similar to J-CQI(2) and J-CQI(3) and J-CQI(5),.... are calculated similar to J-CQI(1). For example, J-CQI(3) is reported together with V-PMI(2) corresponding to the precoding vector v₂ and is calculated with a composite precoding matrix v₂ ⊗ w_{1H,2}w_{2H,2}.

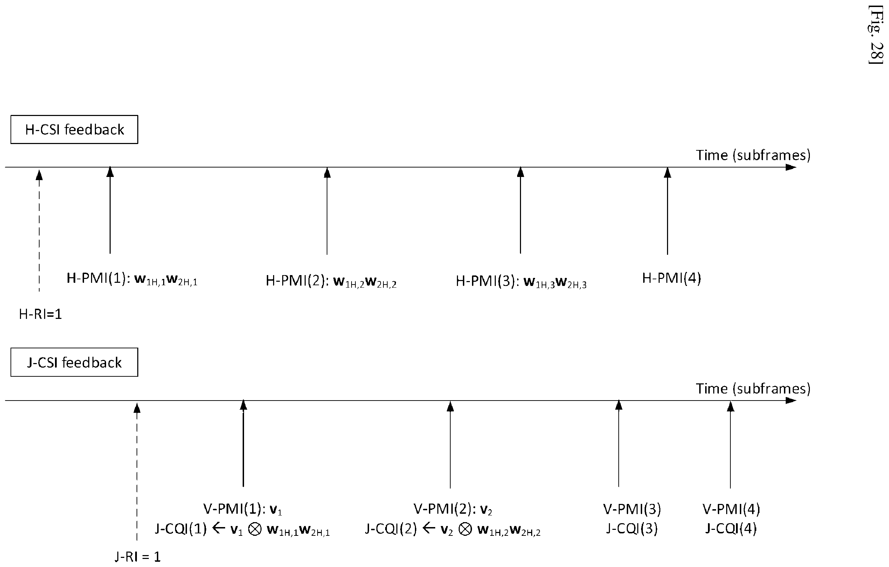

FIGURE 28 illustrates PUCCH feedback mode 1-1 submode 2 in accordance with an embodiment of this disclosure.

FIGURE 28 illustrates an example CSI feedback timing diagrams of PUCCH feedback mode 1-1 submode 3 according to some embodiments of the current disclosure, wherein J-CSI is configured instead of V-CSI. When most recently reported (H-RI, J-RI) = (1, 1), on J-CQI/PMI reporting instance, the UE reports V-PMI and J-CQI, wherein the J-CQI is derived with a composite precoding matrix constructed by the Kronecker product of two rank-1 precoding matrices respectively corresponding to most recently reported double H-PMI and V-PMI. For example, when the most recently reported H-PMI = (*i*_{1,1}, *i*_{2,1}) corresponds to w_{1H,1}w_{2H,1}, the UE reports V-PMI(1) correspnding to v₁ together with J-CQI(1) derived with the composite precoding matrix v₁ ⊗ w_{1H,1}w_{2H,1}. When the most recently reported H-PMI = (*i*_{1,2}, *i*_{2,2}) corresponds to w_{1H,2}w_{2H,2}, the UE reports V-PMI(2) correspnding to v₂ together with J-CQI(2) derived with the composite precoding matrix v₂ ⊗ w_{1H,2}w_{2H,2}.

### J-RI/V-RI feedback dependent upon H-RI:

Some UEs are capable of receive more than 2 streams in a same time-frequency resource, e.g., because the UE is equipped with more than 2 Rx antennas. These UEs should be able to report PMI corresponding to RI>2, but the construction of such feedback with H and V (or J) CSI reporting configurations is not straightforward, because the composite high rank matrix may contain different contributions from H (azimuth domain) and V (elevation domain). For example, when the UE finds that the UE can receive signals from eNB with highest spectral efficiency with achieving 0.1 error probability with RI = 4. Then, the rank-4 channels can be constructed with three different ways: (H-RI, V-RI) = (4, 1), (2, 2), (1, 4), and corresponding feedback design can be complicated to support all these embodiments. However, considering the scattering environment wherein it is more likely that angle spread leading to higher rank lies in azimuth domain rather than elevation domain, it could make sense that the UE is configured to report V-RI = 1 and H-RI = J-RI if composite RI, i.e., J-RI > 2.

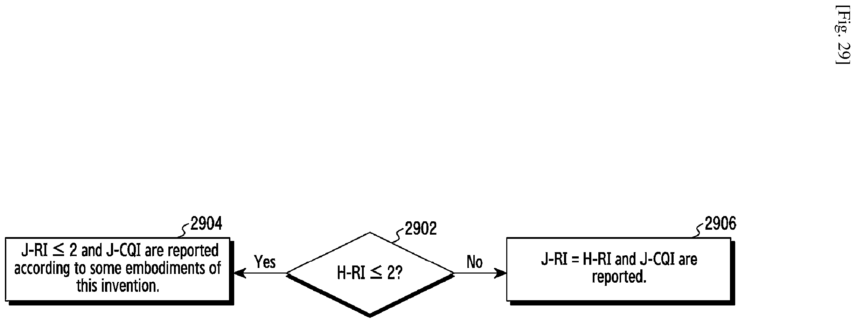

FIGURE 29 illustrates H-RI and J-RI reporting on PUCCH for H-CSI and J-CSI processes in accordance with an embodiment of this disclosure.

FIGURE 29 illustrates J-RI reporting according to some embodiments of the current disclosure, wherein the UE supporting J-RI > 2 is configured with H-CSI and J-CSI (e.g., based upon H-CSI and J-CSI processes). When the most recently reported H-RI ≤ 2 at operation 2902, the UE is configured to report J-RI and J-CQI at operation 2904 according to some embodiments of the current disclosure. When the most recently reported H-RI > 2, the UE is configured to report J-RI = H-RI and J-CQI at operation 2906.

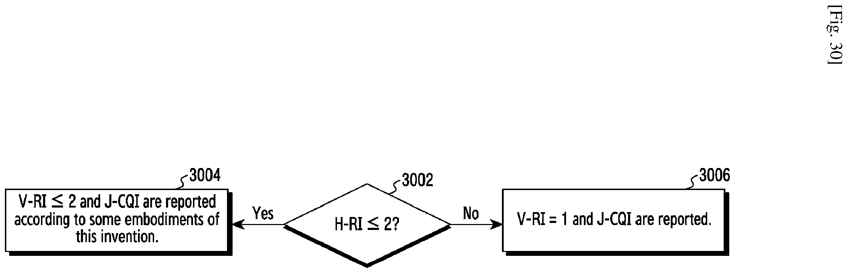

FIGURE 30 illustrates H-RI and V-RI reporting on PUCCH for H-CSI and V-CSI processes in accordance with an embodiment of this disclosure.

FIGURE 30 illustrates V-RI reporting according to some embodiments of the current disclosure, wherein the UE supporting J-RI > 2 is configured with H-CSI and V-CSI (e.g., based upon H-CSI and V-CSI processes). When the most recently reported H-RI ≤ 2 at operation 3002, the UE is configured to report V-RI and J-CQI at operation 3004 according to some embodiments of the current disclosure. When the most recently reported H-RI > 2, the UE is configured to report V-RI = 1 and J-CQI at operation 3006.

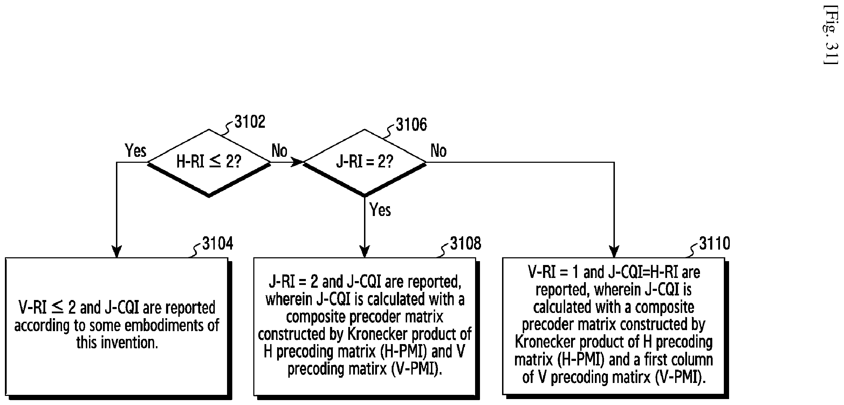

FIGURE 31 illustrates H-RI and J-RI reporting on PUCCH for H-CSI and J-CSI processes in accordance with an embodiment of this disclosure.

When the most recently reported H-RI ≤ 2 at operation 3102, the UE is configured to report V-RI and J-CQI at operation 3104. When the most recently reported H-RI > 2 and J-RI=2 at operation 3106, the UE is configured to report J-RI and J-CQI at operation 3108. When the most recently reported H-RI > 2 and J-RI≠2, the UE is configured to report V-RI and J-CQI=H-RI at operation 3110.

FIGURE 31 illustrates J-RI reporting according to some embodiments of the current disclosure, wherein the UE supporting J-RI > 2 is configured with H-CSI and J-CSI (e.g., based upon H-CSI and J-CSI processes). The UE is configured to report a J-CQI for a composite channel matrix constructed with the Kronecker product of two channel matrices corresponding to most recently reported double (inner and outer) H-PMI and V-PMI. If J-RI = H-RI and H-RI > 2, then the composite channel matrix is constructed by Kronecker product of two precoding matrices respectively corresponding to H-PMI and V-PMI for J-CQI calculation. On the other hand, if H-RI > 2 and J-RI ≠ H-RI, then there are several candidate composite channel matrices that can be used to compute J-CQI corresponding to J-RI. In one example, the composite precoding matrix to be used for J-CQI calculation is a Kronecker product of H precoding matrix corresponding to rank-H-RI H-PMI and a rank-1 precoding vector, which is a first column (e.g., a leftmost column) of a V precoding matrix corresponding to rank-V-RI V-PMI.

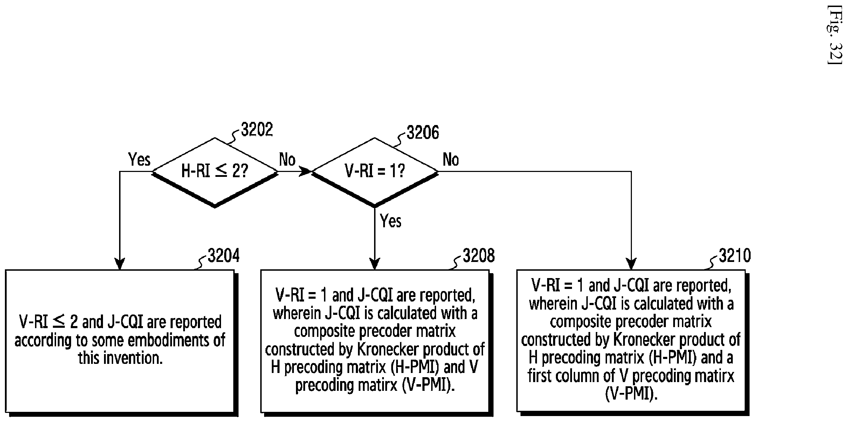

FIGURE 32 illustrates H-RI and V-RI reporting on PUCCH for H-CSI and V-CSI processes in accordance with an embodiment of this disclosure.

When the most recently reported H-RI ≤ 2 at operation 3102, the UE is configured to report V-RI and J-CQI at operation 3204. When the most recently reported H-RI > 2 and V-RI=1 at operation 3206, the UE is configured to report J-RI and J-CQI at operation 3208. When the most recently reported H-RI > 2 and V-RI≠1, the UE is configured to report V-RI and J-CQI at operation 3210.

FIGURE 32 illustrates V-RI reporting according to some embodiments of the current disclosure, wherein the UE supporting J-RI > 2 is configured with H-CSI and V-CSI (e.g., based upon H-CSI and V-CSI processes). The UE is configured to report a joint CQI for a composite channel matrix constructed with the Kronecker product of two channel matrices corresponding to most recently reported double (inner and outer) H-PMI and V-PMI. If V-RI = 1 and H-RI > 2, then the composite channel matrix is constructed by Kronecker product of two precoding matrices respectively corresponding to H-PMI and V-PMI for J-CQI calculation. On the other hand, if V-RI > 1 and H-RI > 2, then there are several candidate composite channel matrices that can be used to compute J-CQI corresponding to J-RI. In one example, the composite precoding matrix to be used for J-CQI calculation is a Kronecker product of H precoding matrix corresponding to rank-H-RI H-PMI and a rank-1 precoding vector, which is a first column (e.g., a leftmost column) of a V precoding matrix corresponding to rank-V-RI V-PMI.

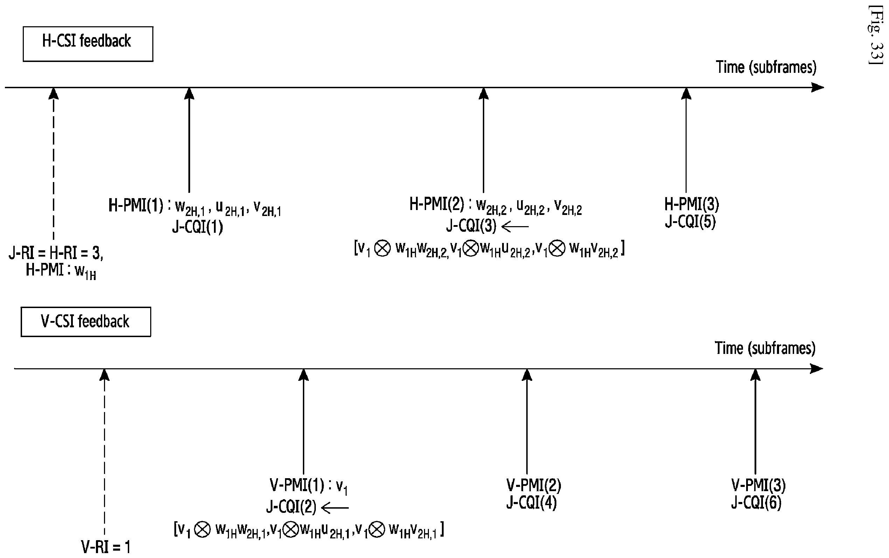

FIGURE 33 illustrates PUCCH feedback mode 1-1 submode 1 in accordance with an embodiment of this disclosure.

FIGURE 33 illustrates an example CSI feedback timing diagrams of PUCCH feedback mode 1-1 submode 1 according to some embodiments of the current disclosure. When most recently reported (H-RI, V-RI) = (3, 1), on J-CQI/PMI reporting instance in V-CSI feedback, the UE reports V-PMI and J-CQI, wherein the J-CQI is derived with a composite precoding matrix constructed by the Kronecker product of a rank-3 and rank-1 precoding matrices respectively corresponding to most recently reported rank-3 double H-PMI and rank-1 V-PMI. For example, when the most recently reported rank-3 H-PMI(1) corresponds to the pre-coding matrix w_{1H}[w_{2H,1}, u_{2H,1}, v_{2H,1}], the UE reports V-PMI(1) corresponding to the pre-coding vector v₁ together with J-CQI(1), which is derived with the composite precoding matrix v₁ ⊗ w_{1H}[w_{2H,1}, u_{2H,1}, v_{2H,1}].

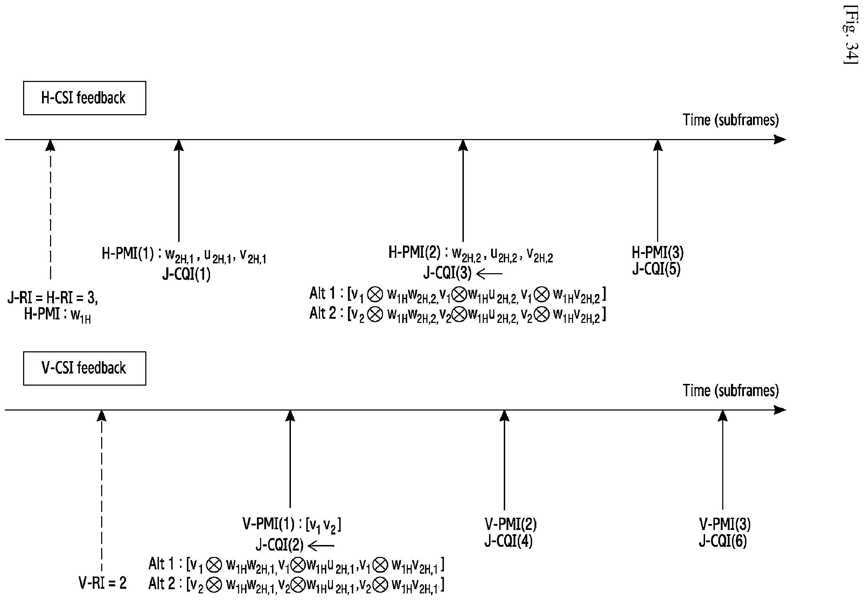

FIGURE 34 illustrates joint CQI reporting for PUCCH feedback mode 1-1 in accordance with an embodiment of this disclosure.

FIGURE 34 illustrates an example CSI feedback timing diagrams of PUCCH feedback mode 1-1 submode 1 according to some embodiments of the current disclosure. When most recently reported (H-RI, V-RI) = (3, 2), on J-CQI/PMI reporting instance in V-CSI feedback, the UE reports V-PMI and J-CQI, wherein the J-CQI is derived with a composite precoding matrix constructed by the Kronecker product of a rank-3 and rank-1 precoding matrices respectively corresponding to most recently reported rank-3 double H-PMI and rank-1 V-PMI extracted from the columns of rank-2 V-PMI. For example, when the most recently reported rank-3 H-PMI(1) corresponds to the pre-coding matrix w_{1H}[w_{2H,1}, u_{2H,1}, v_{2H,1}], the UE reports V-PMI(1) corresponding to the pre-coding matrix [v₁, v₂] together with J-CQI(1), which is derived with the composite precoding matrix v₁ ⊗ w_{1H}[w_{2H,1}, u_{2H,1}, v_{2H,1}] or v₂ ⊗ w_{1H}[w_{2H,1}, u_{2H,1}, v_{2H,1}].

### One-CSI-process PUCCH feedback:

In some embodiments, the UE is configured with a CSI reporting comprising J-RI, H-PMI, V-PMI, J-CQI. For periodic CSI reporting of this UE, the J-RI should be protected the most, as subsequent CQI/PMI reports cannot be interpreted correctly if J-RI is not correctly at the eNB. However, as having an additional PMI report (V-PMI), it is not straightforward to multiplex this V-PMI with other information.

In one example, V-PMI is multiplexed together with J-RI and reported in RI reporting instances. Considering the fact that it is less likely that V-PMI fluctuates faster than H-PMI, V-PMI reporting periodicity can be reduced. When number of V ports is smaller than H ports, this example degrades decoding reliability only a little as a consequence of multiplexing J-RI with V-PMI.

In another example, V-PMI is multiplexed together with H-PMI and J-CQI and reported in CQI/PMI reporting instances. This way, the RI decoding reliability is not affected.

When J-RI = 2 is reported, meaning of H-PMI and V-PMI should be clearly and commonly understood at the eNB and at the UE.

One way to facilitate this is to report V-RI as well as J-RI. In order not to degrade the RI decoding performance too much, possible values for V-RI can be restricted to only 1 and 2 regardless of the UE capability on the transmission rank. V-RI can be reported together with J-RI in RI reporting instances.

Another way is that the UE is configured to assume V-RI = 1 for deriving V-PMI and H-PMI, and report corresponding V-PMI and H-PMI. In this embodiment, V-RI reporting is unnecessary, and eNB should interpret V-PMI and H-PMI according to this UE's configuration.

In some embodiments, the UE configured with a CSI reporting comprising J-RI, H-PMI, V-PMI, J-CQI and a submode of PUCCH mode 1-1 reports J-RI and V-PMI in RI reporting instances, and H-PMI and J-CQI in PMI/CQI reporting instances.

In some embodiments, the UE configured with a CSI reporting comprising J-RI, H-PMI, V-PMI, J-CQI and a submode of PUCCH mode 1-1 reports J-RI in RI reporting instances, and H-PMI, V-PMI and J-CQI in PMI/CQI reporting instances.

In some embodiments, the UE configured with a CSI reporting comprising J-RI, V-RI, H-PMI, V-PMI, J-CQI and a submode of PUCCH mode 1-1 reports J-RI, V-RI and V-PMI in RI reporting instances, and H-PMI and J-CQI in PMI/CQI reporting instances. In one example, V-RI is one-bit information and can have value either 1 or 2.

In some embodiments, the UE configured with a CSI reporting comprising J-RI, V-RI, H-PMI, V-PMI, J-CQI and a submode of PUCCH mode 1-1 reports J-RI, V-RI in RI reporting instances, and H-PMI, V-PMI and J-CQI in PMI/CQI reporting instances. In one example, V-RI is one-bit information and can have value either 1 or 2.

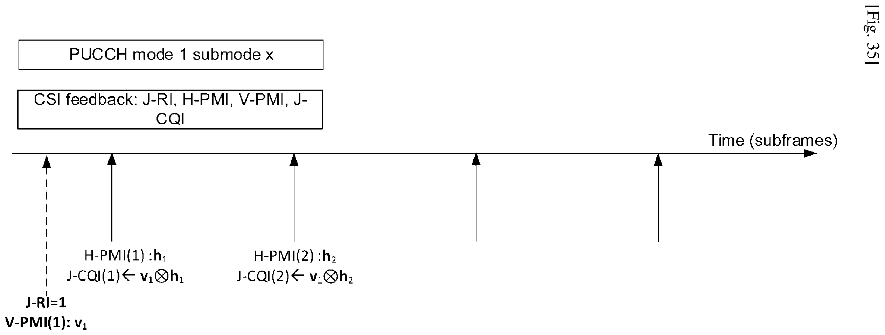

FIGURE 35 illustrates CSI reporting with PUCCH mode 1-1 submode x in accordance with an embodiment of this disclosure.

FIGURE 35 illustrates an example CSI feedback timing diagrams of a submode of PUCCH feedback mode 1-1 according to some embodiments of the current disclosure. In an RI reporting instance, the UE reports J-RI = 1 and V-PMI(1) = v₁. In a PMI/CQI reporting instance, the UE reports H-PMI(1) corresponding to a rank-1 precoding vector hi, and J-CQI(1) computed with a composite precoding matrix of v₁⊗h₁.

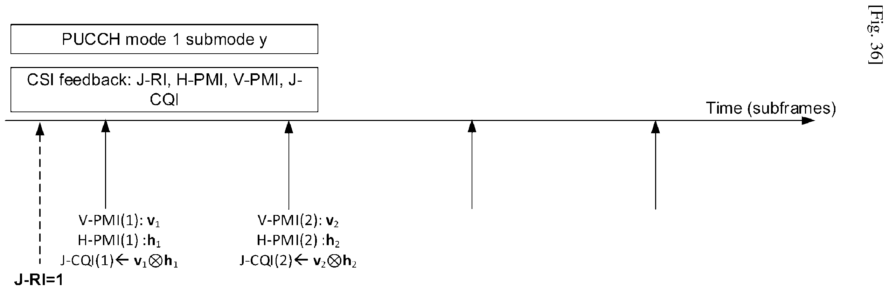

FIGURE 36 illustrates CSI reporting with PUCCH mode 1-1 submode y in accordance with an embodiment of this disclosure.

FIGURE 36 illustrates an example CSI feedback timing diagrams of a submode of PUCCH feedback mode 1-1 according to some embodiments of the current disclosure. In an RI reporting instance, the UE reports J-RI = 1. In a PMI/CQI reporting instance, the UE reports H-PMI(1) and V-PMI(1) respectively corresponding to rank-1 precoding vectors h₁ and vi, and J-CQI(1) computed with a composite precoding matrix of v₁⊗h₁.

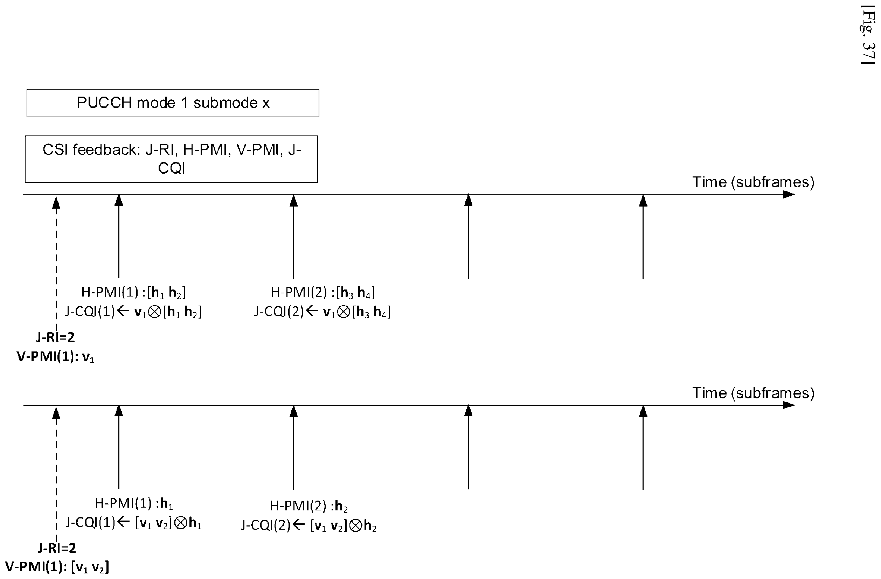

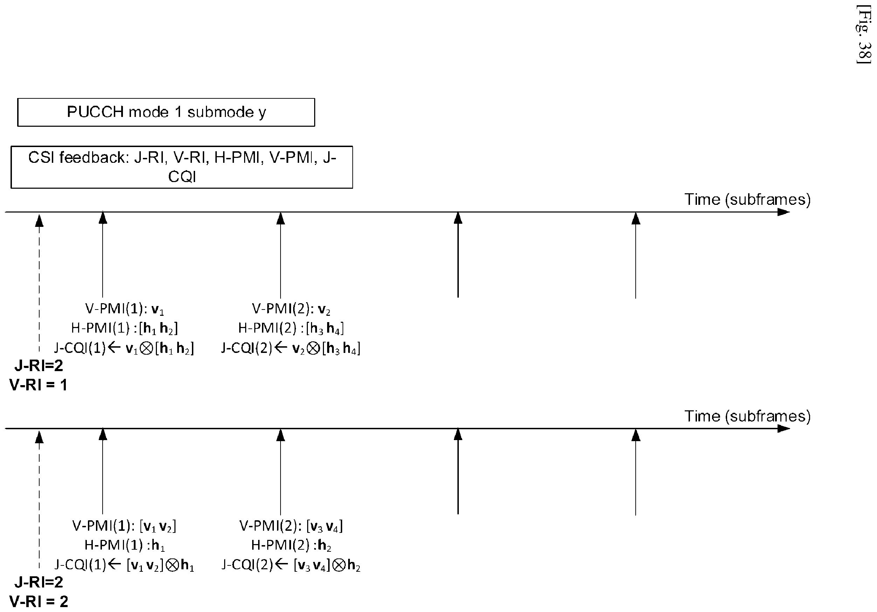

FIGURE 37 illustrates CSI reporting with PUCCH mode 1-1 submode x in accordance with an embodiment of this disclosure. FIGURE 38 illustrates CSI reporting with PUCCH mode 1-1 submode y in accordance with an embodiment of this disclosure.

FIGURE 37 and FIGURE 38 illustrate example CSI feedback timing diagrams of a submode of PUCCH feedback mode 1-1 according to some embodiments of the current disclosure. In an RI reporting instance in FIGURE 37 the UE reports J-RI = 2 and V-PMI(1). In an RI reporting instance in FIGURE 38, the UE reports J-RI = 2 and V-RI.

In these FIGURES, a few examples on the interpretation of V-PMI(1) and J-CQI are considered.

In one example, V-PMI(1) is interpreted as rank-1 V-PMI corresponding to a precoding vector; in this embodiment, subsequent H-PMI is interpreted as rank-2 H-PMI, and J-CQI is calculated with a composite matrix constructed by a Kronecker product of a rank-1 V precoding matrix, and a rank-2 H precoding matrix corresponding to rank-2 H-PMI.

In another example, V-PMI(1) is interpreted as rank-2 V-PMI corresponding to a rank-2 precoding matrix; in this embodiment, subsequent H-PMI is interpreted as rank-1 H-PMI, and J-CQI is calculated with a composite matrix constructed by a Kronecker product of a rank-2 V precoding matrix, and a rank-1 H precoding matrix corresponding to rank-1 H-PMI.

In another example, in RI reporting instances, a UE reports information regarding V-RI together with the other information. In one example, one additional bit to indicate either V-RI = 1 or V-RI = 2 is reported. If V-RI = *r,* wherein *r =* 1 or 2, V-PMI is interpreted as rank-*r* V-PMI. Dependent upon the V-RI conveyed in the most recent RI report, H-PMI rank is determined in the subsequent PMI/CQI reporting instances accordingly. If V-RI = 1 and J-RI = *q,* H-PMI rank is *q.* If V-RI = 2 and J-RI = *q,* H-PMI rank is determined according to some embodiments of the current disclosure.

In one embodiment, a UE is configured with two CSI processes. A first CSI process comprises a first CSI-RS configuration, a first CSI-IM (CSI interference measurement) configuration, and a first periodic CSI reporting configuration. A second CSI process comprises a second CSI-RS configuration, a second CSI-IM configuration, and a second periodic CSI reporting configuration. Each of the first and the second periodic CSI reporting configurations indicates a PUCCH resource and a set of subframes to report periodic PMI/CQI and a set of subframes to report periodic RI.

In an example of this embodiment, the UE makes use of recently received first CSI-RS and recently received second CSI-RS for deriving CSI, respectively received according to the first and the second CSI-RS configurations.

In an example of this embodiment, the UE derives first channel estimates utilizing the recently received first CSI-RS; and second channel estimates utilizing the recently received second CSI-RS.

In one example of this embodiment, the UE derives a first rank utilizing the first channel estimates; and a second rank utilizing the second channel estimates.

In an example of this embodiment, the UE selects a composite precoder out of a set of candidate composite precoders; and a composite rank out of a set of candidate ranks, utilizing composite channel estimates derived with the first and the second channel estimates.

In an example of this embodiment, composite channel estimates are derived with the first and the second channel estimates. A composite rank is derived utilizing composite channel estimates, and is reported in a first subframe being an RI reporting instance. In a second subframe later than the first subframe but before any other RI reporting instances, the UE selects a composite precoder out of a set of candidate composite precoders utilizing the composite rank reported in the first subframe and composite channel estimates.

In an example of this embodiment, the UE derives a first RI utilizing the first channel estimates, and report the first RI in a RI reporting subframe. For reporting CQI/PMI in subsequent subframes before any other RI reporting subframes, the UE derives a composite rank, wherein the composite rank is one if the most recently reported first rank and the most recently reported second rank are both one; and the composite rank is two if a maximum of the most recently reported first rank and the most recently reported second rank is two. Then, based upon the composite rank, the UE derives a composite precoder out of a set of candidate composite precoders and corresponding CQI, utilizing composite channel estimates derived with the first and the second channel estimates.

One or more embodiments of this disclosure provide how to select the composite precoder.

In Example 1, when the composite rank is one, the composite precoder is a Kronecker product of a first precoding vector and a second precoding vector, wherein the first precoding vector is selected from a first set of candidate precoding vectors and the second precoder is selected from a second set of candidate precoding vectors.

In Example 2, when the composite rank is two, the composite precoder comprises two columns, a first column being a Kronecker product of a first precoding vector and a second precoding vector; a second column being a Kronecker product of a third precoding vector and a fourth precoding vector. In case both the first and the second RI are two, each of the first and the second column should be appropriately scaled with $\sqrt{2} ,$ so that the norm of each column is $1 / \sqrt{2} .$

In Case 2-1, the first precoding vector and the third precoding vector are the same; and the common precoding vector is selected from a set of rank-1 candidate precoding vectors. The second precoding vector and the fourth precoding vector comprise two columns of a rank-2 precoding matrix out of a second set of rank-2 candidate precoding matrices.

In Case 2-2, the second precoding vector and the fourth precoding vector are the same; and the common precoding vector is selected from a set of rank-1 candidate precoding vectors. The first precoding vector and the third precoding vector comprise two columns of a rank-2 precoding matrix out of a first set of rank-2 candidate precoding matrices.

In Case 2-3, the first precoding vector and the third precoding vector comprise two columns of a first rank-2 precoding matrix out of a first set of rank-2 candidate precoding matrices. The second precoding vector and the fourth precoding vector comprise two columns of a second rank-2 precoding matrix out of a second set of rank-2 candidate precoding matrices.

One or more embodiments of this disclosure provide options on what channel estimates to utilize for the precoder selection.
- In Option 1, the composite precoder and the composite rank are selected utilizing composite channel estimates, wherein the composite channel estimates are derived with the first and the second channel estimates.
- In Option 2, the first precoder and the second precoder are respectively selected utilizing the first and the second channel estimates.

The UE derives composite channel estimates with the first and the second channel estimates. In one method, the UE applies a Kronecker product for the two channel vectors separately per resource element on each Rx antenna, wherein the two channel vectors are respectively estimated with the first and the second set of CSI-RS.

### The UE computes a CQI utilizing the composite channel estimates and the composite precoder.

One or more embodiments of this disclosure provide CSI reporting on a PUCCH in a current subframe:
In a Type 1, when a current subframe is scheduled for RI reporting by the first periodic CSI reporting configuration, the PUCCH is transmitted on the configured PUCCH resource.
- When the composite rank is one, RI=1 is reported on the PUCCH (Case 1).
- When the composite rank is two and the composite precoder is selected according to (Case 2-1), RI=1 is reported on the PUCCH.
- When the composite rank is two and the composite precoder is selected according to (Case 2-2) or (Case 2-3), RI=2 is reported on the PUCCH.

In a Type 2, when a current subframe is scheduled for CQI/PMI reporting by the first periodic CSI reporting configuration, the PUCCH is transmitted on the first PUCCH resource.
- When the composite rank is one, a PMI corresponding to the first precoding vector and the CQI are reported.
- When the composite rank is two and the composite precoder is selected according to (Case 2-1), a PMI corresponding to the first precoding vector and the CQI are reported.
- When the composite rank is two and the composite precoder is selected according to (Case 2-2) or (Case 2-3), a PMI corresponding to the first rank-2 precoding matrix and the CQI are reported.

Although the present disclosure has been described with an exemplary embodiment, various changes and modifications may be suggested to one skilled in the art. It is intended that the present disclosure encompass such changes and modifications as fall within the scope of the appended claims.

## Claims

1. A user equipment comprising:
at least one transceiver; and
at least one processor operatively coupled to the at least one transceiver, configured to:
receive, from a base station, a first set of channel state reference signals, CSI-RS, according to a first channel state information, CSI, process configuration;
receive, from the base station, a second set of CSI-RS according to a second CSI process configuration; and
transmit, to the base station, first information including a first rank indicator, RI, on physical uplink control channel, PUCCH, in a RI reporting subframe according to the first CSI process configuration; and
transmit, to the base station, second information including a channel quality indicator, CQI, and a first precoding matrix indicator, PMI, on PUCCH in a CQI/PMI reporting subframe according to the first CSI process configuration,
wherein the CQI corresponding to a rank-2 composite precoder is determined when a maximum of the first RI and a second RI indicates rank-2,
wherein the rank-2 composite precoder comprises two columns including:
a first column being a Kronecker product of a first precoding vector and a second precoding vector, and
a second column being a Kronecker product of a third precoding vector and a fourth precoding vector,
wherein, the first column and the second column are scaled with $\sqrt{2} ,$ so that a norm of each of the first column and the second column is $1 / \sqrt{2}$ when the first RI indicates rank-2 and the second RI indicates rank-2,
wherein the first precoding vector and the third precoding vector comprise two columns of a first rank-2 precoding matrix from a first set of rank-2 candidate precoding matrices and the second precoding vector and the fourth precoding vector comprise two columns of a second rank-2 precoding matrix from a second set of rank-2 candidate precoding matrices,
wherein the first PMI corresponds to the first rank-2 precoding matrix;
wherein the first RI is a RI reported most recently according to the first CSI process configuration prior to transmitting the second information,
wherein the second RI is a RI reported most recently according to the second CSI process configuration prior to transmitting the second information, and
wherein a composite rank is one when both of the first RI and the second RI indicate rank 1.

2. A method for operating a user equipment, the method comprising:
receiving, from a base station, a first set of channel state reference signals, CSI-RS, according to a first channel state information, CSI, process configuration;
receiving, from the base station, a second set of CSI-RS according to a second CSI process configuration;
transmit, to the base station, first information including a first rank indicator, RI, on physical uplink control channel, PUCCH, in a RI reporting subframe according to the first CSI process configuration; and
transmitting second information including a channel quality indicator, CQI, and a first precoding matrix indicator, PMI, on PUCCH in a CQI/PMI reporting subframe according to the first CSI process configuration,
wherein the CQI corresponding to a rank-2 composite precoder is determined when a maximum of the first RI and a second RI indicates rank-2,
wherein the rank-2 composite precoder comprises two columns including:
a first column being a Kronecker product of a first precoding vector and a second precoding vector, and
a second column being a Kronecker product of a third precoding vector and a fourth precoding vector,
wherein, the first column and the second column are scaled with $\sqrt{2} ,$ so that a norm of each of the first column and the second column is $1 / \sqrt{2}$ when the first RI indicates rank-2 and the second RI indicates rank-2,
wherein the first precoding vector and the third precoding vector comprise two columns of a first rank-2 precoding matrix from a first set of rank-2 candidate precoding matrices and the second precoding vector and the fourth precoding vector comprise two columns of a second rank-2 precoding matrix from a second set of rank-2 candidate precoding matrices,
wherein the first PMI corresponds to the first rank-2 precoding matrix;
wherein the first RI is a RI reported most recently according to the first CSI process configuration prior to transmitting the second information,
wherein the second RI is a RI reported most recently according to the second CSI process configuration prior to transmitting the second information, and
wherein a composite rank is one when both of the first RI and the second RI indicate rank 1.

3. A base station comprising:
at least one transceiver; and
at least one processor operatively coupled to the at least one transceiver, configured to:
transmit a first set of channel state reference signals, CSI-RS, according to a first channel state information, CSI, process configuration;
transmit a second set of CSI-RS according to a second CSI process configuration; and
receive, from a user equipment, first information including a first rank indicator, RI, on physical uplink control channel, PUCCH, in a RI reporting subframe according to the first CSI process configuration; and
receive, from the user equipment, second information including a channel quality indicator, CQI, and a first precoding matrix indicator, PMI, on PUCCH in a CQI/PMI reporting subframe according to the first CSI process configuration,
wherein the CQI corresponding to a rank-2 composite precoder when a maximum of the first RI and a second RI indicates rank-2,
wherein the rank-2 composite precoder comprises two columns including:
a first column being a Kronecker product of a first precoding vector and a second precoding vector, and
a second column being a Kronecker product of a third precoding vector and a fourth precoding vector,
wherein, the first column and the second column are scaled with $\sqrt{2} ,$ so that a norm of each of the first column and the second column is $1 / \sqrt{2}$ when the first RI indicates rank-2 and the second RI indicates rank-2,
wherein the first precoding vector and the third precoding vector comprise two columns of a first rank-2 precoding matrix from a first set of rank-2 candidate precoding matrices and the second precoding vector and the fourth precoding vector comprise two columns of a second rank-2 precoding matrix from a second set of rank-2 candidate precoding matrices,
wherein the first PMI corresponds to the first rank-2 precoding matrix;
wherein the first RI is a RI reported most recently according to the first CSI process configuration prior to the second information,
wherein the second RI is a RI reported most recently according to the second CSI process configuration prior to the second information, and
wherein a composite rank is one when both of the first RI and the second RI indicate rank 1.

4. A method for operating a base station, the method comprising:
transmitting a first set of channel state reference signals, CSI-RS, according to a first channel state information, CSI, process configuration;
transmitting a second set of CSI-RS according to a second CSI process configuration;
receiving, from a user equipment, first information including a first rank indicator, RI, on physical uplink control channel, PUCCH, in a RI reporting subframe according to the first CSI process configuration; and
receiving, from the user equipment, second information including a channel quality indicator, CQI, and a first precoding matrix indicator, PMI, on PUCCH in a CQI/PMI reporting subframe according to the first CSI process configuration,
wherein the CQI corresponding to a rank-2 precoder when a maximum of the first RI and a second RI indicates rank-2,
wherein the rank-2 composite precoder comprises two columns including:
a first column being a Kronecker product of a first precoding vector and a second precoding vector, and
a second column being a Kronecker product of a third precoding vector and a fourth precoding vector,
wherein, the first column and the second column are scaled with $\sqrt{2} ,$ so that a norm of each of the first column and the second column is $1 / \sqrt{2}$ when the first RI indicates rank-2 and the second RI indicates rank-2,
wherein the first precoding vector and the third precoding vector comprise two columns of a first rank-2 precoding matrix from a first set of rank-2 candidate precoding matrices and the second precoding vector and the fourth precoding vector comprise two columns of a second rank-2 precoding matrix from a second set of rank-2 candidate precoding matrices,
wherein the first PMI corresponds to the first rank-2 precoding matrix;
wherein the first RI is a RI reported most recently according to the first CSI process configuration prior to the second information,
wherein the second RI is a RI reported most recently according to the second CSI process configuration prior to the second information, and
wherein a composite rank is one when both of the first RI and the second RI indicate rank 1.

5. The user equipment or the method or the base station or the method according to Claim 1 or Claim 2 or Claim 3 or Claim 4, wherein the CQI is determined based on channel estimates with the rank-2 composite precoder, and
wherein the channel estimates are derived based on the first set of CSI-RSs and the second set of CSI-RSs.

6. The user equipment or the method according to Claim 1 or Claim 2, wherein user equipment is configured to support up to rank-2.

7. The user equipment or the method or the base station or the method according to Claim 1 or Claim 2 or Claim 3 or Claim 4,
wherein the first RI is one when (i) a composite rank is one or (ii) the composite rank is two and the second RI is two, and
wherein the first RI is two when the composite rank is two and the second RI is one.

8. The user equipment or the method or the base station or the method according to Claim 1 or Claim 2 or Claim 3 or Claim 4,
wherein the first RI is one when a composite rank is one, and
wherein the first RI is two when the composite rank is two.

## Patentansprüche

1. Benutzergerät, welches Folgendes umfasst:
mindestens einen Transceiver; und
mindestens einen Prozessor, der mit dem mindestens einen Transceiver wirkverbunden und zu Folgendem konfiguriert ist:
Empfangen eines ersten Satzes von Kanalstatusreferenzsignalen, CSI-RS, von einer Basisstation gemäß einer ersten Kanalstatusinformations(CSI)-Verfahrenskonfiguration;
Empfangen eines zweiten Satzes von CSI-RS von der Basisstation gemäß einer zweiten CSI-Verfahrenskonfiguration; und
Übertragen von ersten Informationen einschließlich eines ersten Ranganzeigers, RI, auf einem physikalischen Uplink-Steuerkanal, PUCCH, in einem RI-Berichtsteilrahmen an die Basisstation gemäß der ersten CSI-Verfahrenskonfiguration; und
Übertragen von zweiten Informationen einschließlich eines Kanalqualitätsanzeigers, CQI, und eines ersten Vorcodierungsmatrixanzeigers, PMI, auf einem PUCCH in einem CQI/PMI-Berichtsteilrahmen an die Basisstation gemäß der ersten CSI-Verfahrenskonfiguration,
wobei der CQI, der einem zusammengesetzten Rang-2-Vorcodierer entspricht, bestimmt wird, wenn ein Maximum des ersten RI und eines zweiten RI den Rang 2 anzeigt,
wobei der zusammengesetzte Rang-2-Vorcodierer zwei Spalten umfasst, die Folgendes enthalten:
eine erste Spalte, die ein Kronecker-Produkt eines ersten Vorcodierungsvektors und eines zweiten Vorcodierungsvektors ist, und
eine zweite Spalte, die ein Kronecker-Produkt eines dritten Vorcodierungsvektors und eines vierten Vorcodierungsvektors ist,
wobei die erste Spalte und die zweite Spalte mit $\sqrt{2}$ skaliert werden, so dass eine Norm jeder der ersten Spalte und der zweiten Spalte $1 / \sqrt{2}$ ist, wenn der erste RI Rang 2 anzeigt und der zweite RI Rang 2 anzeigt,
wobei der erste Vorcodierungsvektor und der dritte Vorcodierungsvektor zwei Spalten einer ersten Rang-2-Vorcodierungsmatrix aus einem ersten Satz von Rang-2-Kandidatenvorcodierungsmatrizen umfassen und der zweite Vorcodierungsvektor und der vierte Vorcodierungsvektor zwei Spalten einer zweiten Rang-2-Vorcodierungsmatrix aus einem zweiten Satz von Rang-2-Kandidatenvorcodierungsmatrizen umfassen,
wobei der erste PMI der ersten Rang-2-Vorcodierungsmatrix entspricht;
wobei der erste RI ein RI ist, der zuletzt gemäß der ersten CSI-Verfahrenskonfiguration vor dem Übertragen der zweiten Informationen gemeldet wurde,
wobei der zweite RI ein RI ist, der zuletzt gemäß der zweiten CSI-Verfahrenskonfiguration vor dem Übertragen der zweiten Informationen gemeldet wurde, und
wobei ein zusammengesetzter Rang eins ist, wenn sowohl der erste RI als auch der zweite RI Rang 1 anzeigen.

2. Verfahren zum Betreiben eines Benutzergeräts, wobei das Verfahren Folgendes umfasst:
Empfangen eines ersten Satzes von Kanalstatusreferenzsignalen, CSI-RS, von einer Basisstation gemäß einer ersten Kanalstatusinformations(CSI)-Verfahrenskonfiguration;
Empfangen eines zweiten Satzes von CSI-RS von der Basisstation gemäß einer zweiten CSI-Verfahrenskonfiguration;
Übertragen von ersten Informationen einschließlich eines ersten Rangzeigers, RI, auf einem physikalischen Uplink-Steuerkanal, PUCCH, in einem RI-Berichtsteilrahmen an die Basisstation gemäß der ersten CSI-Verfahrenskonfiguration; und
Übertragen von zweiten Informationen einschließlich eines Kanalqualitätsanzeigers, CQI, und eines ersten Vorcodierungsmatrixanzeigers, PMI, auf einem PUCCH in einem CQI/PMI-Berichtsteilrahmen gemäß der ersten CSI-Verfahrenskonfiguration,
wobei der CQI, der einem zusammengesetzten Rang-2-Vorcodierer entspricht, bestimmt wird, wenn ein Maximum des ersten RI und eines zweiten RI Rang 2 anzeigt,
wobei der zusammengesetzte Rang-2-Vorcodierer zwei Spalten umfasst, die Folgendes enthalten:
eine erste Spalte, die ein Kronecker-Produkt eines ersten Vorcodierungsvektors und eines zweiten Vorcodierungsvektors ist, und
eine zweite Spalte, die ein Kronecker-Produkt eines dritten Vorcodierungsvektors und eines vierten Vorcodierungsvektors ist,
wobei die erste Spalte und die zweite Spalte mit $\sqrt{2}$ skaliert werden, so dass eine Norm jeder der ersten Spalte und der zweiten Spalte $1 / \sqrt{2}$ ist, wenn der erste RI Rang 2 anzeigt und der zweite RI Rang 2 anzeigt,
wobei der erste Vorcodierungsvektor und der dritte Vorcodierungsvektor zwei Spalten einer ersten Rang-2-Vorcodierungsmatrix aus einem ersten Satz von Rang-2-Kandidatenvorcodierungsmatrizen umfassen und der zweite Vorcodierungsvektor und der vierte Vorcodierungsvektor zwei Spalten einer zweiten Rang-2-Vorcodierungsmatrix aus einem zweiten Satz von Rang-2-Kandidatenvorcodierungsmatrizen umfassen,
wobei der erste PMI der ersten Rang-2-Vorcodierungsmatrix entspricht;
wobei der erste RI ein RI ist, der zuletzt gemäß der ersten CSI-Verfahrenskonfiguration vor dem Übertragen der zweiten Informationen gemeldet wurde,
wobei der zweite RI ein RI ist, der zuletzt gemäß der zweiten CSI-Verfahrenskonfiguration vor dem Übertragen der zweiten Informationen gemeldet wurde, und
wobei ein zusammengesetzter Rang eins ist, wenn sowohl der erste RI als auch der zweite RI Rang 1 anzeigen.

3. Basisstation, welche Folgendes umfasst:
mindestens einen Transceiver; und
mindestens einen Prozessor, der mit dem mindestens einen Transceiver wirkverbunden und konfiguriert ist zum:
Übertragen eines ersten Satzes von Kanalstatusreferenzsignalen, CSI-RS, gemäß einer ersten Kanalstatusinformations(CSI)-Verfahrenskonfiguration;
Übertragen eines zweiten Satzes von CSI-RS gemäß einer zweiten CSI-Verfahrenskonfiguration; und
Empfangen von ersten Informationen einschließlich eines ersten Ranganzeigers, RI, auf einem physikalischen Uplink-Steuerkanal, PUCCH, in einem RI-Berichtsteilrahmen von einem Benutzergerät gemäß der ersten CSI-Verfahrenskonfiguration; und
Empfangen von zweiten Informationen einschließlich eines Kanalqualitätsanzeigers, CQI, und eines ersten Vorcodierungsmatrixanzeigers, PMI, auf einem PUCCH in einem CQI/PMI-Berichtsteilrahmen von dem Benutzergerät gemäß der ersten CSI-Verfahrenskonfiguration,
wobei der CQI einem zusammengesetzten Rang-2-Vorcodierer entspricht, wenn ein Maximum des ersten RI und eines zweiten RI Rang 2 anzeigt,
wobei der zusammengesetzte Rang-2-Vorcodierer zwei Spalten umfasst, die Folgendes enthalten:
eine erste Spalte, die ein Kronecker-Produkt eines ersten Vorcodierungsvektors und eines zweiten Vorcodierungsvektors ist, und
eine zweite Spalte, die ein Kronecker-Produkt eines dritten Vorcodierungsvektors und eines vierten Vorcodierungsvektors ist,
wobei die erste Spalte und die zweite Spalte mit $\sqrt{2}$ skaliert werden, so dass eine Norm jeder der ersten Spalte und der zweiten Spalte $1 / \sqrt{2}$ ist, wenn der erste RI Rang 2 anzeigt und der zweite RI Rang 2 anzeigt,
wobei der erste Vorcodierungsvektor und der dritte Vorcodierungsvektor zwei Spalten einer ersten Rang-2-Vorcodierungsmatrix aus einem ersten Satz von Rang-2-Kandidatenvorcodierungsmatrizen umfassen und der zweite Vorcodierungsvektor und der vierte Vorcodierungsvektor zwei Spalten einer zweiten Rang-2-Vorcodierungsmatrix aus einem zweiten Satz von Rang-2-Kandidatenvorcodierungsmatrizen umfassen,
wobei der erste PMI der ersten Rang-2-Vorcodierungsmatrix entspricht;
wobei der erste RI ein RI ist, der zuletzt gemäß der ersten CSI-Verfahrenskonfiguration vor den zweiten Informationen gemeldet wurde,
wobei der zweite RI ein RI ist, der zuletzt gemäß der zweiten CSI-Verfahrenskonfiguration vor den zweiten Informationen gemeldet wurde, und
wobei ein zusammengesetzter Rang eins ist, wenn sowohl der erste RI als auch der zweite RI Rang 1 anzeigen.

4. Verfahren zum Betreiben einer Basisstation, wobei das Verfahren Folgendes umfasst:
Übertragen eines ersten Satzes von Kanalstatusreferenzsignalen, CSI-RS, gemäß einer ersten Kanalstatusinformations(CSI)-Verfahrenskonfiguration;
Übertragen eines zweiten Satzes von CSI-RS gemäß einer zweiten CSI-Verfahrenskonfiguration;
Empfangen von ersten Informationen einschließlich eines ersten Ranganzeigers, RI, auf einem physikalischen Uplink-Steuerkanal, PUCCH, in einem RI-Berichtsteilrahmen von einem Benutzergerät gemäß der ersten CSI-Verfahrenskonfiguration; und
Empfangen von zweiten Informationen einschließlich eines Kanalqualitätsanzeigers, CQI, und eines ersten Vorcodierungsmatrixanzeigers, PMI, auf einem PUCCH in einem CQI/PMI-Berichtsteilrahmen von dem Benutzergerät gemäß der ersten CSI-Verfahrenskonfiguration,
wobei der CQI einem Rang-2-Vorcodierer entspricht, wenn ein Maximum des ersten RI und eines zweiten RI Rang 2 anzeigt,
wobei der zusammengesetzte Rang-2-Vorcodierer zwei Spalten umfasst, die Folgendes enthalten:
eine erste Spalte, die ein Kronecker-Produkt eines ersten Vorcodierungsvektors und eines zweiten Vorcodierungsvektors ist, und
eine zweite Spalte, die ein Kronecker-Produkt eines dritten Vorcodierungsvektors und eines vierten Vorcodierungsvektors ist,
wobei die erste Spalte und die zweite Spalte mit $\sqrt{2}$ skaliert werden, so dass eine Norm jeder der ersten Spalte und der zweiten Spalte $1 / \sqrt{2}$ ist, wenn der erste RI Rang 2 anzeigt und der zweite RI Rang 2 anzeigt,
wobei der erste Vorcodierungsvektor und der dritte Vorcodierungsvektor zwei Spalten einer ersten Rang-2-Vorcodierungsmatrix aus einem ersten Satz von Rang-2-Kandidatenvorcodierungsmatrizen umfassen und der zweite Vorcodierungsvektor und der vierte Vorcodierungsvektor zwei Spalten einer zweiten Rang-2-Vorcodierungsmatrix aus einem zweiten Satz von Rang-2-Kandidatenvorcodierungsmatrizen umfassen,
wobei der erste PMI der ersten Rang-2-Vorcodierungsmatrix entspricht;
wobei der erste RI ein RI ist, der zuletzt gemäß der ersten CSI-Verfahrenskonfiguration vor den zweiten Informationen gemeldet wurde,
wobei der zweite RI ein RI ist, der zuletzt gemäß der zweiten CSI-Verfahrenskonfiguration vor den zweiten Informationen gemeldet wurde, und
wobei ein zusammengesetzter Rang eins ist, wenn sowohl der erste RI als auch der zweite RI Rang 1 anzeigen.

5. Benutzergerät oder Verfahren oder Basisstation oder Verfahren nach Anspruch 1 oder Anspruch 2 oder Anspruch 3 oder Anspruch 4, wobei der CQI basierend auf Kanalschätzungen mit dem zusammengesetzten Rang-2-Vorcodierer bestimmt wird, und
wobei die Kanalschätzungen basierend auf dem ersten Satz von CSI-RS und dem zweiten Satz von CSI-RS abgeleitet werden.

6. Benutzergerät oder Verfahren nach Anspruch 1 oder Anspruch 2, wobei das Benutzergerät konfiguriert ist, um bis zu Rang 2 zu unterstützen.

7. Benutzergerät oder Verfahren oder Basisstation oder Verfahren nach Anspruch 1 oder Anspruch 2 oder Anspruch 3 oder Anspruch 4,
wobei der erste RI eins ist, wenn (i) ein zusammengesetzter Rang eins ist oder (ii) der zusammengesetzte Rang zwei ist und der zweite RI zwei ist, und
wobei der erste RI zwei ist, wenn der zusammengesetzte Rang zwei ist und der zweite RI eins ist.

8. Benutzergerät oder Verfahren oder Basisstation oder Verfahren nach Anspruch 1 oder Anspruch 2 oder Anspruch 3 oder Anspruch 4,
wobei der erste RI eins ist, wenn ein zusammengesetzter Rang eins ist, und
wobei der erste RI zwei ist, wenn der zusammengesetzte Rang zwei ist.

## Revendications

1. Équipement d'utilisateur comprenant :
au moins un émetteur-récepteur ; et
au moins un processeur couplé de manière opérative à l'au moins un émetteur-récepteur, configuré pour :
recevoir, à partir d'une station de base, un premier ensemble de signaux de référence d'état de canal, CSI-RS, selon une première configuration de processus d'informations d'état de canal, CSI ;
recevoir, à partir de la station de base, un deuxième ensemble de CSI-RS selon une deuxième configuration de processus de CSI ; et
transmettre, à la station de base, des premières informations incluant un premier indicateur de rang, RI, sur un canal de commande de liaison montante physique, PUCCH, dans une sous-trame de rapport de RI selon la première configuration de processus de CSI ; et
transmettre, à la station de base, des deuxièmes informations incluant un indicateur de qualité de canal, CQI, et un premier indicateur de matrice de précodage, PMI, sur un PUCCH dans une sous-trame de rapport CQI/PMI selon la première configuration de processus de CSI,
où le CQI correspondant à un précodeur composite de rang 2 est déterminé lorsqu'un maximum du premier RI et d'un deuxième RI indique un rang 2,
où le précodeur composite de rang 2 comprend deux colonnes incluant :
une première colonne étant un produit de Kronecker d'un premier vecteur de précodage et d'un deuxième vecteur de précodage, et
une deuxième colonne étant un produit de Kronecker d'un troisième vecteur de précodage et d'un quatrième vecteur de précodage,
où, la première colonne et la deuxième colonne sont mises à l'échelle avec $\sqrt{2 ,}$ de sorte qu'une norme de chacune de la première colonne et de la deuxième colonne est égale à $1 / \sqrt{2}$ lorsque le premier RI indique un rang 2 et le deuxième RI indique un rang 2,
où le premier vecteur de précodage et le troisième vecteur de précodage comprennent deux colonnes d'une première matrice de précodage de rang 2 d'un premier ensemble de matrices de précodage candidates de rang 2 et le deuxième vecteur de précodage et le quatrième vecteur de précodage comprennent deux colonnes d'une deuxième matrice de précodage de rang 2 d'un deuxième ensemble de matrices de précodage candidates de rang 2,
où le premier PMI correspond à la première matrice de précodage de rang 2 ;
où le premier RI est un RI rapporté le plus récemment selon la première configuration de processus de CSI avant la transmission des deuxièmes informations,
où le deuxième RI est un RI rapporté le plus récemment selon la deuxième configuration de processus de CSI avant la transmission des deuxièmes informations, et
où un rang composite est égal à un lorsque le premier RI et le deuxième RI indiquent tous deux un rang 1.

2. Procédé de fonctionnement d'un équipement d'utilisateur, le procédé comprenant :
recevoir, à partir d'une station de base, un premier ensemble de signaux de référence d'état de canal, CSI-RS, selon une première configuration de processus d'informations d'état de canal, CSI ;
recevoir, à partir de la station de base, un deuxième ensemble de CSI-RS selon une deuxième configuration de processus de CSI ;
transmettre, à la station de base, des premières informations incluant un premier indicateur de rang, RI, sur un canal de commande de liaison montante physique, PUCCH, dans une sous-trame de rapport de RI selon la première configuration de processus de CSI ; et
transmettre des deuxièmes informations incluant un indicateur de qualité de canal, CQI, et un premier indicateur de matrice de précodage, PMI, sur un PUCCH dans une sous-trame de rapport CQI/PMI selon la première configuration de processus de CSI,
où le CQI correspondant à un précodeur composite de rang 2 est déterminé lorsqu'un maximum du premier RI et d'un deuxième RI indique un rang 2,
où le précodeur composite de rang 2 comprend deux colonnes incluant :
une première colonne étant un produit de Kronecker d'un premier vecteur de précodage et d'un deuxième vecteur de précodage, et
une deuxième colonne étant un produit de Kronecker d'un troisième vecteur de précodage et d'un quatrième vecteur de précodage,
où la première colonne et la deuxième colonne sont mises à l'échelle avec $\sqrt{2 ,}$ de sorte qu'une norme de chacune de la première colonne et de la deuxième colonne est égale à $1 / \sqrt{2}$ lorsque le premier RI indique un rang 2 et le deuxième RI indique un rang 2,
où le premier vecteur de précodage et le troisième vecteur de précodage comprennent deux colonnes d'une première matrice de précodage de rang 2 d'un premier ensemble de matrices de précodage candidates de rang 2 et le deuxième vecteur de précodage et le quatrième vecteur de précodage comprennent deux colonnes d'une deuxième matrice de précodage de rang 2 d'un deuxième ensemble de matrices de précodage candidates de rang 2,
où le premier PMI correspond à la première matrice de précodage de rang 2 ;
où le premier RI est un RI rapporté le plus récemment selon la première configuration de processus de CSI avant la transmission des deuxièmes informations,
où le deuxième RI est un RI rapporté le plus récemment selon la deuxième configuration de processus de CSI avant la transmission des deuxièmes informations, et
où un rang composite est égal à un lorsque le premier RI et le deuxième RI indiquent tous deux un rang 1.

3. Station de base comprenant :
au moins un émetteur-récepteur ; et
au moins un processeur couplé de manière opérative à l'au moins un émetteur-récepteur, configuré pour :
transmettre un premier ensemble de signaux de référence d'état de canal, CSI-RS, selon une première configuration de processus d'informations d'état de canal, CSI ;
transmettre un deuxième ensemble de CSI-RS selon une deuxième configuration de processus de CSI ; et
recevoir, à partir d'un équipement d'utilisateur, des premières informations incluant un premier indicateur de rang, RI, sur un canal de commande de liaison montante physique, PUCCH, dans une sous-trame de rapport de RI selon la première configuration de processus de CSI ; et
recevoir, à partir de l'équipement d'utilisateur, des deuxièmes informations incluant un indicateur de qualité de canal, CQI, et un premier indicateur de matrice de précodage, PMI, sur un PUCCH dans une sous-trame de rapport CQI/PMI selon la première configuration de processus de CSI,
où le CQI correspond à un précodeur composite de rang 2 lorsqu'un maximum du premier RI et d'un deuxième RI indique le rang 2,
où le précodeur composite de rang 2 comprend deux colonnes incluant :
une première colonne étant un produit de Kronecker d'un premier vecteur de précodage et d'un deuxième vecteur de précodage, et
une deuxième colonne étant un produit de Kronecker d'un troisième vecteur de précodage et d'un quatrième vecteur de précodage,
où, la première colonne et la deuxième colonne sont mises à l'échelle avec $\sqrt{2 ,}$ de sorte qu'une norme de chacune de la première colonne et de la deuxième colonne est égale à $1 / \sqrt{2}$ lorsque le premier RI indique un rang 2 et le deuxième RI indique un rang 2,
où le premier vecteur de précodage et le troisième vecteur de précodage comprennent deux colonnes d'une première matrice de précodage de rang 2 d'un premier ensemble de matrices de précodage candidates de rang 2 et le deuxième vecteur de précodage et le quatrième vecteur de précodage comprennent deux colonnes d'une deuxième matrice de précodage de rang 2 d'un deuxième ensemble de matrices de précodage candidates de rang 2,
où le premier PMI correspond à la première matrice de précodage de rang 2 ;
où le premier RI est un RI rapporté le plus récemment selon la première configuration de processus de CSI avant la transmission des deuxièmes informations,
où le deuxième RI est un RI rapporté le plus récemment selon la deuxième configuration de processus de CSI avant la transmission des deuxièmes informations, et
où un rang composite est égal à un lorsque le premier RI et le deuxième RI indiquent tous deux un rang 1.

4. Procédé pour faire fonctionner une station de base, le procédé comprenant :
transmettre un premier ensemble de signaux de référence d'état de canal, CSI-RS, selon une première configuration de processus d'informations d'état de canal, CSI ;
transmettre un deuxième ensemble de CSI-RS selon une deuxième configuration de processus de CSI ;
recevoir, à partir d'un équipement d'utilisateur, des premières informations incluant un premier indicateur de rang, RI, sur un canal de commande de liaison montante physique, PUCCH, dans une sous-trame de rapport de RI selon la première configuration de processus de CSI ; et
recevoir, à partir de l'équipement d'utilisateur, des deuxièmes informations incluant un indicateur de qualité de canal, CQI, et un premier indicateur de matrice de précodage, PMI, sur un PUCCH dans une sous-trame de rapport CQI/PMI selon la première configuration de processus de CSI,
où le CQI correspond à un précodeur de rang 2 lorsqu'un maximum du premier RI et d'un deuxième RI indique le rang 2,
où le précodeur composite de rang 2 comprend deux colonnes incluant :
une première colonne étant un produit de Kronecker d'un premier vecteur de précodage et d'un deuxième vecteur de précodage, et
une deuxième colonne étant un produit de Kronecker d'un troisième vecteur de précodage et d'un quatrième vecteur de précodage,
où, la première colonne et la deuxième colonne sont mises à l'échelle avec $\sqrt{2 ,}$ de sorte qu'une norme de chacune de la première colonne et de la deuxième colonne est égale à $1 / \sqrt{2}$ lorsque le premier RI indique le rang 2 et le deuxième RI indique le rang 2,
où le premier vecteur de précodage et le troisième vecteur de précodage comprennent deux colonnes d'une première matrice de précodage de rang 2 d'un premier ensemble de matrices de précodage candidates de rang 2 et le deuxième vecteur de précodage et le quatrième vecteur de précodage comprennent deux colonnes d'une deuxième matrice de précodage de rang 2 d'un deuxième ensemble de matrices de précodage candidates de rang 2,
où le premier PMI correspond à la première matrice de précodage de rang 2 ;
où le premier RI est un RI rapporté le plus récemment selon la première configuration de processus de CSI avant la transmission des deuxièmes informations,
où le deuxième RI est un RI rapporté le plus récemment selon la deuxième configuration de processus de CSI avant la transmission des deuxièmes informations, et
où un rang composite est égal à un lorsque le premier RI et le deuxième RI indiquent tous deux un rang 1.

5. Équipement d'utilisateur ou procédé ou station de base ou procédé selon la revendication 1 ou la revendication 2 ou la revendication 3 ou la revendication 4, où le CQI est déterminé sur la base d'estimées de canal avec le précodeur composite de rang 2, et
où les estimées de canal sont dérivées sur la base du premier ensemble de CSI-RS et du deuxième ensemble de CSI-RS.

6. Équipement d'utilisateur ou procédé selon la revendication 1 ou la revendication 2, où l'équipement d'utilisateur est configuré pour prendre en charge jusqu'au rang 2.

7. Équipement d'utilisateur ou procédé ou station de base ou procédé selon la revendication 1 ou la revendication 2 ou la revendication 3 ou la revendication 4,
où le premier RI est égal à un lorsque (i) un rang composite est égal à un ou (ii) le rang composite est égal à deux et le deuxième RI est égal à deux, et
où le premier RI est égal à deux lorsque le rang composite est égal à deux et le deuxième RI est égal à un.

8. Équipement d'utilisateur ou procédé ou station de base ou procédé selon la revendication 1 ou la revendication 2 ou la revendication 3 ou la revendication 4,
où le premier RI est égal à un lorsqu'un rang composite est égal à un, et
où le premier RI est égal à deux lorsque le rang composite est égal à deux.
